# EUROPÄISCHE PATENTSCHRIFT

(11) **EP 0 637 490 B1**
(45) Veröffentlichungstag und Bekanntmachung des Hinweises auf die Patenterteilung: **31.03.1999**
(21) Anmeldenummer: 94810409.6
(22) Anmeldetag: 11.07.1994
(51) Int. Cl.: B29C 35/08, B29C 33/06

(54) **Verfahren und Vorrichtung zur Herstellung von Kontaktlinsen**
Process and device for production of contact lenses
Procédé et dispositif pour la fabrication des lentilles de contact

(30) Priorität: 19.07.1993 EP 93810515; 29.07.1993 CH 2299/93; 06.08.1993 CH 2350/93
(43) Veröffentlichungstag der Anmeldung: 08.02.1995
(73) Patentinhaber: Novartis AG, 4058 Basel (CH); Novartis-Erfindungen Verwaltungsgesellschaft m.b.H., 1235 Wien (AT)
(72) Erfinder: Hagmann, Peter, Dr., 63906 Erlenbach am Main (DE); Borghorst, Sharla, 60598 Frankfurt am Main (DE); Golby, John, Dr., 63739 Aschaffenburg (DE); Herbrechtsmeier, Peter, Dr., 61462 Königstein (DE); Kretzschmar, Otto, Dr., 64683 Einhausen (DE); Seiferling, Bernhard, Dr., 63773 Goldbach (DE); Söllner, Norbert, 63868 Grosswallstadt (DE); Müller, Beat, Dr., CH-1723 Marly (CH)

(56) Entgegenhaltungen:
- EP-A- 0 226 123
- EP-A- 0 255 088
- EP-A- 0 367 513
- EP-A- 0 484 015
- US-A- 4 113 224

## Beschreibung

Die Erfindung betrifft ein Verfahren und eine Vorrichtung zur Herstellung von Kontaktlinsen gemäss dem Oberbegriff des jeweiligen unabhängigen Patentanspruchs 1 bzw. 42.

Kontaktlinsen, welche in großen Stückzahlen wirtschaftlich herzustellen sind, werden bevorzugt nach den sogenannten Mould- bzw. Full-Mould-Verfahren gefertigt. Bei diesen Verfahren werden die Linsen zwischen zwei Formen (Moulds) in ihrer endgültigen Form hergestellt, so daß weder eine nachträgliche Bearbeitung der Oberflächen der Linsen noch eine Bearbeitung des Randes erforderlich ist. Mould-Verfahren sind beispielsweise in der PCT-Patentanmeldung Publ.Nr. WO 87/ 04390 oder in der europäischen Patentanmeldung Publ. Nr. 0 367 513 beschrieben.

Bei diesen bekannten Mould-Verfahren wird die Geometrie der herzustellenden Kontaktlinse durch den Formhohlraum festgelegt. Der Kontaktlinsenrand wird gleichfalls durch die üblicherweise aus zwei Formhälften bestehende Form gebildet. Die Geometrie des Randes wird durch die Kontur der beiden Formhälften in dem Bereich festgelegt, in dem sie sich berühren.

Zur Herstellung einer Kontaktlinse wird zunächst in die weibliche Formhälfte eine bestimmte Menge des fließfähigen Ausgangsmaterials eingebracht. Danach wird die Form durch Aufsetzen der männlichen Formhälfte geschlossen.

Üblicherweise wird das Ausgangsmaterial etwas überdosiert, so daß die überschüssige Menge beim Schließen der Form in einen an den Formhohlraum nach außen sich anschließenden Überlauf-Raum verdrängt wird. Die anschließende Polymerisation bzw. Vernetzung des Ausgangsmaterials erfolgt durch Bestrahlung mit UV-Licht bzw. durch Wärmeeinwirkung oder eine andere nicht-thermische Methode. Dabei werden sowohl das Ausgangsmaterial in dem Formhohlraum als auch das überschüssige Material in dem Überlauf-Raum ausgehärtet. Die Aushärtung des überschüssigen Materials kann etwas verzögert erfolgen, da sie anfangs möglicherweise durch Luftsauerstoff inhibiert wird. Um eine fehlerfreie Trennung der Kontaktlinse von dem überschüssigen Material zu erhalten, muß in der Berührungszone der beiden Formhälften eine gute Abdichtung bzw. Verdrängung des überschüssigen Materials erreicht werden. Nur so können fehlerfreie Kontaktlinsenränder erhalten werden.

Als Materialien für die Formen werden heute bevorzugt Kunststoffe, wie z.B. Polypropylen verwendet. Die Formen werden durch Spritzgießen hergestellt und nur einmal verwendet (disposable moulds). Dies liegt u. a. daran, daß die Formen durch das überschüssige Material zum Teil verunreinigt sind, beim Abtrennen der Kontaktlinse beschädigt werden oder sich in Teilbereichen irreversibel verformen.

Bei den spritzgegossenen Formen ist zusätzlich noch mit Schwankungen in den Abmessungen durch Schwankungen im Herstellungsprozeß (Temperaturen, Drücke, Materialeigenschaften) zu rechnen. Zusätzlich kann noch ein Schwund der Formen nach dem Spritzgießen auftreten. Diese maßlichen Veränderungen der Form können zu Schwankungen in den Parametern der herzustellenden Kontaktlinse (Scheitelbrechwert, Durchmesser, Basiskurve, Mittendicke etc.) führen, was zu einer Verschlechterung der Qualität der Linsen und damit zu einer reduzierten Ausbeute führen kann. Bei nicht ausreichender Abdichtung zwischen den beiden Formhälften wird das überschüssige Material nicht sauber abgetrennt, was zur Ausbildung von sogenannten Schwimmhäuten am Kontaktlinsenrand führt. Bei stärkerer Ausprägung kann dieser kosmetische Fehler am Rand der Linse auch zu einer Irritation beim Tragen einer solchen Linse führen, weshalb solche Linsen durch eine Inspektion aussortiert werden müssen.

Insbesondere wegen der Anforderungen an die Qualität des Kontaktlinsenrandes werden die Formen auch nur einmal verwendet, da eine gewisse Deformation der Formen im Kontaktbereich nicht mit Sicherheit auszuschließen ist.

In der US-PS 4 113 224 ist ein weiteres Mould-Verfahren für die Herstellung von u. a. Kontaktlinsen beschrieben. Bei diesem Verfahren wird eine Form verwendet, deren Kavität nicht vollständig abgeschlossen ist, sondern über einen dünnen Ringspalt mit einem die Kavität umschliessenden ringförmigen Reservoir-Kanal (Überlaufrinne) verbunden ist. Über den Ringspalt kann während des Vernetzungssvorgangs Material aus dem Reservoir in die Form-Kavität nachfliessen, um den bei den üblicherweise eingesetzten Linsen-Materialien relativ grossen Volumenschwund auszugleichen.

Die Vernetzung des Materials im Reservoir-Kanal kann dabei mittels einer inhibierenden Gasatmosphäre oder durch Abschirmung gegenüber der die Vernetzung bewirkenden Energiestrahlung verhindert werden. Um das Nachfliessen von Material in die Form-Kavität zu gewährleisten, wird zumindest anfänglich das in der Form-Kavität befindliche Material nur in einem zentralen Bereich, der kleiner als der Durchmesser der Form-Kavität ist, mit Strahlung beaufschlagt oder in diesem zentralen Bereich einer stärkeren Strahlungsintensität ausgesetzt als in dem diesen umgebenden Randbereich der Form-Kavität. Nachdem die Vernetzung im zentralen Bereich begonnen hat und bis zu einem gewissen Grad fortgeschritten ist, wird jedoch auch der Randbereich mit dem anschliessenden Ringspalt und das im Reservoirkanal befindliche Material der vollen Strahlung ausgesetzt und vernetzt. Dabei entstehen zwangsläufig die schon weiter oben erwähnten Grate und Schwimmhäute, so dass die mit diesem bekannten Verfahren hergestellten Kontaktlinsen bzw. anderen Formkörper einer mechanischen Nachbearbeitung bedürfen.

Des weiteren ist in der EP-A-0 484 015 ein Mould-Verfahren zur Herstellung von Kontaktlinsen beschrieben. Das Linsenmaterial wird in eine Formkavität eingefüllt, wobei ein Teil des Materials in ein sich an die Kavität anschliessendes Reservoir eingebracht wird. Das Linsenmaterial wird mit Hilfe einer UV-Lichtquelle polymerisiert, wobei es zu einem Linsenschwund kommen kann, der durch das nachfliessende Material aus dem Reservoir ausgeglichen wird. Nach der Photopolymerisation wird die Gussform mit dem Linsenmaterial noch bei einer Temperatur von 80°C bis 90°C ausgeheizt . Anschliessend wird der nach Öffnen der Form erhaltene Linsenrohling in seine endgültige Form geschliffen, wobei insbesondere eine Randbearbeitung erforderlich ist. Eine wirtschaftliche Fertigung ohne Nachbearbeitung ist somit mit diesem Verfahren nicht möglich.

Aus der EP-A-0 255 088 ist ein Verfahren zur Herstellung von optischen Scheiben (CD's) bekannt, bei dem ein aushärtbares Harz in eine Gussform mittels einer Düse eingespritzt wird. Der Rand der Scheibe wird durch einen das Harz umschliessenden Ring ausgebildet, der nach der Herstellung der Scheibe entfernt wird. Da für die Qualität der Scheibe die Ausbildung der Oberfläche der Scheibe und nicht die optische Qualität des Randes entscheidend ist, da er für die Speichereigenschaften der CD keine Rolle spielt, ist eine solche Randbegrenzung akzeptabel. Für Kontaktlinsen ist jedoch die optische Qualität der Kontaktlinsenrandes von sehr grosser Bedeutung.

Bei dem in der EP-A-0 226 123 beschriebenen Verfahren zur Herstellung von transparenten Kunststoffartikeln wird in mehreren Stufen ein Monomermaterial polymerisiert, wobei jeweils neues Material der Form zugesetzt wird, um den Verlust durch Schrumpfung auszugleichen. Nach dem Öffnen der Form wird die Kunststoffplatte nochmals mit UV-Licht bestrahlt, um sie vollständig auszuhärten. Es handelt sich somit um einen recht langwierigen Herstellungsprozess.

Die Aufgabe der vorliegenden Erfindung besteht nun darin, ein Verfahren und eine Vorrichtung der gattungsgemässen Arten weiterzuentwickeln und dabei dahingehend zu verbessern, dass die vorstehend exemplarisch im Zusammenhang mit der Herstellung von Kontaktlinsen geschilderten Schwierigkeiten und Probleme vermieden werden. Insbesondere sollen die Voraussetzungen dazu geschaffen werden, dass die benötigten Formen bzw. Formhälften wiederverwendet werden können und eine Grat- oder Schwimmhautbildung an den hergestellten Kontaktlinsen vermieden wird, so dass die Ausschussrate der Kontaktlinsen extrem niedrig ist bzw. eine mechanische oder sonstige Nachbehandlung der Kontaktlinsen entfällt.

Diese der Erfindung zugrundeliegende Aufgabe wird durch die im Kennzeichen des unabhängigen Verfahrensanspruchs 1 bzw. des unabhängigen Vorrichtungsanspruchs 42 beschriebenen Massnahmen bzw. Merkmale gelöst. Besonders zweckmässige und vorteilhafte Ausgestaltungen und Weiterbildungen des erfindungsgemässen Verfahrens und der erfindungsgemässen Vorrichtung ergeben sich aus den abhängigen Ansprüchen.

Unter "Vernetzung" wird hier und im folgenden summarisch jede Art von Reaktion verstanden, bei der das Material durch Polymerisation eines geeigneten Monomers, Oligomers und/oder Vorpolymers und/oder einem Gemisch davon in einen Zustand übergeführt wird, in welchem es seine durch die Formkavität definierte Gestalt behält. Geeignete Materialien und Polymerisations/Vernetzungsreaktionen sind dem Fachmann bekannt, typische Beispiele sind u. a. der erwähnten US-PS 4 113 224 und den dort angeführten Druckschriften zu entnehmen.

Gemäss dem allgemeinen, grundlegenden Gedanken der Erfindung wird also die Polymerisation bzw. die Vernetzung des Ausgangsmaterials nur auf den Bereich der herzustellenden Kontaktlinse beschränkt. Ein eventuell vorhandenes überschüssiges Material wird nicht polymerisiert bzw. vernetzt. Teilbereiche des Kontaktlinsen-Randes werden bei dem erfindungsgemäßen Verfahren nicht durch eine mechanische Begrenzung des Materials durch Formwände, sondern durch eine räumliche Begrenzung der die Polymerisation bzw. Vernetzung auslösenden Energie-Beaufschlagung (üblicherweise UV- oder andere Strahlung) mittels einer Maskierung der Form und/oder einer Führung des Strahlengangs der Energie gebildet. Durch diese beiden Maßnahmen kann in einer bevorzugten Ausführungsform ein Kontakt der beiden Formhälften vermieden werden, so dass diese nicht deformiert werden und entsprechend wiederverwendet werden können. Ausserdem kann man dadurch auch das bekannte Problem des bei der Vernetzung auftretenden Volumensschwunds sehr einfach in den Griff bekommen, ohne dass wie z.B. im Fall der US-PS 4 113 224 eine mechanische Nachbearbeitung des Formkörpers erforderlich ist.

Weitere Aspekte und Vorteile des erfindungsgemässen Verfahrens und der erfindungsgemässen Vorrichtung ergeben sich aus der nachstehenden Beschreibung von Ausführungsbeispielen in Verbindung mit der Zeichnung. In dieser zeigen:
- Fig. 1: einen Schnitt durch ein erstes Ausführungsbeispiel einer für das erfindungsgemässe Verfahren ausgebildeten erfindungsgemässen Vorrichtung in geschlossenem Zustand der Form,
- Fig. 2: das in Fig.1 mit II bezeichnete Detail in stark vergrösserter Darstellung und
- Figuren 3-5: Detaildarstellungen analog Fig. 2 von drei weiteren Ausführungsbeispielen der erfindungsgemässen Vorrichtung,
- Fig. 6A-C: ein weiteres Ausführungsbeispiel der erfindungsgemässen Vorrichtung,
- Fig. 7A-C: ein weiteres Ausführungsbeispiel der erfindungsgemässen Vorrichtung,
- Fig. 8A-C: eine Variante des Ausführungsbeispiels der Fig. 7A-C,
- Fig. 9A-C: ein weiteres Ausführungsbeispiel der erfindungsgemässen Vorrichtung
und
- Fig. 10-11: je eine weitere Variante des erfindungsgemässen Verfahrens, bei welchem jeweils eine Formhälfte als Verpackung verwendet wird.

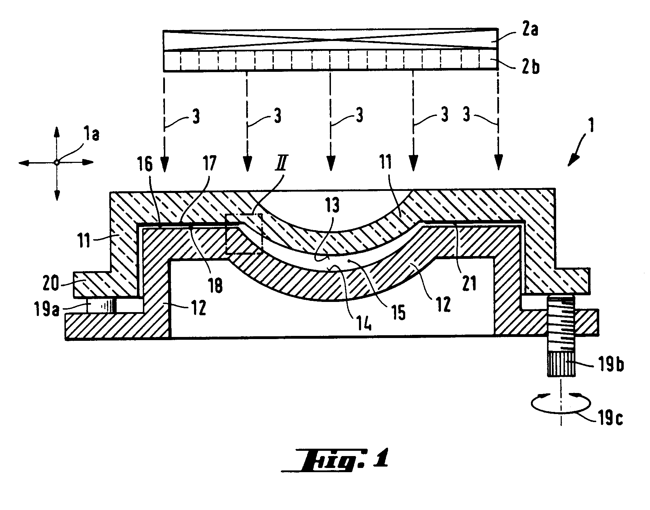

Die in Fig. 1 gezeigte Vorrichtung ist für die Herstellung von Kontaktlinsen aus einem flüssigen Ausgangsmaterial, das durch UV-Strahlung polymerisiert bzw. vernetzt werden kann, konzipiert. Sie umfasst darstellungsgemäss eine hier in geschlossenem Zustand dargestellte Form 1 und eine Energiequelle 2a, hier eine UV-Lichtquelle, sowie Mittel 2b, um die von der Energiequelle bereitgestellte Energie in Form eines im wesentlichen parallelen Strahlenbündels 3 auf die Form 1 zu richten. Energiequelle 2a und Mittel 2b können selbstverständlich auch zu einer einzigen Einheit zusammengefasst sein.

Die dargestellte Vorrichtung ist in ihrer generellen Konzeption gleich wie die in den eingangs zum Stand der Technik erwähnten Druckschriften beschriebenen Vorrichtungen aufgebaut, so dass sich die nachfolgende Beschreibung auf die wesentlichen Punkte und die erfindungsrelevanten Unterschiede zum Stand der Technik beschränken kann. Details zum allgemeinen Aufbau, zu Dimensionierungs-, Material- und Stabilitätsfragen etc. sowie zu beispielsweise in Frage kommenden Materialien für die Formkörper und zu verfahrenstechnischen Aspekten sind sehr umfassend in der EP-A-0 367 513 und insbesondere in der US-PS 4 113 224 abgehandelt, und diese Dokumente sind daher ausdrücklich integrierter Bestandteil der vorliegenden Beschreibung (incorporation by reference).

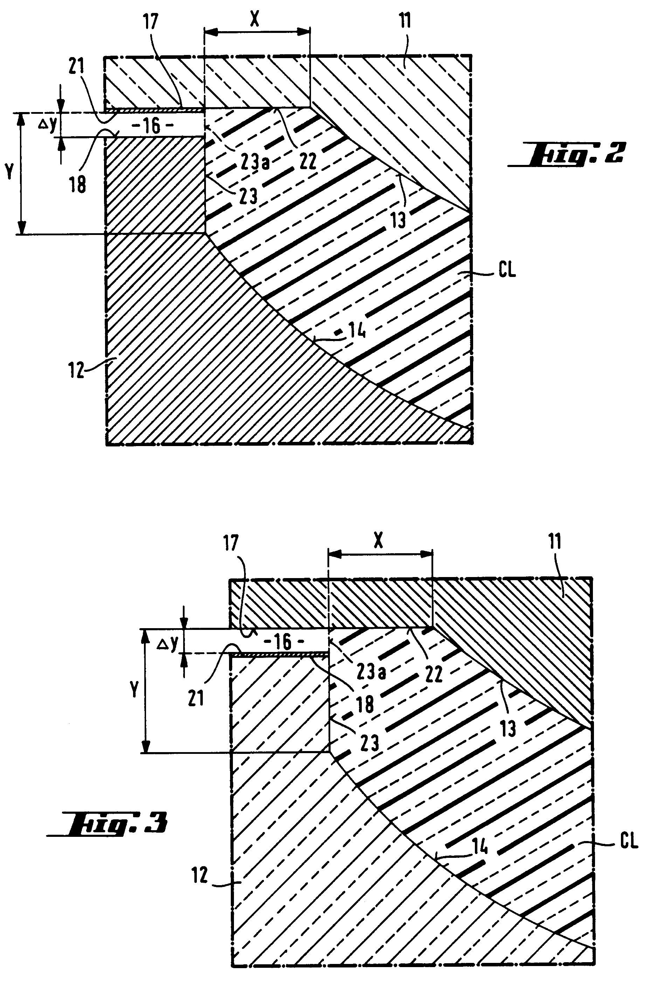

Die Form 1 besteht aus zwei Formteilen oder Formhälften 11 und 12, die je eine gekrümmte Formfläche 13 bzw. 14 aufweisen, welche zusammen eine Formkavität 15 definieren, die ihrerseits wiederum die Gestalt der herzustellenden Kontaktlinse CL (Fig.2) bestimmt. Die Formfläche 13 der in der Zeichnung oberen Formhälfte 11 ist konvex und bestimmt die Rück- oder Basisfläche der Kontaktlinse mit dem daran anschliessenden Randbereich derselben; diese Formhälfte wird üblicherweise als Vaterformhälfte bezeichnet. Umgekehrt ist die Formfläche 14 der anderen Formhälfte, welche entsprechend als Mutterformhälfte bezeichnet wird, konkav ausgebildet und bestimmt die Frontfläche der herzustellenden Kontaktlinse ebenfalls mit dem daran anschliessenden Randbereich derselben.

Die Formkavität 15 ist im Unterschied zu den z.B. aus den eingangs erwähnten Dokumenten WO 87/04390 oder EP-A-0 367 513 bekannten Formen nicht vollständig und dicht abgeschlossen, sondern im gezeigten Ausführungsbeispiel im Bereich ihres Umfangsrands, der den Rand der herzustellenden Kontaktlinse definiert, ringsum offen und steht dort mit einem relativ schmalen Ringspalt 16 in Verbindung, so wie dies auch bei den in der US-PS 4 113 224 gezeigten Formen der Fall ist. Der Ringspalt 16 ist durch je eine ebene Formwand 17 und 18 an der Vaterformhälfte 11 bzw. der Mutterformhälfte 12 begrenzt bzw. gebildet. Um ein vollständiges Schliessen der Form zu verhindern, sind an der Mutterform 12 Distanzmittel z.B. in Form von mehreren Distanzbolzen 19a bzw. 19b vorgesehen, welche mit einem Kragen oder Flansch 20 der Vaterform 11 zusammenwirken und die beiden Formhälften so weit auf Distanz halten, dass sich der genannte Ringspalt 16 ergibt. Die Distanzmittel können, wie dies in der Fig. 1 anhand des rechten Distanzbolzens 19b durch ein Gewinde symbolisch angedeutet ist, auch verstellbar oder federnd ausgebildet sein. Auf diese Weise können durch Verstellen der Distanzmittel (symbolisch angedeutet durch den Drehrichtungspfeil 19c) oder entgegen einer Federkraft die beiden Formhälften während des Vernetzungsvorgangs zwecks Schwundausgleich aufeinander zu bewegt werden. Die Form ist selbstverständlich in der üblichen Weise z.B. mittels einer hier nur durch das Pfeilsymbol 1a angedeuteten Schliesseinheit öffen- und schliessbar. Die Verstellung des Abstands der beiden Formhälften für den Schwundausgleich kann z.B. auch mittels dieser externen Schliesseinheit erfolgen.

In einer anderen, hier nicht gezeigten Ausführungsform kann anstelle des durchgehenden Ringspalts 16 und der Distanzmittel 19a bzw. 19b auch eine Reihe von segmentförmigen Spalten vorgesehen sein, wobei die Zwischenräume zwischen den einzelnen Segmentspalten die Funktion der Distanzmittel übernehmen. Selbstverständlich sind auch noch andere Konfigurationen möglich.

Die beiden Formhälften 11 und 12 bestehen aus einem für die gewählte Energieform, hier wie erwähnt UV-Licht, möglichst gut durchlässigen Material, z.B. aus für solche Zwecke üblicherweise eingesetztem Polypropylen oder einem anderen Polyolefin. Da die Bestrahlung mit UV-Licht hier nur einseitig, u. zwar von oben erfolgt, braucht eigentlich nur die obere, d.h. hier die Vaterform 11 UV-durchlässig zu sein. Für die Bestrahlung von unten durch die Mutterform gilt natürlich sinngemäss dasselbe. Gemäss einer besonders zweckmässigen und vorteilhaften Ausgestaltung der Erfindung besteht wenigstens die vom UV-Licht bestrahlte Formhälfte aus Quarz. Dieses Material hat nicht nur eine besonders gute UV-Durchlässigkeit, sondern ist auch sehr hart und widerstandsfähig, so dass aus diesem Material hergestellte Formen sehr gut wiederverwendet werden können. Voraussetzung dazu ist jedoch, wie aus dem folgenden noch näher hervorgeht, dass die Form entweder kraftlos oder nicht vollständig geschlossen wird, so dass die Formhälften nicht durch Berührung beschädigt werden. Alternativ zu Quarz kommen auch UV-durchlässige Spezialgläser oder Saphir in Frage. Wegen der Wiederverwendbarkeit der Form bzw. Formhälften kann bei ihrer Anfertigung ein relativ hoher Aufwand getrieben werden, um Formen mit extrem hoher Präzision und Reproduzierbarkeit zu erhalten. Da sich die Formhälften im Bereich der herzustellenden Linse, d.h. der Kavität bzw. eigentlichen Formflächen nicht berühren, ist eine Beschädigung durch Berührung ausgeschlossen. Damit ist eine hohe Standzeit der Formen sichergestellt. Dies hat auch günstige Konsequenzen auf die Reproduzierbarkeit der herzustellenden Kontaktlinsen bzw. Formkörper generell.

Bei einseitiger Energie-Beaufschlagung kann die der Energie-Quelle abgewandte Formhälfte prinzipiell aus jedem Material gefertigt sein, das sich mit dem vernetzbaren bzw. vernetzten Material bzw. Komponenten davon verträgt. Bei Verwendung von Metallen ist jedoch je nach Art der Energie-Strahlung mit potentiellen Reflexionen zu rechnen, welche eventuell zu nicht erwünschten Effekten wie Überbelichtung, Kantenverfälschung oder dergleichen führen können. Absorbierende Materialien weisen diese Nachteile nicht auf.

Soweit entspricht die Vorrichtung und insbesondere die Form 1 im wesentlichen derjenigen der genannten US-PS 4 113 224. Der markanteste und wichtigste Unterschied gegenüber dem dort Offenbarten besteht nun gemäss dem grundlegenden Hauptgedanken der Erfindung darin, dass die Beaufschlagung des Materials, aus dem der Formkörper hergestellt wird, mit der die Vernetzung bewirkenden Energieform auf die Formkavität beschränkt wird, d.h. es wird nur das in der Formkavität befindliche vernetzbare Material mit der geeigneten Energieform, hier UV-Strahlung, beaufschlagt und nur das in der Kavität befindliche Material wird vernetzt. Insbesondere wird das im die Formkavität umgebenden Ringspalt und das in einem eventuell vorgesehenen, mit diesem in Verbindung stehenden Reservoir befindliche Material nicht mit Energie beaufschlagt und nicht vernetzt. Unter Formkavität wird derjenige Hohlraum der geschlossenen Form verstanden, welcher durch die vollständige Kontur des herzustellenden Formkörpers, im speziellen also der Kontaktlinse, definiert ist. Der in die Formkavität mündende Ringspalt 16 gehört somit nicht zur Formkavität 15.

Für die praktische Realisierung dieses Haupterfindungsgedankens ist gemäss dem in den Figuren 1 und 2 gezeigten Ausführungsbeispiel der Vorrichtung an der Formwand 17 im Bereich des Ringspalts 16 eine für die verwendete Energieform, hier also UV-Licht, undurchlässige (oder wenigstens im Vergleich zur Durchlässigkeit der Form schlecht durchlässige) Maske 21 vorgesehen, welche sich bis unmittelbar an die Formkavität heran erstreckt und mit Ausnahme derselben alle übrigen Teile, Hohlräume oder Flächen der Form, welche mit dem hier flüssigen unvernetzten, eventuell überschüssigen Material in Kontakt sind oder kommen können, gegenüber der eingestrahlten Energie abschirmt. Teilbereiche des Linsenrands werden bei dem erfindungsgemässen Verfahren nicht durch eine Begrenzung des Materials durch Formwände, sondern durch eine räumliche Begrenzung der die Polymerisation bzw. Vernetzung auslösenden Strahlung oder anderen Energieform gebildet. Details hierzu werden weiter unten anhand der Figuren 2-5 erläutert.

Im Falle von UV-Licht kann die Maske vorzugsweise eine dünne Chrom-Schicht sein, die nach Verfahren hergestellt sein kann, wie sie z. B. in der Photo- bzw. UV-Lithographie bekannt sind. Als Maskenmaterial kommen eventuell auch andere Metalle oder Metalloxide infrage. Die Maske kann auch mit einer Schutzschicht, im Falle von Quarz als Material für die Form bzw. Formhälfte beispielsweise aus Siliziumdioxid, überzogen sein. Die Maske braucht nicht unbedingt fest angeordnet zu sein, sie könnte beispielsweise auch abnehmbar oder auswechselbar ausgebildet bzw. angeordnet sein. Ferner ist es auch nicht unbedingt erforderlich, wenngleich vorteilhaft, dass die Maske so wie in den Figuren 2-5 angeordnet ist. Sie könnte prinzipiell überall an oder auf der Form vorgesehen sein, solange sie nur die ihr zugedachte Funktion, nämlich die Abschirmung aller unvernetztes Material führenden Formbereiche mit Ausnahme der Formkavität, erfüllen kann. Im Prinzip kann sogar auf eine Maske bzw. Maskierung in bzw. an der Form verzichtet werden, wenn es auf andere Weise gelingt, die Energiebeaufschlagung ggf. unter Berücksichtigung der optischen Wirkung der Form lokal auf die Formkavität zu beschränken. Im Falle von UV-Strahlung könnte dies z.B. durch eine räumlich begrenzte Lichtquelle, eine geeignete Linsenanordnung eventuell in Kombination mit externen Masken, Blenden oder dgl. und unter Berücksichtigung der optischen Wirkung der Form erreicht werden.

Die einzelnen Schritte bei der Herstellung einer Kontaktlinse sind im wesentlichen die folgenden:
- Dosieren des flüssigen, unvernetzten Ausgangsmaterials in die weibliche Formhälfte 12 bei geöffneter Form 1. Im Regelfall wird überdosiert, d.h. das dosierte Volumen ist größer als das Volumen der Formkavität 15 bzw. der herzustellenden Kontaktlinse CL.
- Schließen der Form 1. Beim Schließen der beiden Formhälften wird überschüssiges Material in den Ringspalt 16 zwischen den beiden Formhälften 11 und 12 verdrängt. Der Ringspalt 16 wird so weit bzw. hoch (Δy) gewählt, daß eine Berührung der beiden Formhälften 11 und 12 im Bereich der Maske 21 mit Sicherheit zuverlässig vermieden wird. Die Führung und Positionierung (Abstandhaltung) der beiden Formhälften erfolgt durch weiter außen liegende, hier nur durch die Distanzbolzen 19a und 19b symbolisierte Führungs- und Anschlagelemente, wie sie im Prinzip auch von den Vorrichtungen der US-PS 4 113 224 bekannt sind. Typische Spalthöhen Δy liegen für die Herstellung von Kontaktlinsen im Bereich unterhalb von etwa 100 µm. Versuche haben gezeigt, dass wenigstens bei Verwendung von paralleler Energiestrahlung eine saubere Randstrukturierung des herzustellenden Formkörpers auch bei Spalthöhen von etwa 1 mm noch möglich ist. Umgekehrt ist es aber auch ohne weiteres möglich, die Weite bzw. Höhe des Ringspalts auf praktisch null zu reduzieren, wenn nur die Form kraftlos geschlossen wird, die beiden Formhälften also ohne äussere Belastung aufeinander liegen. Dabei verbleibt zwischen den beiden Formhälften im Bereich des Ringspalts nur ein Film des unvernetzten Materials von wenigen Mikrometern Dicke, der aber wegen der Abschattung der UV-Strahlung ebenfalls nicht zur Bildung einer Schwimmhaut führen kann. Wegen der kraftlosen Schliessung der Form wird diese zumindest bei geeigneter Materialwahl ebenfalls nicht beschädigt.
- Polymerisation bzw. Vernetzung des Materials in der Formkavität 15. Durch Bestrahlung mit UV-Licht (oder allgemein Beaufschlagung mit einer geeigneten Energieform) erfolgt die Polymerisation bzw. Vernetzung des Ausgangsmaterials in dem Bereich, welcher der herzustellenden Kontaktlinse (oder allgemein dem herzustellenden Formkörper) entspricht.
- Öffnen der Form und Entnahme der vernetzten Linse. Nach der Polymerisation bzw. dem Vernetzen des Ausgangsmaterials in der Formkavität 15 werden die Formhälften 11 und 12 z.B. mit Hilfe einer nicht gezeigten Vorrichtung auseinander gefahren und die Form 1 dadurch geöffnet. Hierbei wird die Linse CL frei zugänglich und kann manuell oder mittels ebenfalls nicht gezeigter Einrichtungen entnommen werden. Dabei kann gewünschtenfalls durch geeignete, an sich bekannte Massnahmen dafür gesorgt werden, dass die so hergestellte Kontaktlinse bevorzugt an der einen oder der anderen Formhälfte haften bleibt. Geeignete Massnahmen sind beispielsweise in der US-PS 4 113 224 beschrieben.

Die Figur 2 zeigt die Ausgestaltung der Form 1 im Übergangsbereich zwischen Formkavität 15 und Ringkanal 16 in vergrösserter Detaildarstellung. Die Kavität 15 hat hier im Sinne eines Beispiels eine Gestalt, die der typischen Randgeometrie einer sogenannten weichen Kontaktlinse CL entspricht. Der Kavitäts- und damit Linsenrand ist hier durch zwei rechtwinklig zu einander stehende Wandflächen 22 und 23 gebildet, welche an der männlichen bzw. an der weiblichen Formhälfte 11 bzw. 12 ausgebildet sind. Die Breite und die Höhe dieser beiden Wandflächen bzw. der durch sie definierten Randbereiche der Kontaktlinse sind mit X bzw. Y bezeichnet. Selbstverständlich kann der Linsenrand in der Praxis auch etwas abgerundet sein.

Wie man deutlich erkennt, reicht die zylindrische Wandfläche 23 der weiblichen Formhälfte 12 nicht bis ganz an die ebene Wandfläche 22 bzw. die nahtlos an diese anschliessende Wandfläche 17 der männlichen Formhälfte 11 heran, sondern ist um den Betrag Δy weniger hoch, so dass der schon genannte Ringspalt 16 zwischen der Wandfläche 17 und der Wandfläche 18 der beiden Formhälften 11 und 12 gebildet wird bzw. frei bleibt.

Die bei diesem Ausführungsbeispiel an der Wandfläche 17 der Vaterformhälfte 11 vorgesehene Maske 21 reicht horizontal genau bis an die Verlängerung 23a der Wandfläche 23 der Mutterformhälfte 12 heran. Wenn das die Vernetzung bewirkende UV-Licht in Form eines parallelen Strahlenbündels 3 senkrecht zur Wandfläche 22 bzw 17 bzw. parallel zur zylindrischen Wandfläche 23 einfällt, wird der senkrecht unter der Maske 21 befindliche Raum abgeschattet und nur das innerhalb der Kavität 15, also innerhalb der gedachten Wandverlängerung 23a befindliche Material vernetzt und es ensteht ein sauberer und graffreier Linsenrand, der keinerlei mechanischer Nachbearbeitung bedarf. Bei Verwendung von paralleler Energie-Strahlung wird also, abgesehen von in der Praxis meist vernachlässigbaren Beugungs- und Streueffekten, die Kontur der Maske 16 zweidimensional parallel (hier) nach unten in den Randbereich der Kontaktlinse übertragen. Sind die beiden Formhälften 11 und 12 also durch den Ringspalt 16 der Höhe Δy voneinander getrennt, so wird der Rand in dem sich durch diesen Versatz ergebenden Bereich nach aussen hin durch die räumliche Begrenzung der Energie-Strahlung gebildet.

Prinzipiell ist es auch möglich, Beugungs- und/oder Streueffekte gezielt zur Erzeugung einer gewollt unscharfen Kontur bzw. etwas abgerundeter Kanten des herzustellenden Formkörpers auszunutzen. Derselbe Effekt kann auch mit Masken örtlich variabler Durchlässigkeit erzielt werden. Scharfkantige Ränder des herzustellenden Formkörpers können so durch gezielte unvollständige Vernetzung und durch Anlösen der unvollständig vernetzten Bereiche mit einem geeigneten Lösungsmittel, das auch das unvernetzte Material selbst sein kann, gezielt abgerundet werden. Im Falle von HEMA (Hydroxyethylmethacrylat) ist beispielsweise Isopropanol ein geeignetes Lösungsmittel.

Nach dem Entformen des so hergestellten Formkörpers diesem eventuell anhaftendes unvernetztes Material kann einfach mittels eines geeigneten Lösungsmittels, welches je nach Material durchaus auch Wasser sein kann, weggespült werden.

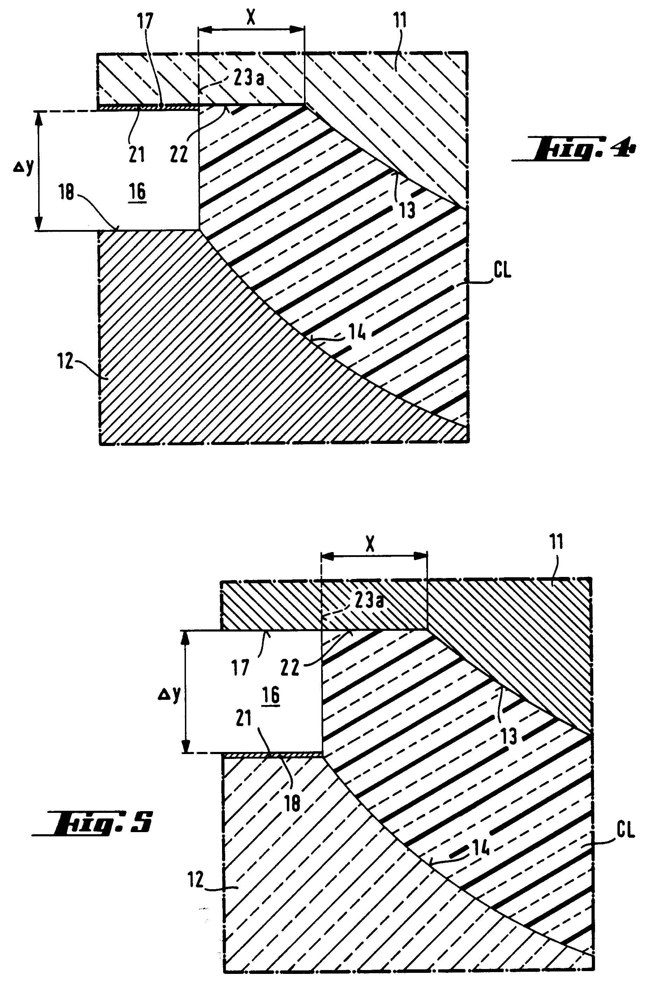

Bei dem in Figur 3 dargestellten Ausführungsbeispiel der erfindungsgemässen Vorrichtung erfolgt die Beaufschlagung mit der die Vernetzung bewirkenden Energie durch die Mutterformhälfte 12, also in der Zeichnung von unten. Folgerichtig ist hier die Maske 21 anstatt an der Wandfläche 17 der Vaterformhälfte 11 an der Wandfläche 18 der Mutterformhälfte 12 vorgesehen. Ansonsten bestehen gegenüber der Ausführungsform der Figuren 1 und 2 keine Unterschiede.

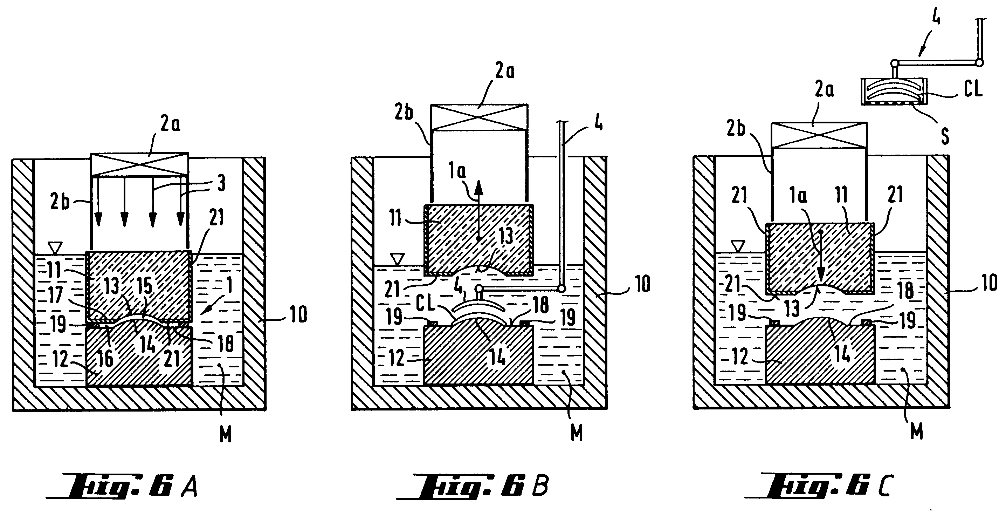

Beim Ausführungsbeispiel der Figur 4 erfolgt die Energie-Einstrahlung wieder auf der Seite der Vaterformhälfte 11, und die Maske 21 befindet sich wieder an der Wandfläche 17 dieser Formhälfte. Die Mutterformhälfte 12 ist jedoch seitlich nicht hochgezogen, d.h. es fehlt die in Fig. 2 mit 23 bezeichnete zylindrische Wandfläche der Mutterformhälfte. Stattdessen ist der Ringspalt 16 entsprechend weiter bzw. höher ausgebildet. Versuche haben gezeigt, dass bei den für die Herstellung von Kontaktlinsen üblichen Dimensionen auch diese Konfiguration der Form zu einwandfreien Ergebnissen führt.

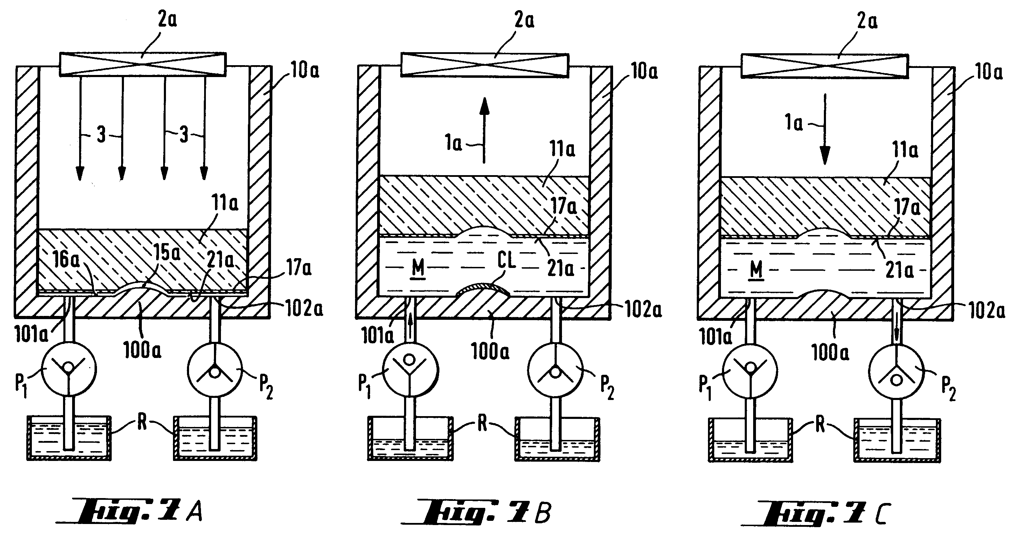

Das Ausführungsbeispiel nach Fig. 5 schliesslich entspricht demjenigen nach Fig. 4 mit dem Unterschied, dass hier die Energie-Beaufschlagung wiederum von unten durch die Mutterformhälfte 12 erfolgt und die Maske 21 an der Wandfläche 18 dieser Formhälfte vorgesehen ist.

Es versteht sich, dass die Beaufschlagung des in der Formkavität befindlichen vernetzbaren Materials mit der die Vernetzung bewirkenden Energie nicht nur von einer Seite, sondern auch von beiden Seiten erfolgen kann. Es muss lediglich dafür gesorgt sein, dass die Energie nur in die Kavität gelangen kann und von den übrigen Teilen wirksam ferngehalten wird. Beispielsweise kann dies durch geeignetes Anordnen zweier oder eventuell sogar mehrerer Masken erreicht werden. Die Maske oder Masken müssen im übrigen nicht unbedingt an den Oberflächen der Formwände angeordnet sein, sondern können eventuell auch im Inneren der Formwände vorgesehen werden. Vorzugsweise ist die Maske bzw. sind die Masken an einer mit dem unvernetzten Material in Kontakt befindlichen Wandoberfläche oder knapp darunter angeordnet, da auf diese Weise unerwünschte Beugungs- und Streuungseffekte weitgehend ausgeschlossen werden können.

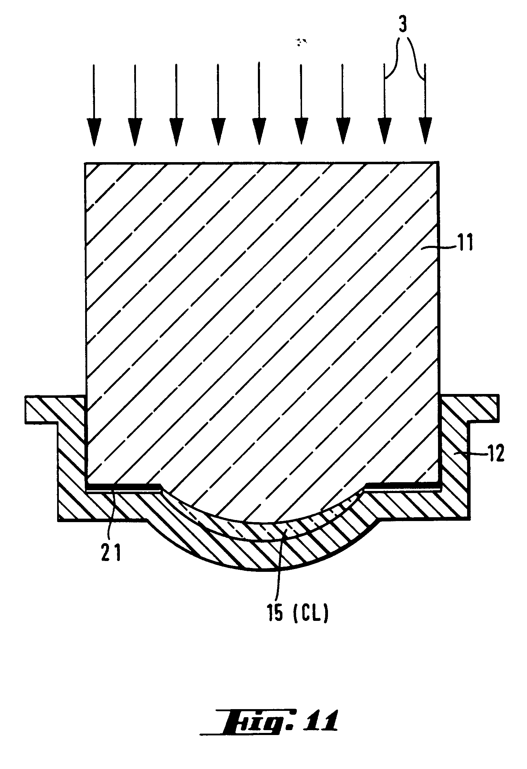

Gemäss einem weiteren Erfindungsaspekt kann auch eine der beiden Formhälften später als Verpackung der Kontaktlinse verwendet werden. Dazu kann sowohl die Vaterformhälfte 11 wie auch die Mutterformhälfte 12 verwendet werden, die gesamte Form muss nur entsprechend ausgebildet sein. Dies ist in Fig. 10 bzw. Fig. 11 zu erkennen, wo jeweils eine Formhälfte (in Fig. 10 die Vaterformhälfte 11, in Fig. 11 die Mutterformhälfte 12) später als Verpackung verwendet wird. Diese Formhälfte kann zweckmässigerweise als Einmalformhälfte ausgebildet sein, wohingegen die jeweils andere Formhälfte als Mehrfach-Formhälfte (z.B. aus Quartz oder Saphir) ausgebildet sein kann. An der Mehrfach-Formhälfte ist jeweils die Maske 21 vorgesehen. Die Beaufschlagung mit Energie in Form des UV-Strahlendbündels 3 erfolgt jeweils durch die für die Energiestrahlung gut durchlässige Mehrfach-Formhälfte (mit Ausnahme des maskierten Bereichs) hindurch. Damit die durch die Gestalt der Kavität 15 geformte Linse nach dem Polymerisieren an der Einmal-Formhälfte haftet, kann diese Einmal-Formhälfte entsprechend vorbehandelt sein. Das nach der Polymerisation im Bereich der Maske 21 befindliche überschüssige und nicht polymerisierte Material kann anschliessend aus dieser Formhälfte entfernt werden. Die polymerisierte, an der Einmal-Formhälfte anhaftende, Linse kann während der weiteren Bearbeitung in dieser Formhälfte hydratisiert werden, falls eine Hydratisierung erforderlich ist. Die fertige Linse wird später in der Einmal-Formhälfte verpackt, indem beispielsweise die Einmal-Formhälfte mit einer Deckfolie abgeschlossen und versiegelt wird.

Ein weiteres Problem bei der Herstellung nach bisher bekannten Verfahren ist, dass es beim Schliessen der Form zu Lufteinschlüssen kommen kann. Lufteinschlüsse in den Linsen haben aber zur Folge, dass die Linsen bei der anschliessenden Inspektion (Qualitätskontrolle) als Ausschuss aussortiert werden. Bisher wird die Form entprechend langsam geschlossen, um ein möglichst vollständiges Entweichen der Luft aus dem Formhohlraum (Formkavität) zu ermöglichen. Dieses vergleichsweise langsame Schliessen der Form nimmt jedoch einen relativ grossen Zeitraum in Anspruch.

Es ist daher gemäss einem weiteren Aspekt der Erfindung wünschenswert, ein Verfahren und eine Vorrichtung der genannten Art zu schaffen, bei dem zum einen die Effizienz gross ist, d.h. die Form effizient genutzt werden kann, und bei dem der Aufwand vergleichsweise gering ist, wobei jedoch immer die Vorgabe besteht, dass der hergestellte Formkörper (z.B. Kontaktlinse) von Lufteinschlüssen frei ist.

Verfahrensmässig wird dies dadurch gelöst, dass das Befüllen der Formkavität in dem in zumindest teilweise noch unvernetztem Zustand befindlichen Ausgangsmaterial erfolgt. Dadurch wird erreicht, dass von vornherein beim Befüllen der Form keine Luft mehr in der Form sein kann, mithin also Lufteinschlüsse gänzlich vermieden werden. Als Folge kann die Form schneller geschlossen und damit effizienter genutzt werden, dies bei gleichzeitig vergleichsweise sehr geringem Aufwand. Im übrigen ist auf diese Weise auch automatisch eine exakte Dosierung der erforderlichen Menge des Ausgangsmaterials gegeben, da die Befüllung im Ausgangsmaterial erfolgt.

In einer Variante des Verfahrens kann zum Befüllen der Formkavität diese mit einem sie umgebenden Reservoir in Verbindung gebracht werden, in welchem das Ausgangsmaterial bereitgestellt wird und aus welchem die Formkavität geflutet wird. Dies ist eine Verfahrensvariante mit besonders geringem technischem Aufwand.

In einer weiteren Verfahrensvariante wird die Form auch in dem Ausgangsmaterial geschlossen, um das Risiko auszuschliessen, dass während des Schliessvorgangs auf irgendeinem Weg Luft in die Formkavität gelangen kann.

In einer weiteren Variante wird eine Form verwendet, die einen Behälter und ein in diesem Behälter kolbenartig verschiebbares Formteil umfasst. Dieses Formteil ist zum Öffnen und Schliessen der Form von der ihm gegenüberliegenden Behälterwand weg und auf diese Behälterwand zu bewegbar. Während des Öffnens der Form wird Ausgangsmaterial zwischen Behälterwand und Formteil zugeführt und während des Schliessens der Form Ausgangsmaterial wieder abgeführt. Durch das Bewegen des verschiebbaren Formteils von der gegenüberliegenden Behälterwand weg wird der Raum zwischen dem verschiebbaren Formteil und der Behälterwand mit Ausgangsmaterial gefüllt, ohne dass Luft in diesen Raum eindringen kann. Anschliessend wird durch das Bewegen des verschiebbaren Formteils auf die Behälterwand zu das zwischen Formteil und Behälterwand befindliche Ausgangsmaterial wieder abgeführt, wobei das in der Formkavität befindliche Material natürlich in dieser zurückbleibt. Auch beim Bewegen des Formteils auf die Behälterwand zu kann keinerlei Luft in die Formkavität gelangen, wodurch lufteinschlussfreie Formkörper auf einfache und effiziente Weise hergestellt werden können.

Beispielsweise kann eine Form mit zwei Formhälften verwendet werden, wobei die eine Formhälfte an der Behälterwand und die andere Formhälfte an dem verschiebbaren Formteil vorgesehen ist. Dabei kann eine Form mit einer Vaterformhälfte und einer Mutterformhälfte verwendet werden, wobei an der Behälterwand die Vaterformhälfte und an dem verschiebbaren Formteil die Mutterformhälfte vorgesehen ist. Zum Zu- und Abführen des Ausgangsmaterials können vorteilhafterweise Pumpen verwendet werden. Bei einer weiteren vorteilhaften Verfahrensvariante kann zum Zu- und Abführen des Ausgangsmaterials der Kolben angetrieben werden.

Auf besonders einfache Weise kann der vernetzte Formkörper entformt werden durch Ausspülen der Form mit Ausgangsmaterial. Dies kann beispielsweise derart erfolgen, dass der Formkörper durch die Strömung des Ausgangsmaterials beim Öffnen der Form von der Form abgelöst und beim Schliessen der Form aus der Form herausgespült wird.

Bei einer Variante des Verfahrens wird in einem ersten Zyklus die Form geöffnet und wieder geschlossen. Anschliessend erfolgt zumindest die für die Entformbarkeit des Formkörpers erforderliche Vernetzung durch Beaufschlagung mit Energie. In einem zweiten Zyklus wird die Form erneut geöffnet, wobei der Formkörper von der Form abgelöst wird. Danach wird das kolbenartige Formteil erneut auf die gegenüberliegende Behälterwand zu bewegt, die Form also erneut geschlossen, wobei der vernetzte Formkörper aus der Form herausgespült wird. Diese "Zwei-Zyklen"-Variante des Verfahrens zeichnet sich dadurch aus, dass in dem ersten Zyklus die Herstellung des Formkörpers erfolgt, der dann anschliessend in einem zweiten Zyklus aus der Form herausgespült wird. In dem "Spülzyklus" kann gleichzeitig eine Reinigung der Form erfolgen.

Die eben beschriebene Verfahrensvariante kann entweder so ablaufen, dass zunächst ein "Herstellungszyklus" (erster Zyklus) und anschliessend ein separater "Spülzyklus" (zweiter Zyklus, z.B. mit einer Spülflüssigkeit) vorgesehen ist, es kann aber auch so ablaufen, dass das Ausspülen mit dem Herstellungszyklus eines neuen Formkörpers zusammenfällt, also beim Einfüllen von neuem Ausgangsmaterial in die Formkavität der im vorangehenden Zyklus hergestellte Formkörper aus der Form herausgespült wird. Die "Zwei-Zyklen"-Variante des Verfahrens wird dann zu einer "Ein-Zyklus"-Variante.

Der vernetzte Formkörper kann aber auch mittels einer Greifeinrichtung aus der Form entnommen werden. Dies kann derart erfolgen, dass der mittels der Greifeinrichtung aus der Form entnommene Formkörper ausserhalb des Raums zwischen dem verschiebbaren Formteil und der gegenüberliegenden Behälterwand auf dem verschiebbaren Formteil abgelegt wird. Der auf dem verschiebbaren Formteil abgelegte Formkörper kann dabei durch Unterdruck an diesem festgehalten und dann durch Überdruck von diesem abgelöst werden.

Bei einer weiteren Verfahrensvariante wird die Form nach dem Einbringen des Ausgangsmaterials in die Formkavität nicht vollständig geschlossen, so dass ein die Formkavität umschliessender, mit dieser in Verbindung stehender, unvernetztes Ausgangsmaterial enthaltender Ringspalt offen bleibt. Dadurch kann einerseits ein bei der Vernetzung entstehender Volumenschwund ausgeglichen werden, indem nämlich durch den Ringspalt Ausgangsmaterial in die Formkavität nachströmt. Auf der anderen Seite wird dadurch auch vermieden, dass die Formhälften bei der Herstellung des Formkörpers fest gegeneinander gepresst werden. Insbesondere wegen der Gefahr, dass sich die Formhälften bei einer mechanischen Beanspruchung irreversibel verformen, sind bisher die Formhälften nur einmal verwendet worden, wie eingangs erläutert worden ist. Gemäss dieser Verfahrensvariante ist es möglich, die Formhälften mehrfach zu verwenden.

Es ist auch denkbar, dass die Form während der fortschreitenden Vernetzung des Materials dem Vernetzungsschwund folgend weiter geschlossen wird.

In jedem Fall ist es jedoch wichtig, dass ein vor der Vernetzung wenigstens zäh fliessfähiges Ausgangsmaterial verwendet wird, damit zur Schwundkompensation Ausgangsmaterial durch den Ringspalt in die Formkavität nachfliessen kann.

Vorrichtungsmässig wird das Problem von möglichen Lufteinschlüssen dadurch gelöst, dass beim Befüllen der Formkavität diese in zumindest teilweise noch in unvernetztem Zustand befindlichem Ausgangsmaterial angeordnet ist. Dadurch wird erreicht, dass von vornherein beim Befüllen der Form keine Luft mehr in der Form sein kann, mithin also Lufteinschlüsse gänzlich vermieden werden. Als Folge kann die Form schneller geschlossen und damit effizienter genutzt werden, dies bei gleichzeitig vergleichsweise sehr geringem Aufwand.

In einem Ausführungsbeispiel umfasst die Vorrichtung ein Reservoir zur Bereitstellung des Ausgangsmaterials, welches die Formkavität umgibt. Dieses Reservoir ist mit der Formkavität verbindbar. Beim Befüllen der Formkavität ist das Reservoir mit der Formkavität verbunden und flutet diese. Dies erlaubt mehrere konstruktiv besonders einfache Weiterbildungen, die im einzelnen noch genauer erläutert werden.

In einem weiteren Ausführungsbeispiel umfasst die Vorrichtung Mittel zum Schliessen der im Ausgangsmaterial angeordneten Form, wobei auch hier die Form stets im Ausgangsmaterial geschlossen wird, so dass keine Luft in die Formkavität gelangen kann.

In einem vorteilhaften Ausführungsbeispiel umfasst die Form einen Behälter und ein in diesem Behälter kolbenartig verschiebbares Formteil, welches zum Öffnen und Schliessen der Form von der ihm gegenüberliegenden Behälterwand weg und auf diese Behälterwand zu bewegbar ist. In dem Behälter ist ein Einlass vorgesehen, durch den während des Öffnens der Form Ausgangsmaterial zwischen Behälterwand und Formteil hineinströmt. Ferner ist in dem Behälter ein Auslass vorgesehen, durch den während des Schliessens der Form Ausgangsmaterial wieder herausströmt. Dieses Ausführungsbeispiel ist konstruktiv vergleichsweise einfach, also wenig aufwendig, und daher für den praktischen Einsatz gut geeignet.

Die Form weist dabei vorzugsweise zwei Formhälften auf, wobei eine Formhälfte an der Behälterwand und die andere an dem verschiebbaren Formteil vorgesehen ist. Die Form weist (speziell bei der Herstellung von Kontaktlinsen) eine Vaterformhälfte und eine Mutterformhälfte auf. Dabei ist bevorzugt die Vaterformhälfte an der Behälterwand und die Mutterformhälfte an dem verschiebbaren Formteil vorgesehen. Bei dieser Ausgestaltung kann der Formkörper (Kontaktlinse) später besonders einfach entformt werden.

Zum Zuführen und/oder Abführen von Ausgangsmaterial sind bevorzugt Pumpen vorgesehen, die beim Öffnen der Form durch den Einlass Ausgangsmaterial zwischen Behälterwand und Formteil zuführen und beim Schliessen der Form durch den Auslass wieder abführen. Solche Pumpen arbeiten zuverlässig und bedeuten daher keinerlei besonderen Aufwand.

In einem weiteren Ausführungsbeispiel sind Mittel zum Antreiben des kolbenartig verschiebbaren Formteils vorgesehen. Diese können sowohl bei einer Vorrichtung, die ohne Pumpen arbeitet, als auch bei einer Vorrichtung mit Pumpen vorgesehen sein, um das kolbenartig verschiebbare Formteil in Richtung der gegenüberliegenden Behälterwand zu bewegen, und somit zwischen den Formhälften befindliches Ausgangsmaterial wieder herauszudrücken.

Bei einem weiteren Ausführungsbeispiel der Vorrichtung sind Mittel zum Erzeugen einer Strömung vorgesehen. Diese Strömung löst den Formkörper beim Öffnen der Form von der Form ab und spült ihn beim Schliessen der Form aus der Form heraus. Diese Mittel können als Düsen oder ähnlich wirkende Mittel ausgebildet sein. Wichtig ist, dass sie eine Strömung bzw. eine Verwirbelung des zwischen den Formhälften befindlichen Ausgangsmaterials erzeugen, sodass der Formkörper (Kontaktlinse) mittels der Strömung bzw. mittels der Verwirbelung von der Formhälfte abgehoben wird.

Bei einem weiteren Ausführungsbeispiel der Vorrichtung strömt in einem ersten Zyklus ("Herstellungszyklus") zunächst durch den Einlass hindurch Ausgangsmaterial zwischen Behälterwand und verschiebbares Formteil hinein und anschliessend wieder durch den Auslass heraus. Daran anschliessend beaufschlagt die Energiequelle die Form mit einer für die Entformbarkeit des Formkörpers erforderlichen Menge an Energie, sodass die Vernetzung erfolgt. Anschliessend strömt in einem zweiten Zyklus durch den Einlass hindurch z.B. wieder Ausgangsmaterial zwischen Behälterwand und dem verschiebbaren Formteil hinein, löst den Formkörper von der Form ab und spült ihn durch den Auslass heraus.

Diese "Zwei-Zyklen"- Vorrichtung zeichnet sich dadurch aus, dass in dem ersten Zyklus die Herstellung des Formkörpers erfolgt, welcher anschliessend in dem zweiten Zyklus (Spülzyklus, Reinigungszyklus) aus der Form herausgespült wird, wobei auch gleichzeitig die Form gereinigt wird.

Diese Vorrichtung kann entweder so ausgebildet sein, dass wie beschrieben zunächst ein "Herstellungszyklus" (erster Zyklus) und anschliessend ein separater "Spülzyklus" (zweiter Zyklus) vorgesehen ist, sie kann aber auch so ausgebildet sein, dass das Ausspülen mit dem Herstellungszyklus eines neuen Formkörpers zusammenfällt, also beim Einfüllen von neuem Ausgangsmaterial in die Formkavität der im vorangehenden Zyklus hergestellte Formkörper aus der Form herausgespült wird. Die "Zwei-Zyklen"-Vorrichtung wird dann zu einer "Ein-Zyklus"-Vorrichtung. Bei der "Ein-Zyklus"-Vorrichtung muss aber zum Spülen Ausgangsmaterial verwendet werden, während bei der "Zwei-Zyklen"-Vorrichtung im Spülzyklus auch die Verwendung einer speziellen Reinigungsflüssigkeit denkbar ist.

Zur Entnahme des Formkörpers kann eine Greifeinrichtung vorgesehen sein, die den vernetzten Formkörper aus der Form entnimmt. In bevorzugter Weise weist zu diesem Zweck der Behälter auf einer von der formgebenden Fläche verschiedenen Behälterwand eine Ausbuchtung oder Nische auf, die sich im wesentlichen in Richtung der Bewegung des verschiebbaren Formteils erstreckt. In dieser Ausbuchtung oder Nische ist die Greifeinrichtung angeordnet. Das verschiebbare Formteil weist auf einer Aussenwand, die nicht der formgebenden Behälterwand gegenüberliegt, eine Einbuchtung auf, in welche hinein die Greifeinrichtung den entnommenen Formkörper ablegt. Dies ist eine konstruktiv besonders zweckmässige und einfache Ausgestaltung der Vorrichtung.

Diese Vorrichtung kann noch so weitergebildet sein, dass das verschiebbare Formteil einen zu der Einbuchtung führenden Kanal aufweist, der an eine Unter- bzw. Überdruckquelle anschliessbar ist. Der Kanal ist dann, wenn die Greifeinrichtung den entnommenen Formkörper in die Einbuchtung des Formteils hinein ablegt, an die Unterdruckquelle angeschlossen. Zum Ablösen der Linse ist er dann anschliessend an die Überdruckquelle angeschlossen. Damit kann während eines Zyklus die Linse hergestellt und während des nächsten Zyklus entnommen, auf dem Formteil abgelegt und anschliessend vom Formteil abgenommen werden. Dies ist sowohl bei einer als "Zwei-Zyklus"-Vorrichtung ausgebildeten Vorrichtung als auch bei einer als "Ein-Zyklus"-Vorrichtung ausgebildeten Vorrichtung möglich.

Bei einem weiteren Ausführungsbeispiel der Vorrichtung ist die Form mit Distanzmitteln versehen, welche die beiden Formhälften bei geschlossener Form in geringem Abstand zueinander halten, so dass ein die Formkavität umschliessender und mit dieser in Verbindung stehender Ringspalt gebildet wird.

Dadurch kann einerseits ein bei der Vernetzung entstehender Volumenschwund ausgeglichen werden, da nämlich durch den Ringspalt Ausgangsmaterial in die Formkavität nachströmen kann. Auf der anderen Seite wird dadurch auch vermieden, dass die Formhälften bei der Herstellung des Formkörpers fest gegeneinander gepresst werden. Insbesondere wegen der Gefahr, dass sich die Formhälften bei einer mechanischen Beanspruchung irreversibel verformen, sind bisher die Formhälften nur einmal verwendet worden, wie eingangs erläutert worden ist. Wird dieses Ausführungsbeispiel der Vorrichtung verwendet, ist es möglich, die Formhälften mehrfach zu verwenden. Ausserdem ist es auch denkbar, die Vorrichtung so weiterzubilden, dass die Form mit elastischen Mitteln oder Verstellmitteln versehen ist, welche eine dem Vernetzungsschwund folgende Annäherung der beiden Formhälften erlauben.

Insbesondere können nach dem Verfahren bzw. mit den beschriebenen Vorrichtung Formkörper, insbesondere optische Linsen und speziell Kontaktlinsen, hergestellt werden.

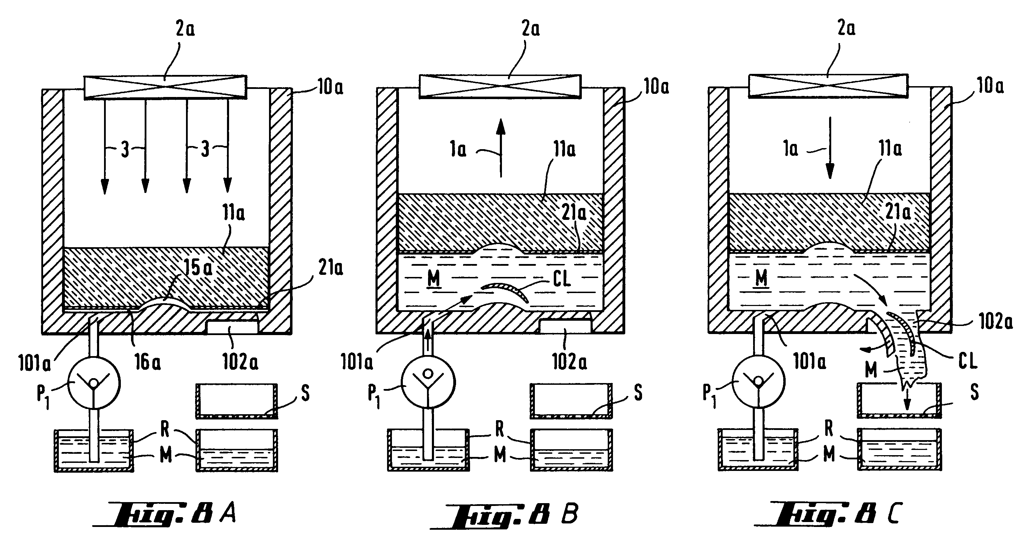

Das in den Fig. 6A-C gezeigte Ausführungsbeispiel der erfindungsgemässen Vorrichtung ist für die Herstellung von Kontaktlinsen aus einem flüssigen Ausgangsmaterial konzipiert, das z.B. durch UV-Strahlung polymerisiert bzw. vernetzt werden kann. In Fig. 6A erkennt man dabei die Form 1 in geschlossenem Zustand. Die Form 1 ist in einem Behälter 10 angeordnet, der mit unvernetztem flüssigem Ausgangsmaterial M gefüllt ist. Ferner umfasst die Vorrichtung eine Energiequelle in Form einer UV-Lichtquelle 2a sowie Mittel 2b, die die von der UV-Lichtquelle 2a bereitgestellte Energie in Form eines parallelen Strahlenbündels 3 auf die Form 1 richten. Diese Mittel 2a können insbesondere auch eine Blende umfassen, die zwischen der UV-Lichtquelle 2a und dem Behälter 10 angeordnet ist. Selbstverständlich können die UV-Lichtquelle 2a und die Mittel 2b zu einer einzigen Einheit zusammengefasst sein.

Die Form 1 umfasst zwei Formhälften 11 und 12, die je eine gekrümmte Formfläche 13 bzw. 14 aufweisen, welche zusammen eine Formkavität 15 definieren, die ihrerseits wiederum die Gestalt der herzustellenden Kontaktlinse CL bestimmt. Die Formfläche 13 der oberen Formhälfte 11 ist konkav und bestimmt die Vorderfläche mit dem daran anschliessenden Randbereich. Üblicherweise wird diese Formhälfte 11 als Mutterformhälfte bezeichnet. Die Formfläche 14 der unteren Formhälfte 12 ist konvex und bestimmt die Rück- oder Basisfläche der Kontaktlinse CL und den daran anschliessenden Randbereich derselben. Diese Formhälfte 12 wird üblicherweise als Vaterformhälfte bezeichnet.

Der Raum zwischen den beiden Formhälften 11 und 12 und damit auch die Formkavität 15 ist während des gesamten Herstellungsprozess in dem unvernetzten Ausgangsmaterial M angeordnet. Gemäss dem allgemeinen Erfindungsgedanken ist jedenfalls zumindest die Formkavität beim Befüllen vollständig in dem in unvernetztem Zustand befindlichen Ausgangsmaterial angeordnet. In Fig. 6B erkennt man, dass die obere Formhälfte 11 selbst in geöffnetem Zustand nicht ganz aus dem Ausgangsmaterial M herausragt, der Raum zwischen den Formhälften 11 und 12 bleibt immer unterhalb des Flüssigkeitsspiegels des im Behälter 10 befindlichen Ausgangsmaterials M. Somit steht der Raum zwischen den beiden Formhälften und insbesondere auch die Formkavität mit dem im Behälter 10 befindlichen Ausgangsmaterial M ständig in Verbindung. Es kann damit zu keinem Zeitpunkt Luft in den Raum zwischen den beiden Formhälften 11 und 12 gelangen.

Ist die Formkavität gefüllt und die Form geschlossen (Fig. 6A), wird sie mit UV-Strahlen 3 beaufschlagt und es wird so eine Vernetzung des Formkörpers erreicht.

Nach der Vernetzung wird die Form geöffnet und der Formkörper in Form der Kontaktlinse CL wird entformt, also von der Form abgenommen und aus der Form entnommen. In Fig. 6C ist zu diesem Zweck symbolisch die Greifeinrichtung 4 vorgesehen, die dann, wenn die obere Formhälfte abgehoben ist, die Kontaktlinse CL von der Vaterformhälfte 12 abnimmt (Fig. 6B) und sie aus der Form entfernt (Fig. 6C). Das Entformen und Entnehmen der Kontaktlinse bzw. der Formkörpers aus der Form kann aber auch auf andere Art und Weise erfolgen, wie anhand der anderen Ausführungsbeispiele noch erläutert wird. Nach dem Entnehmen der Kontaktlinse bzw. des Formkörpers kann die Form nun wieder geschlossen werden und eine neue Kontaktlinse CL hergestellt werden.

Da der gesamte Herstellungsvorgang gemäss Fig. 6A-C unterhalb des Flüssigkeitsspiegels des Ausgangsmaterials M im Behälter 10 stattfindet, kann keine Luft in den Raum zwischen den beiden Formhälften 11 und 12 und insbesondere nicht in die Formkavität 15 gelangen. Da das Öffnen und Schliessen der Form unterhalb des Flüssigkeitsspiegels stattfindet, kann auch die Form vergleichsweise schnell geschlossen werden, was bei den Verfahren bzw. Vorrichtungen gemäss dem Stand der Technik nicht möglich war. Es können somit Kontaktlinsen, die frei von irgendwelchen Lufteinschlüssen sind, effizient und mit geringem Aufwand hergestellt werden.

In dem in Fig. 6A-C gezeigten Ausführungsbeispiel wird zusätzlich die Beaufschlagung der Form mit UV-Strahlen auf das Material in der Formkavität 15 begrenzt, das heisst es wird nur das in der Formkavität 15 befindliche Material vernetzt. Insbesondere wird das Ausgangsmaterial in dem Ringspalt 16, der die Formkavität 15 umgibt, und das übrige im Behälter 10 befindliche Ausgangsmaterial M nicht mit Energie beaufschlagt und nicht vernetzt. Unter der Formkavität wird hier somit derjenige Hohlraum der geschlossenen Form verstanden, welcher durch die vollständige Kontur des herzustellenden Formkörpers, im speziellen also der Kontaktlinse CL, definiert ist. Der in die Formkavität mündende Ringspalt 16 gehört hier somit nicht zur Formkavität 15.

Für die praktische Realisierung ist gemäss Fig. 6A-C an der Formwand 17 im Bereich des Ringspalts 16 eine für die verwendete Energie, hier also UV-Licht, undurchlässige (oder wenigstens im Vergleich zur Durchlässigkeit der Form schlecht durchlässige) Maske 21 vorgesehen, welche sich bis unmittelbar an die Formkavität heran erstreckt und mit Ausnahme der Formkavität alle übrigen Teile, Hohlräume oder Flächen der Form, welche mit dem hier flüssigen unvernetzten, eventuell überschüssigen Material in Kontakt sind oder kommen können, gegenüber der eingestrahlten Energie abschirmt. Teilbereiche des Linsenrands werden nicht durch eine Begrenzung des Materials durch Formwände, sondern durch eine räumliche Begrenzung der die Polymerisation bzw. Vernetzung auslösenden Strahlung oder anderen Energie gebildet. Die Seitenwände der oberen Formhälfte sind ebenfalls mit der Maske 21 versehen, um zu verhindern, dass Ausgangsmaterial M, welches im Behälter 10 die Form umgibt, vernetzt wird.

Ein weiteres Ausführungsbeispiel der erfindungsgemässen Vorrichtung ist in den Fig. 7A-C dargestellt. Bei diesem Ausführungsbeispiel ist die eine Formhälfte, hier die Vaterformhälfte, durch eine Wand eines Behälters 10a, hier durch den Behälterboden 100a, gebildet. Am Behälterboden 100a ist also die Vaterformhälfte direkt ausgebildet. In dem Behälter 10a ist ein ferner ein kolbenartig verschiebbares Formteil 11a vorgesehen, welches von der ihm gegenüberliegenden Behälterwand, hier dem Behälterboden 100a, weg und wieder auf den Behälterboden zu entlang der Seitenwände des Behälters dichtend bewegbar ist. Auf diese Weise kann also die Form geöffnet und geschlossen werden. Das Formteil 11a ist auf seiner dem Behälterboden zugewandten Fläche 17a entsprechend als Mutterformhälfte ausgebildet.

Behälterboden 100a und Formfläche 17a definieren im geschlossenen Zustand der Form (Fig. 7A) die Formkavität 15a. Es ist selbstverständlich, dass das Formteil nicht unbedingt kolbenartig ausgebildet sein muss, ebensogut könnte auch eine Membran vorgesehen sein, an welcher die Formhälfte befestigt ist. Andere Formen der Volumenänderung sind ebenfalls denkbar.

In dem Behälter 10a, hier im Behälterboden 100a, ist ein Einlass 101a vorgesehen, durch den hinweg Ausgangsmaterial in den Raum zwischen das Formteil 11a und den Behälterboden 100a strömen kann. Der Raum zwischen dem Formteil 11a und dem Behälterboden 100a steht zu diesem Zweck ständig in Kontakt mit einem Reservoir R. Mit Hilfe von Pumpen P1 und P2 am Einlass 101a bzw. am Auslass 102a kann in den Raum zwischen Formteil 11a und Behälterboden 100a Ausgangsmaterial zugeführt bzw. abgeführt werden, wobei es wichtig ist, dass der Raum zwischen Formteil 11a und Behälterboden 100a stets mit Ausgangsmaterial M gefüllt ist, sodass keinerlei Luft in diesen Raum eindringen kann. Die Pumpen P1 und P2 sind mit einem integrierten Rückschlagventil dargestellt, es können aber auch Pumpen ohne integriertes Rückschlagventil verwendet werden und dieses kann gesondert zwischen Pumpe und Behälter geschaltet werden bzw. je nach Art der Pumpe kann auch ganz auf ein solches Rückschlagventil verzichtet werden.

Bei geschlossener Form (Fig. 7A) wird die Form mit Energie, hier wieder UV-Strahlung 3, beaufschlagt. Auch hier erfolgt beispielhaft die Beaufschlagung der Form mit Energie von oben. Dadurch wird die Vernetzung hervorgerufen. Anschliessend wird der vernetzte Formkörper CL von der Form abgehoben und aus der Form entfernt. Dazu wird zunächst mit Hilfe der Pumpe P1 durch den Einlass 101a flüssiges Ausgangsmaterial M in den Raum zwischen Behälterboden 100a und das Formteil 11a zugeführt, das kolbenartige Formteil 11a wird nach oben bewegt (Fig. 7B). Der Formkörper, hier in Form der Kontaktlinse CL, kann nun von der Form abgelöst und aus der Form entnommen werden. Dies kann beispielsweise mittels einer speziellen Greifeinrichtung erfolgen, wie dies schon anhand der Fig. 1 angedeutet worden ist. Die Kontaktlinse CL kann aber ebensogut aus der Form herausgespült werden, wie im folgenden noch genauer erläutert wird.

Das kolbenartig verschiebbare Formteil 11a wird anschliessend wieder abwärts bewegt und das zwischen dem Formteil 11a und dem Behälterboden 100a befindliche Material durch den Auslass 102a hindurch abgeführt (Fig. 7C). Das Abführen des Materials kann mittels der am Auslass vorgesehenen Pumpe P2 erfolgen.

Grundsätzlich ist es hier denkbar, dass das kolbenartig verschiebbare Formteil 11a nur durch das zwischen Formteil 11a und Behälterboden 100a zugeführte bzw. abgeführte flüssige Ausgangsmaterial angetrieben wird, sodass die Pumpen P1 und P2 die dafür notwendige Antriebsenergie bereitstellen. Es ist auch denkbar, dass gar keine Pumpen vorgesehen sind und das kolbenartig verschiebbare Formteil 11a mechanisch angetrieben wird, dass also bei der Aufwärtsbewegung Ausgangsmaterial angesaugt und bei der Abwärtsbewegung Ausgangsmaterial wieder herausgedrückt wird. Selbstverständlich sind auch Kombinationen mit Pumpen und einem mechanischen Antrieb möglich.

Auf dem Formteil 11a ist eine Maske 21a vorgesehen. Sie erstreckt sich, ähnlich wie bereits bei der oberen Formhälfte 11 in den Fig. 6A-C, über den Ringspalt 16a hinweg bis an die Formkavität 15a heran, sowie gegebenenfalls entlang den Seitenwänden des kolbenartig verschiebbaren Formteils 11a. Wird nun die Form mit UV-Strahlung 3 beaufschlagt, findet im Bereich der Formkavität 15a und nur dort eine Vernetzung und somit die Bildung des Formkörpers statt. Das Material in den übrigen Bereichen, insbesondere im Ringspalt 16a sowie anderes Ausgangsmaterial im Behälter 10a, werden nicht vernetzt. Für die Materialien sowie die Herstellung und Aufbringung solcher Masken gelten grundsätzlich die gleichen Betrachtungen, die schon anhand der Erläuterungen der Fig. 6A-C gemacht worden sind.

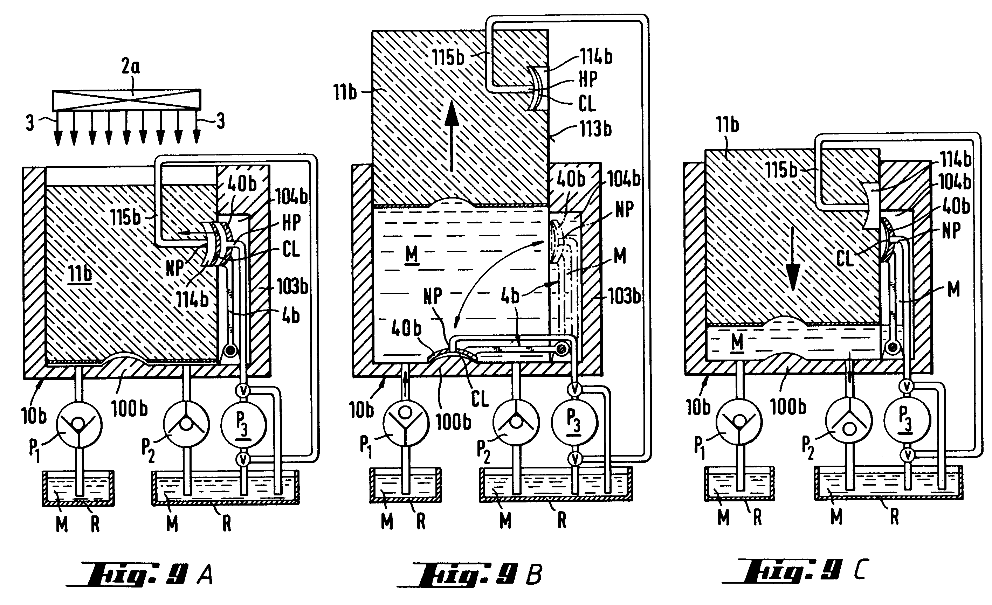

Die Fig. 8A-C zeigen ein Ausführungsbeispiel der Vorrichtung, welches im Prinzip dem Ausführungsbeispiel der Fig. 7A-C sehr ähnlich ist. Ein Unterschied ist jedoch, dass beim Ausführungsbeispiel gemäss Fig. 8A-C am Auslass 102a keine Pumpe P2 vorgesehen ist, sondern der Auslass 102a als verformbare Lasche bzw. Platte oder als Klappe ausgebildet ist. Bei der Erläuterung der Fig. 8A-C soll im folgenden vornehmlich auf das Entformen des Formkörpers, hier also der Kontaktlinse CL, eingegangen werden. Das Befüllen der Formkavität 15a erfolgt analog zu dem Ausführungsbeispiel gemäss Fig. 7A-C mittels der Pumpe P1. Ist die Form geschlossen (Fig. 8A), wird die Kontaktlinse CL durch Vernetzung mittels Beaufschlagung der Form mit UV-Strahlung 3 hergestellt.

Bei der Aufwärtsbewegung des kolbenartigen Formteils 11a (Fig. 8B) strömt flüssiges Ausgangsmaterial in den Behälter 10a zwischen den Behälterboden 100a und das kolbenartig verschiebbare Formteil 11a ein. Der Einlass 101a kann als Düse oder ähnlich wirkendes strömungserzeugendes Mittel ausgebildet sein. Beim Zuführen des flüssigen Ausgangsmaterials durch den Einlasss wird dann durch die erzeugte Strömung die vernetzte Kontaktlinse CL von der Form abgehoben und bei entsprechender Anordnung der Düse in Richtung zum Auslass 102a hin gespült. Dieser ist hier als verformbare Lasche bzw. Platte ausgebildet. Bei der Abwärtsbewegung des kolbenartigen Formteils 11a (Fig. 8C) wird durch den erzeugten Druck die Lasche nach unten verformt und gibt den Auslass 102a frei, sodass das flüssige Ausgangsmaterial mitsamt der Kontaktlinse CL durch den Auslass 102a herausgespült werden kann. Die Kontaktlinse kann in einem Sieb S aufgefangen werden, das für das flüssige Ausgangsmaterial durchlässig ist. Das Ausgangsmaterial kann beispielsweise rezykliert und wiederverwendet werden, gegebenenfalls nach einer Reinigung desselben. Während die Kontaktlinse herausgespült worden ist, ist die Formkavität 15a mit neuem Ausgangsmaterial befüllt worden, sodass durch Beaufschlagung mit UV-Strahlung 3 gleich eine neue Kontaktlinse CL vernetzt werden kann.

Vorstehend ist beschrieben, dass zum Abheben und Ausspülen flüssiges Ausgangsmaterial in den Behälter 10a zugeführt wird, im gleichen Zyklus die Formkavität 15a wieder befüllt und bei geschlossener Form zur Vernetzung und Herstellung der nächsten Kontaktlinse CL die Form wieder mit UV-Strahlung 3 beaufschlagt wird. Die Vorrichtung arbeitet also quasi als "Ein-Zyklus"-Vorrichtung. In jedem Zyklus (Auf- und Abwärtsbewegung des kolbenartigen Formteils 11a) wird nämlich eine Kontaktlinse hergestellt und aus der Form herausgespült.

Es ist aber auch denkbar, dass in einem ersten Zyklus ("Herstellungszyklus") die Herstellung der Kontaktlinse erfolgt, dass also das kolbenartige Formteil 11a aufwärts bewegt wird, flüssiges Ausgangsmaterial zwischen Formteil 11a und Behälterboden 100a strömt, und anschliessend das Formteil 11a wieder abwärts bewegt wird. Im geschlossenen Zustand wird die Form dann mit UV-Strahlung 3 beaufschlagt, wodurch eine Vernetzung erfolgt und damit die Kontaktlinse CL hergestellt wird. Nun kann in einem gesonderten zweiten Zyklus ("Spülzyklus") die Kontaktlinse aus der Form gespült werden, ohne dass in diesem zweiten Zyklus eine neue Kontaktlinse hergestellt wird, während bei der "Ein-Zyklus"-Vorrichtung wieder eine neue Kontaktlinse CL hergestellt wird. Zum Spülen kann daher bei der "Zwei-Zyklen"-Vorrichtung sowohl flüssiges Ausgangsmaterial verwendet werden, es kann aber insbesondere auch eine gesonderte Reinigungsflüssigkeit verwendet werden. Dies ist insofern von Vorteil, als dann während des Spülzyklus die Form von innen besonders gut gereinigt werden kann, bevor im nächsten Zyklus wieder Ausgangsmaterial einströmt und die nächste Kontaktlinse CL hergestellt wird. Bei dem Ausführungsbeispiel gemäss Fig. 8A-C ist also sowohl ein "Ein-Zyklus"-Betrieb (in jedem Zyklus wird eine Kontaktlinse hergestellt) als auch ein "Zwei-Zyklen"-Betrieb (im ersten Zyklus wird eine Kontaktlinse hergestellt, im zweiten Zyklus wird sie herausgespült und die Form gereinigt, ohne dass eine neue Kontaktlinse hergestellt wird) möglich.

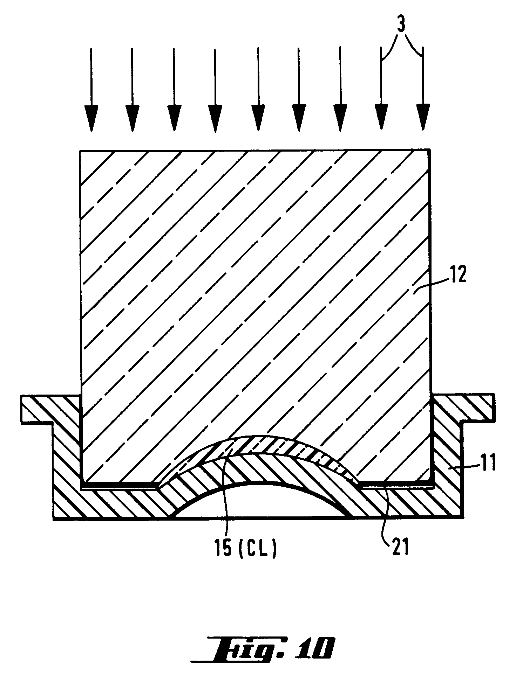

Ein weiteres Ausführungsbeispiel der erfindungsgemässen Vorrichtung ist in den Fig. 9A-C dargestellt. Dieses Ausführungsbeispiel ist im Prinzip auch ähnlich den anhand von Fig. 7A-C und Fig. 8A-C beschriebenen Ausführungsbeispielen, unterscheidet sich allerdings signifikant von diesen insofern, als es ein etwas anders ausgebildetes kolbenartig verschiebbares Formteil 11b umfasst. Ausserdem ist auch der Behälter 10b insofern signifikant anders ausgebildet, als in seiner einen Seitenwand 103b eine Ausbuchtung oder Nische 104b vorgesehen ist, die sich in Richtung der Bewegung des kolbenartigen Formteils 11b erstreckt. In dieser Nische 104b ist eine Greifeinrichtung 4b angeordnet. Das Formteil 11b weist auf seiner Aussenwand 113b genau in dem Bereich, in welchem die Nische 104b in der Seitenwand 103b des Behälters 11b vorgesehen ist, eine Einbuchtung 114b auf. Das Formteil 11b weist ferner einen Kanal 115b auf, der an eine Unterdruckquelle bzw. Überdruckquelle P3 anschliessbar ist. Die Greifeinrichtung 4b ist ebenfalls an diese Unterdruck- bzw. Überdruckquelle P3 anschliessbar.

Die Herstellung der Kontaktlinse CL durch Vernetzung mittels Beaufschlagung der Form mit UV-Strahlung 3a erfolgt wieder in der gleichen Art und Weise, wie dies schon anhand der Fig. 7A-C und der Fig. 8A-C beschrieben worden ist. Bei der Erläuterung der Fig. 9A-C soll daher vornehmlich auf die Art und Weise der Entformung der Kontaktlinse CL eingegangen werden. Bei geschlossener Form wird die Form wieder mit UV-Strahlung 3 beaufschlagt und durch Vernetzung die Kontaktlinse CL hergestellt (Fig. 9A). Anschliessend wird mittels der Pumpe P1 Ausgangsmaterial zwischen das Formteil 11b und den Behälterboden 100b gepumpt und das Formteil 11b nach oben bewegt (Fig. 9B). Nun wird die Greifeinrichtung 4b aus der Nische 104b heraus über die Kontaktlinse CL geschwenkt. Die Greifeinrichtung 4b weist in ihrem Greiferteller 40b eine Bohrung auf, durch die nun mittels der Unterdruckquelle P3 Unterdruck appliziert wird, so dass die Kontaktlinse CL abgehoben und gegen den Greiferteller 40b gesaugt wird. Ist die Kontaktlinse CL am Greiferteller 40b angesaugt, wird die Greifeinrichtung 4b wieder in die Nische 104b zurückgeschwenkt und das Formteil 11b wieder abwärts bewegt. Dabei wird das zwischen Formteil 11b und Behälterboden 100b befindliche flüssige Ausgangsmaterial mittels der Pumpe P2 abgesaugt (Fig. 9C).

Die in der Nische 104b befindliche Greifeinrichtung 4b gleitet dabei entweder an der Aussenwand 113b der Formteils 11b entlang oder wird in der Nische 104b gehalten, bis sich der Greiferteller 40b gegenüber der Einbuchtung 114b auf der Aussenwand des Formteils 11b befindet. Zu diesem Zeitpunkt wird durch die Bohrung im Greiferteller 40b Überdruck appliziert, so dass sich die Kontaktlinse CL vom Greiferteller 40b löst und in die Einbuchtung 114b abgelegt wird. Durch den zur Einbuchtung 114b führenden Kanal 115b wird nämlich zum gleichen Zeitpunkt, zu dem die Kontaktlinse CL vom Greiferteller 40b abgelöst wird, Unterdruck appliziert, so dass die Kontaktlinse CL vom Greiferteller 40b weg einfach in die Einbuchtung 114b hinein abgelegt wird (Fig. 9A).

Wenn das Formteil 11b nach oben bewegt worden ist, befindet sich die Einbuchtung 114b des Formteils 11b ausserhalb des Behälters 10b (Fig. 9B). Wird nun durch den Kanal 115b hindurch Überdruck appliziert, so löst sich die Kontaktlinse CL aus der Einbuchtung 114b heraus ab und kann der weiteren Verarbeitung zugeführt werden. Hierzu ist speziell zu bemerken, dass die Seitenwand 103b sich auch noch weiter nach oben erstrecken kann und eine weitere Nische aufweisen kann, in die hinein die Kontaktlinse CL abgelegt bzw. hineingespült werden kann. Dadurch wird eine noch bessere Führung der Formteils 11b und eine Schonung seiner entsprechenden dichtenden Flächen, die an der Behälterwand entlang gleiten, erreicht.

Zur Applikation von Überdruck oder Unterdruck ist in den Fig. 9A-C die Pumpe P3 vorgesehen, deren Überdruckanschluss HP bzw. Unterdruckanschluss NP je nach der Stellung des kolbenartig verschiebbaren Formteils mit dem Kanal 115b bzw. mit der Bohrung im Greiferteller 40b verbunden ist. Diese Pumpe P3 kann aus dem Reservoir R, in welchem Ausgangsmaterial bereitgestellt wird, Ausgangsmaterial ansaugen, mit dem der erforderliche Druck erzeugt wird. In den Fig. 9A-C sind am Einlass 101b und am Auslass 102b zwei getrennte Reservoirs dargestellt, in die die Pumpen P1 bzw. P2 und P3 hineinragen, es ist aber selbstverständlich, dass es auch möglich ist, dass es sich hierbei um ein und dasselbe Reservoir handelt.

Es soll an dieser Stelle noch angemerkt werden, dass auch das Ausführungsbeispiel gemäss Fig. 9A-C sowohl als "Ein-Zyklus"-Vorrichtung, wie auch als "Zwei-Zyklen"-Vorrichtung arbeiten kann. Allerdings muss bei der "Ein-Zyklus"-Vorrichtung gewährleistet sein, dass immer nur Ausgangsmaterial in den Behälter 10b einströmt. Bei der "Zwei-Zyklen"-Vorrichtung hingegen kann im zweiten Zyklus, in welchem dann auch die Kontaktlinse CL entnommen wird, eine Reinigungsflüssigkeit zugeführt werden.

Des weiteren ist es klar, dass die anhand der Figuren erläuterte Vorrichtung auch anstelle von nur einer Kavität auch mehrere Kavitäten umfassen kann, so dass mehrere Kontaktlinsen während eines Zyklus gleichzeitig hergestellt werden können. Diese Variante ist besonders effizient.

Ausserdem kann bei den Varianten mit dem kolbenartigen Formteil gezielt eine Durchflusssteuerung derart erfolgen, dass zunächst das kolbenartige Formteil mechanisch mit Kraft baufschlagt wird und das Ausgangsmaterial beim Zuführen ein wenig verzögert in den Behälter freigegeben wird bzw. beim Abführen ein wenig verzögert aus dem Behälter hinaus freigegeben wird. Dies gilt auch für die Variante, bei der sowohl Pumpen verwendet und der Kolben mechanisch angetrieben wird. Mit dieser Massnahme kann beim Zuführen gezielt ein Unterdruck bzw. beim Abführen gezielt ein Überdruck in dem Behälter erzeugt werden bzw. der Druck im Behälter kann so generell beeinflusst werden.

Es ist ferner auch eine Variante denkbar, bei welcher die Anzahl der Zyklen, nach der jeweils eine neue Kontaktlinse hergestellt wird, variabel ist. Beispielsweise kann ein Sensor detektieren, ob eine Kontaktlinse aus der Form auch tatsächlich herausgespült worden ist und nur dann, wenn der Sensor eine solche herausgespülte Kontaktlinse detektiert hat, wird die Form vollständig geschlossen und eine neue Kontaktlinse wird hergestellt. Hat der Sensor keine herausgespülte Kontaktlinse detektiert, so wird die Form so lange weiter gespült, bis die Kontaktlinse aus der Form herausgespült worden ist.

Für Kontaktlinsen ist als Ausgangsmaterial, das durch Bestrahlung mit UV-Licht vernetzt werden kann, beispielsweise das für diese Zwecke vielfach verwendete HEMA (Hydroxyethylmethacrylat) oder poly-HEMA, insbesondere im Gemisch mit einem geeigneten Vernetzer wie beispielsweise Ethylenglykoldimethacrylat einsetzbar. Für andere Formkörper kommen je nach Einsatzzweck eventuell andere vernetzbare Materialien zur Anwendung, wobei für die Auslösung der Vernetzung je nach Art des vernetzbaren Materials grundsätzlich auch andere Energieformen, z.B. Elektronenstrahlung, Gamma-Strahlung, thermische Energie etc. möglich sind. Bei der Herstellung von Kontaktlinsen sind unter UV-Licht vernetzbare Ausgangsmaterialien allgemein üblich, jedoch nicht zwingend.

Als Ausgangsmaterial kommen gemäss einem weiteren Aspekt der Erfindung spezielle Präpolymere in Frage, insbesondere solche auf der Grundlage von Polyvinylalkohol, die cyclische Acetalgruppen und vernetzbare Gruppen enthalten.

Kontaktlinsen auf der Grundlage von Polyvinylalkohol sind bereits bekannt. So werden z.B. in der EP 216,074 Kontaktlinsen offenbart, die Polyvinylalkohol enthalten, der über Urethangruppen gebundene (Meth)acryloylgruppen aufweist. In der EP 189,375 sind Kontaktlinsen aus mit Polyepoxiden vernetztem Polyvinylalkohol beschrieben.

Ferner sind auch einige spezielle Acetale bereits bekannt, die vernetzbare Gruppen enthalten. In diesem Zusammenhang wird beispielsweise auf die EP 201,693, auf die EP 215,245 und auf die EP 211,432 verwiesen. In der EP 201,693 werden unter anderem Acetale von unverzweigten Aldehyden mit 2 bis 11 Kohlenstoffatomen beschrieben, die endständig eine Aminogruppe tragen, welche Aminogruppe mit einem C₃-C₂₄-olefinisch ungesättigten organischen Radikal substituiert ist. Dieses organische Radikal weist eine Funktionalität auf, die vom Stickstoffatom Elektronen abzieht, ferner ist die olefinisch ungesättigte Funktionalität polymerisierbar. In der EP 201,693 werden auch Reaktionsprodukte von den vorstehend charakterisierten Acetalen mit einem 1,2-Diol, einem 1,3-Diol, einem Polyvinylalkohol oder einer Cellulose beansprucht. Jedoch sind derartige Produkte nicht konkret beschrieben.

Wenn eines der Acetale gemäss EP 201,693 überhaupt im Zusammenhang mit z.B. Polyvinylalkohol erwähnt wird, wie dies u.a. in Beispiel 17 jener Patentanmeldung der Fall ist, dann wird das über seine olefinische Gruppe polymerisierbare Acetal zuerst mit beispielsweise Vinylacetat copolymerisiert. Das so erhaltene Copolymer wird danach mit Polyvinylalkohol umgesetzt, und es wird eine 37 % Feststoffe enthaltende Emulsion mit einem pH von 5,43 und einer Viskosität von 11640 cps erhalten.

Demgegenüber ist die vorliegende Erfindung auf Präpolymere gerichtet, die ein 1,3-Diol-Grundgerüst enthalten, wobei ein gewisser Prozentsatz der 1,3-Diol-Einheiten zu einem 1,3-Dioxan modifiziert ist, das in 2-Position einen polymerisierbaren aber nicht polymerisierten Rest aufweist. Der polymerisierbare Rest ist insbesondere ein Aminoalkylrest, an dessen Stickstoffatom eine polymerisierbare Gruppe gebunden ist. Die vorliegende Erfindung betrifft ebenfalls vernetzte Homo- oder Copolymere der genannten Präpolymere, Verfahren zur Herstellung der neuen Präpolymere und der daraus erhältlichen Homo- und Copolymere, Formkörper aus den genannten Homo- oder Copolymeren, insbesondere Kontaktlinsen aus diesen Homo- oder Copolymeren und Verfahren zur Herstellung von Kontaktlinsen unter Verwendung der genannten Homo- oder Copolymere.

Bei dem erfindungsgemässen Präpolymer handelt es sich vorzugsweise um ein Derivat eines Polyvinylalkohols mit einem Molekulargewicht von mindestens etwa 2000, das von etwa 0,5 bis etwa 80 %, bezogen auf die Anzahl Hydroxylgruppen des Polyvinylalkohols, Einheiten der Formel I enthält, 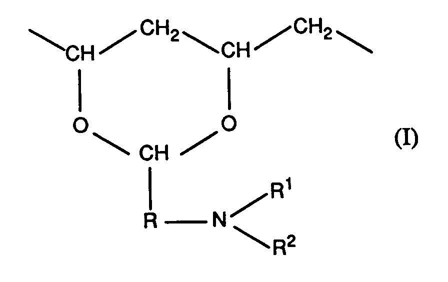 worin R für Niederalkylen mit bis zu 8 Kohlenstoffatomen steht, R¹ für Wasserstoff oder Niederalkyl steht und R² einen olefinisch ungesättigten, elektronenziehenden, copolymerisierbaren Rest mit vorzugsweise bis zu 25 Kohlenstoffatomen bedeutet.

R² steht beispielsweise für einen olefinisch ungesättigten Acylrest der Formel R³-CO-, worin R³ einen olefinisch ungesättigten copolymerisierbaren Rest mit 2 bis 24 Kohlenstoffatomen, bevorzugt mit 2 bis 8 Kohlenstoffatomen, besonders bevorzugt mit 2 bis 4 Kohlenstoffatomen, bedeutet. In einer anderen Ausführungsform steht der Rest R² für einen Rest der Formel II

-CO-NH-(R⁴-NH-CO-O)_{q}-R⁵-O-CO-R³ (II)

worin q für Null oder eins steht und R⁴ und R⁵ unabhängig voneinander Niederalkylen mit 2 bis 8 Kohlenstoffatomen, Arylen mit 6 bis 12 Kohlenstoffatomen, eine gesättigte bivalente cycloaliphatische Gruppe mit 6 bis 10 Kohlenstoffatomen, Arylenalkylen oder Alkylenarylen mit 7 bis 14 Kohlenstoffatomen oder Arylenalkylenarylen mit 13 bis 16 Kohlenstoffatomen bedeuten und worin R³ die vorstehend angegebene Bedeutung hat.

Bei dem erfindungsgemässen Präpolymer handelt es sich daher insbesondere um ein Derivat eines Polyvinylalkohols mit einem Molekulargewicht von mindestens etwa 2000, das von etwa 0,5 bis etwa 80 %, bezogen auf die Anzahl Hydroxylgruppen des Polyvinylalkohols, Einheiten der Formel III enthält, 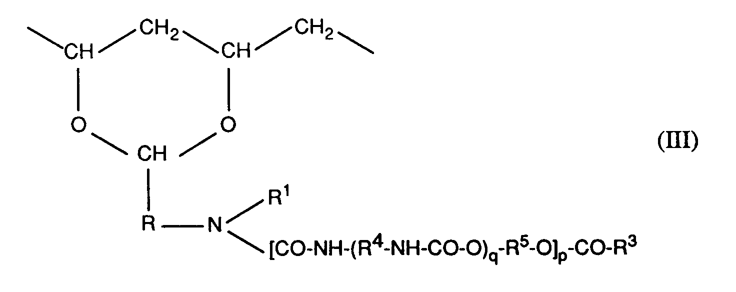 worin R für Niederalkylen steht, R¹ für Wasserstoff oder Niederalkyl steht, p den Wert Null oder eins aufweist, q den Wert Null oder eins aufweist, R³ einen olefinisch ungesättigten copolymerisierbaren Rest mit 2 bis 8 Kohlenstoffatomen bedeutet und R⁴ und R⁵ unabhängig voneinander Niederalkylen mit 2 bis 8 Kohlenstoffatomen, Arylen mit 6 bis 12 Kohlenstoffatomen, eine gesättigte bivalente cycloaliphatische Gruppe mit 6 bis 10 Kohlenstoffatomen, Arylenalkylen oder Alkylenarylen mit 7 bis 14 Kohlenstoffatomen oder Arylenalkylenarylen mit 13 bis 16 Kohlenstoffatomen bedeuten.

Niederalkylen R weist vorzugsweise bis zu 8 Kohlenstoffatome auf und kann geradkettig oder verzweigt sein. Geignete Beispiele umfassen Octylen, Hexylen, Pentylen, Butylen, Propylen, Ethylen, Methylen, 2-Propylen, 2-Butylen oder 3-Pentylen. Vorzugsweise weist Niederalkylen R bis zu 6 und besonders bevorzugt bis zu 4 Kohlenstoffatome auf. Besonders bevorzugt sind die Bedeutungen Methylen und Butylen.

R¹ bedeutet vorzugsweise Wasserstoff oder Niederalkyl mit bis zu sieben, insbesondere bis zu vier Kohlenstoffatomen, insbesondere Wasserstoff.

Niederalkylen R⁴ oder R⁵ weist vorzugsweise 2 bis 6 Kohlenstoffatome auf und ist insbesondere geradkettig. Geeignete Beispiele umfassen Propylen, Butylen, Hexylen, Dimethylethylen und, besonders bevorzugt, Ethylen.

Arylen R⁴ oder R⁵ ist vorzugsweise Phenylen, das unsubstituiert oder durch Niederalkyl oder Niederalkoxy substituiert ist, insbesondere 1,3-Phenylen oder 1,4-Phenylen oder Methyl-1,4-phenylen.

Eine gesättigte bivalente cycloaliphatische Gruppe R⁴ oder R⁵ ist vorzugsweise Cyclohexylen oder Cyclohexylen-niederalkylen, z.B. Cyclohexylenmethylen, die unsubstituiert ist oder substituiert durch eine oder mehrere Methylgruppen, wie beispielsweise Trimethylcyclohexylenmethylen, z.B. der bivalente Isophoronrest.

Die Aryleneinheit von Alkylenarylen oder Arylenalkylen R⁴ oder R⁵ ist vorzugsweise Phenylen, unsubstituiert oder durch Niederalkyl oder Niederalkoxy substituiert, die Alkyleneinheit davon ist vorzugsweise Niederalkylen, wie Methylen oder Ethylen, insbesondere Methylen. Vorzugsweise sind derartige Reste R⁴ oder R⁵ daher Phenylenmethylen oder Methylenphenylen.

Arylenalkylenarylen R⁴ oder R⁵ ist vorzugsweise Phenylen-niederalkylen-phenylen mit bis zu 4 Kohlenstoffatomen in der Alkyleneinheit, z.B. Phenylenethylenphenylen.

Die Reste R⁴ und R⁵ bedeuten unabhängig voneinander vorzugsweise Niederalkylen mit 2 bis 6 Kohlenstoffatomen, Phenylen, unsubstituiert oder durch Niederalkyl substituiert, Cyclohexylen oder Cyclohexylen-niederalkylen, unsubstituiert oder durch Niederalkyl substituiert, Phenylen-niederalkylen, Niederalkylen-phenylen oder Phenylen-niederalkylen-phenylen.

Der Begriff "nieder" bedeutet im Rahmen dieser Erfindung im Zusammenhang mit Resten und Verbindungen, soweit er nicht abweichend definiert ist, Reste oder Verbindungen mit bis zu 7 Kohlenstoffatomen, vorzugsweise mit bis zu 4 Kohlenstoffatomen.

Niederalkyl weist insbesondere bis zu 7 Kohlenstoffatome auf, vorzugsweise bis zu 4 Kohlenstoffatome, und ist z.B. Methyl, Ethyl, Propyl, Butyl oder tert.-Butyl.

Niederalkoxy weist insbesondere bis zu 7 Kohlenstoffatome auf, vorzugsweise bis zu 4 Kohlenstoffatome, und ist z.B. Methoxy, Ethoxy, Propoxy, Butoxy oder tert.-Butoxy.

Der olefinisch ungesättigte copolymerisierbare Rest R³ mit 2 bis 24 Kohlenstoffatomen bedeutet vorzugsweise Alkenyl mit 2 bis 24 Kohlenstoffatomen, insbesondere Alkenyl mit 2 bis 8 Kohlenstoffatomen und besonders bevorzugt Alkenyl mit 2 bis 4 Kohlenstoffatomen, beispielsweise Ethenyl, 2-Propenyl, 3-Propenyl, 2-Butenyl, Hexenyl, Octenyl oder Dodecenyl. Bevorzugt sind die Bedeutungen Ethenyl und 2-Propenyl, so dass die Gruppe -CO-R³ für den Acylrest der Acrylsäure oder Methacrylsäure steht.

Die bivalente Gruppe -R⁴-NH-CO-O- ist vorhanden, wenn q für eins steht und abwesend, wenn q für Null steht. Präpolymere, in denen q für Null steht, sind bevorzugt.

Die bivalente Gruppe -CO-NH-(R⁴-NH-CO-O)_{q}-R⁵-O- ist vorhanden, wenn p für eins steht und abwesend, wenn p für Null steht. Präpolymere, in denen p für Null steht, sind bevorzugt.

In den Präpolymeren, in denen p für eins steht, bedeutet der Index q vorzugweise Null. Insbesondere sind Präpolymere bevorzugt, in denen p für eins steht, der Index q Null bedeutet und R⁵ für Niederalkylen steht.

Bei einem bevorzugten erfindungsgemässen Präpolymer handelt es sich daher insbesondere um ein Derivat eines Polyvinylalkohols mit einem Molekulargewicht von mindestens etwa 2000, das von etwa 0,5 bis etwa 80 %, bezogen auf die Anzahl Hydroxylgruppen des Polyvinylalkohols, Einheiten der Formel III enthält, worin R für Niederalkylen mit bis zu 6 Kohlenstoffatomen steht, p Null bedeutet und R³ Alkenyl mit 2 bis 8 Kohlenstoffatomen bedeutet.

Bei einem weiteren bevorzugten erfindungsgemässen Präpolymer handelt es sich daher insbesondere um ein Derivat eines Polyvinylalkohols mit einem Molekulargewicht von mindestens etwa 2000, das von etwa 0,5 bis etwa 80 %, bezogen auf die Anzahl Hydroxylgruppen des Polyvinylalkohols, Einheiten der Formel III enthält, worin R für Niederalkylen mit bis zu 6 Kohlenstoffatomen steht, p eins bedeutet, q Null bedeutet, R⁵ für Niederalkylen mit 2 bis 6 Kohlenstoffatomen steht und R³ Alkenyl mit 2 bis 8 Kohlenstoffatomen bedeutet.

Bei einem weiteren bevorzugten erfindungsgemässen Präpolymer handelt es sich daher insbesondere um ein Derivat eines Polyvinylalkohols mit einem Molekulargewicht von mindestens etwa 2000, das von etwa 0,5 bis etwa 80 %, bezogen auf die Anzahl Hydroxylgruppen des Polyvinylalkohols, Einheiten der Formel III enthält, worin R für Niederalkylen mit bis zu 6 Kohlenstoffatomen steht, p eins bedeutet, q eins bedeutet, R⁴ für Niederalkylen mit 2 bis 6 Kohlenstoffatomen, Phenylen, unsubstituiert oder durch Niederalkyl substituiert, Cyclohexylen oder Cyclohexylen-niederalkylen, unsubstituiert oder durch Niederalkyl substituiert, Phenylen-niederalkylen, Niederalkylen-phenylen oder Phenylen-niederalkylen-phenylen steht, R⁵ für Niederalkylen mit 2 bis 6 Kohlenstoffatomen steht und R³ Alkenyl mit 2 bis 8 Kohlenstoffatomen bedeutet.

Die erfindungsgemässen Präpolymere sind Derivate von Polyvinylalkohol mit einem Molekulargewicht von mindestens etwa 2000, das von etwa 0,5 bis etwa 80 %, bezogen auf die Anzahl Hydroxylgruppen des Polyvinylalkohols, Einheiten der Formel III enthält, insbesondere etwa 1 bis 50 %, weiter bevorzugt etwa 1 bis 25 %, bevorzugt etwa 2 bis 15 % und besonders bevorzugt etwa 3 bis 10 %. Erfindungsgemässe Präpolymere, die zur Herstellung von Kontaktlinsen vorgesehen sind, enthalten insbesondere von etwa 0,5 bis etwa 25 %, bezogen auf Anzahl Hydroxylgruppen des Polyvinylalkohols, Einheiten der Formel III, insbesondere etwa 1 bis 15 % und besonders bevorzugt etwa 2 bis 12 %.

Polyvinylalkohole, die erfindungsgemäss derivatisiert werden können, haben vorzugsweise ein Molekulargewicht von mindestens 10000. Als Obergrenze können die Polyvinylalkohole ein Molekulargewicht von bis zu 1000000 aufweisen. Vorzugsweise haben die Polyvinylalkohole ein Molekulargewicht von bis zu 300000, insbesondere von bis zu etwa 100000 und ganz besonders bevorzugt von bis zu etwa 50000.

Ueblicherweise weisen erfindungsgemäss geeignete Polyvinylalkohole hauptsächlich eine Poly(2-hydroxy)ethylen - Struktur auf. Die erfindungsgemäss derivatisierten Polyvinylalkohole können jedoch auch Hydroxygruppen in Form von 1,2-Glykolen aufweisen, wie Copolymereinheiten von 1,2-Dihydroxyethylen, wie sie beispielsweise durch alkalische Hydrolyse von Vinylacetat-Vinylencarbonat-Copolymeren erhalten werden können.

Darüberhinaus können die erfindungsgemäss derivatisierten Polyvinylalkohole auch geringe Anteile, beispielsweise bis zu 20 %, vorzugsweise bis zu 5 %, von Copolymereinheiten von Ethylen, Propylen, Acrylamid, Methacrylamid, Dimethacrylamid, Hydroxyethylmethacrylat, Methylmethacrylat, Methylacrylat, Ethylacrylat, Vinylpyrrolidon, Hydroxyethylacrylat, Allylalkohol, Styrol oder ähnlichen üblicherweise verwendeten Comonomeren enthalten.

Es können handelsübliche Polyvinylalkohole verwendet werden, wie z.B. Vinol® 107 der Firma Air Products (MW = 22000 bis 31000, 98 - 98,8 % hydrolysiert), Polysciences 4397 (MW = 25000, 98,5 % hydrolysiert), BF 14 von Chan Chun, Elvanol® 90 - 50 von DuPont, UF-120 von Unitika, Moviol® 4-88, 10-98 und 20-98 von Hoechst. Andere Hersteller sind z.B. Nippon Gohsei (Gohsenol®), Monsanto (Gelvatol®), Wacker (Polyviol®) oder die japanischen Hersteller Kuraray, Denki und Shin-Etsu.

Wie bereits erwähnt, können auch Copolymere von hydrolysiertem Vinylacetat verwendet werden, die beispielsweise als hydrolysiertes Ethylen-vinylacetat (EVA) erhältlich sind, oder Vinylchlorid-Vinylacetat, N-Vinylpyrrolidon-Vinylacetat und Maleinsäureanhydrid-Vinylacetat.

Polyvinylalkohol wird üblicherweise durch Hydrolyse des entsprechenden homopolymeren Polyvinylacetat hergestellt. In einer bevorzugten Ausführungsform enthält der erfindungsgemäss derivatisierte Polyvinylalkohol weniger als 50 % Polyvinylacetat-Einheiten, insbesondere weniger als 20 % Polyvinylacetat-Einheiten.

Die Verbindungen enthaltend Einheiten der Formel III können auf an sich bekannte Weise hergestellt werden. Beispielsweise kann ein Polyvinylalkohol mit einem Molekulargewicht von mindestens etwa 2000, der Einheiten der Formel IV enthält

-CH(OH)-CH₂- (IV)

mit etwa 0,5 bis 80 %, bezogen auf die Anzahl von Hydroxylgruppen der Verbindung der Formel IV, zu einer Verbindung der Formel (V) 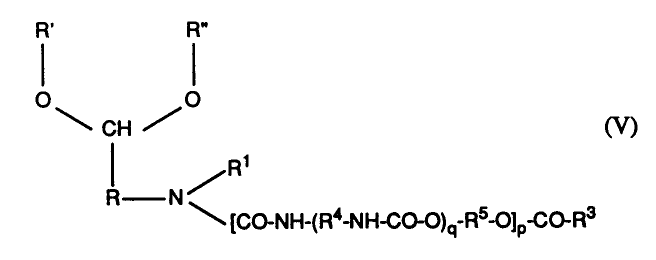 worin R' und R'' unabhängig voneinander Wasserstoff, Niederalkyl oder Niederalkanoyl, wie Acetyl oder Propionyl, bedeuten und die anderen Variablen die für Formel III angegebene Bedeutung aufweisen, umgesetzt werden, insbesondere in saurem Medium.

Alternativ dazu kann ein Polyvinylalkohol mit einem Molekulargewicht von mindestens etwa 2000, der Einheiten der Formel IV enthält mit einer Verbindung der Formel VI 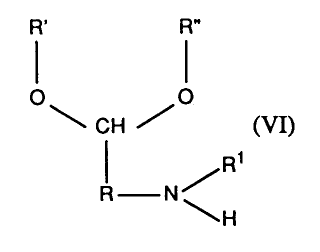 umgesetzt werden, worin die Variablen wie für die Verbindung der Formel V definiert sind, insbesondere unter sauren Bedingungen, und das auf diese Weise erhältliche cyclische Acetal anschliessend mit einer Verbindung der Formel VII umgesetzt werden

OCN-(R⁴-NH-CO-O)_{q}-R⁵-O-CO-R³ (VII)

worin die Variablen wie für die Verbindung der Formel V definiert sind.

Alternativ dazu kann das Reaktionsprodukt aus einer Verbindung der Formel IV und einer Verbindung der Formel VI wie vorstehend beschrieben erhältliche Produkt mit einer Verbindung der Formel (VIII)

X-CO-R³ (VIII)

umgesetzt werden, worin R³ z.B. Alkenyl mit 2 bis 8 Kohlenstoffatomen bedeutet und X für eine reaktionsfähige Gruppe steht, z.B. für verethertes oder verestertes Hydroxy, z.B. für Halogen, insbesondere für Chlor.

Verbindungen der Formel V, in denen p für Null steht, sind z.B. aus der EP 201,693 bekannt. Auch Verbindungen der Formel VI sind dort beschrieben. Verbindungen der Formel VII sind an sich bekannt oder lassen sich auf an sich bekannte Weise herstellen. Ein Beispiel für eine Verbindung der Formel VII, in der q für Null steht, ist Isocyanatoethylmethacrylat. Ein Beispiel für eine Verbindung der Formel VII, in der q für eins steht, ist das Reaktionsprodukt von Isophorondiisocyanat mit 0,5 Aequivalenten Hydroxyethylmethacrylat. Verbindungen der Formel VIII sind an sich bekannt, ein typischer Vertreter ist das Methacryloylchlorid. Verbindungen der Formel V, in denen p und / oder q für 1 stehen, lassen sich aus den vorstehend erwähnten Verbindungen auf an sich bekannte Weise herstellen, z.B. durch Umsetzung einer Verbindung der Formel VI mit Isocyanatoethylmethacrylat oder durch Umsetzung einer Verbindung der Formel VI mit Isophorondiisocyanat, das zuvor mit 0,5 Aequivalenten Hydroxyethylmethacrylat terminiert wurde.

Ueberraschenderweise sind die Präpolymere der Formel I bzw. III ausserordentlich stabil. Dies ist für den Fachmann unerwartet, weil beispielsweise höherfunktionelle Acrylate üblicherweise stabilisiert werden müssen. Werden derartige Verbindungen nicht stabilisiert, tritt üblicherweise rasche Polymerisation ein. Eine spontane Vernetzung durch Homopolymerisation findet jedoch mit den erfindungsgemässen Präpolymeren nicht statt. Die Präpolymere der Formel I bzw. III lassen sich darüber hinaus auf an sich bekannte Weise reinigen, beispielsweise durch Fällen mit Aceton, Dialyse oder Ultrafiltration, wobei die Ultrafiltration besonders bevorzugt ist. Durch diesen Reinigungsvorgang können die Präpolymere der Formel I bzw. III in äusserst reiner Form, z.B. als aufkonzentrierte wässrige Lösungen erhalten werden, die frei oder zumindest im wesentlichen frei sind von Reaktionsprodukten, wie Salzen, und von Ausgangsstoffen, wie z.B. Verbindungen der Formel V oder anderen nicht-polymeren Bestandteilen.

Das bevorzugte Reinigungsverfahren der erfindungsgemässen Präpolymere, eine Ultrafiltration, kann auf an sich bekannte Weise durchgeführt werden. Dabei besteht die Möglichkeit, die Ultrafiltration wiederholt durchzuführen, beispielsweise zwei-bis zehnmal. Alternativ dazu kann die Ultrafiltration auch kontinuierlich durchgeführt werden, bis der gewünschte Reinheitsgrad erreicht ist. Der gewünschte Reinheitsgrad kann grundsätzlich beliebig hoch gewählt werden. Ein geeignetes Mass für den Reinheitsgrad ist z.B. der Kochsalzgehalt der Lösung, der sich auf bekannte Weise einfach ermitteln lässt.

Die erfindungsgemässen Präpolymere der Formel I bzw. III sind andererseits auf äusserst effektive Weise und gezielt vernetzbar, insbesondere durch Photovernetzung.

Bei der Photovernetzung wird geeigneterweise ein Photoinitiator zugesetzt, der eine radikalische Vernetzung initiieren kann. Beispiele hierfür sind dem Fachmann geläufig, speziell können als geeignete Photoinitiatoren Benzoinmethylether, 1-Hydroxycyclohexylphenylketon, Daracure 1173 oder Irgacure-Typen genannt werden. Die Vernetzung kann dann durch aktinische Strahlung, wie z.B. UV-Licht, oder ionisierende Strahlung, wie z.B. Gammastrahlung oder Röntgenstrahlung, ausgelöst werden.

Die Photopolymerisation wird geeigneterweise in einem Lösungsmittel durchgeführt. Als Lösungsmittel sind grundsätzlich alle Lösungsmittel geeignet, die Polyvinylalkohol und die gegebenenfalls zusätzlich verwendeten vinylischen Comonomere lösen, z.B. Wasser, Alkohole wie Niederalkanole, z.B. Ethanol oder Methanol, ferner Carbonsäureamide, wie Dimethylformamid, oder Dimethylsulfoxid, ebenso Gemische von geeigneten Lösungsmitteln, wie z.B. Gemische von Wasser mit einem Alkohol, wie z.B. ein Wasser / Ethanol- oder ein Wasser / Methanol-Gemisch.

Die Photovernetzung erfolgt vorzugsweise unmittelbar aus einer wässrigen Lösung der erfindungsgemässen Präpolymere heraus, die als Resultat des bevorzugten Reinigungsschrittes, einer Ultrafiltration, erhalten werden kann, gegebenenfalls nach Zusatz eines zusätzlichen vinylischen Comonomeren. Beispielsweise kann die Photovernetzung einer etwa 15 bis 40 %-igen wässrigen Lösung vorgenommen werden.

Das Verfahren zur Herstellung der erfindungsgemässen Polymere lässt sich beispielsweise dadurch charakterisieren, dass man ein Präpolymer enthaltend Einheiten der Formel I bzw. III, insbesondere in im wesentlichen reiner Form, d.h. zum Beispiel nach ein- oder mehrmaliger Ultrafiltration, vorzugsweise in Lösung, insbesondere in wässriger Lösung, in Abwesenheit oder Anwesenheit eines zusätzlichen vinylischen Comonomeren, photovernetzt.

Das vinylische Comonomer, das erfindungsgemäss bei der Photovernetzung zusätzlich verwendet werden kann, kann hydrophil, hydrophob oder ein Gemisch eines hydrophoben und eines hydrophilen vinylischen Monomeren sein. Geeignete vinylische Monomere umfassen insbesondere diejenigen, die üblicherweise bei der Herstellung von Kontaktlinsen verwendet werden. Unter einem hydrophilen vinylischen Monomeren wird ein Monomer verstanden, das als Homopolymer typischerweise ein Polymer ergibt, das wasserlöslich ist oder mindestens 10 Gewichtsprozent Wasser absorbieren kann. Analog wird unter einem hydrophoben vinylischen Monomeren ein Monomer verstanden, das als Homopolymer typischerweise ein Polymer ergibt, das wasserunlöslich ist und weniger als 10 Gewichtsprozent Wasser absorbieren kann.

Im allgemeinen reagieren zwischen etwa 0,01 und 80 Einheiten eines typischen vinylischen Comonomeren pro Einheit der Formel I bzw. III.

Falls ein vinylisches Comonomer verwendet wird, enthalten die vernetzten erfindungsgemässen Polymere vorzugsweise zwischen etwa 1 und 15 Prozent, besonders bevorzugt zwischen etwa 3 und 8 Prozent, Einheiten der Formel I bzw. III, bezogen auf die Anzahl von Hydroxylgruppen des Polyvinylalkohols, die mit etwa 0.1 bis 80 Einheiten des vinylischen Monomeren umgesetzt werden.

Der Anteil der vinylischen Comonomere, falls diese verwendet werden, beträgt vorzugsweise 0,5 bis 80 Einheiten pro Einheit der Formel I, insbesondere 1 bis 30 Einheiten vinylisches Comonomer pro Einheit der Formel I und besonders bevorzugt 5 bis 20 Einheiten pro Einheit der Formel I.

Es ist ferner bevorzugt, ein hydrophobes vinylisches Comonomer zu verwenden oder ein Gemisch eines hydrophoben vinylischen Comonomeren mit einem hydrophilen vinylischen Comonomeren, wobei dieses Gemisch wenigstens 50 Gewichtsprozent eines hydrophoben vinylischen Comonomeren enthält. Auf diese Weise lassen sich die mechanischen Eigenschaften des Polymeren verbessern, ohne dass der Wassergehalt wesentlich absinkt. Grundsätzlich gilt jedoch, dass sowohl konventionelle hydrophobe vinylische Comonomere als auch konventionelle hydrophile vinylische Comonomere für die Copolymerisation mit Polyvinylalkohol enthaltend Gruppen der Formel I geeignet sind.

Geeignete hydrophobe vinylische Comonomere umfassen, ohne dass diese Aufzählung abschliessend wäre, C₁-C₁₈-Alkylacrylate und -methacrylate, C₃-C₁₈-Alkylacrylamide und -methacrylamide, Acrylnitril, Methacrylnitril, Vinyl-C₁-C₁₈-alkanoate, C₂-C₁₈-Alkene, C₂-C₁₈-Haloalkene, Styrol, C₁-C₆-Alkylstyrol, Vinylalkylether, in denen der Alkylteil 1 bis 6 Kohlenstoffatome aufweist, C₂-C₁₀-Perfluoralkyl-acrylate und -methacrylate oder entsprechend partiell fluorierte Acrylate und Methacrylate, C₃-C₁₂-Perfluoralkyl-ethylthiocarbonylaminoethyl-acrylate und -methacrylate, Acryloxy und Methacryloxy-alkylsiloxane, N-Vinylcarbazol, C₁-C₁₂-Alkylester der Maleinsäure, Fumarsäure, Itaconsäure, Mesaconsäure und dergleichen. Bevorzugt sind z.B. C₁-C₄-Alkylester von vinylisch ungesättigten Carbonsäuren mit 3 bis 5 Kohlenstoffatomen oder Vinylester von Carbonsäuren mit bis zu 5 Kohlenstoffatomen.

Beispiele geeigneter hydrophober vinylischer Comonomere umfassen Methylacrylat, Ethylacrylat, Propylacrylat, Isopropylacrylat, Cyclohexylacrylat, 2-Ethylhexylacrylat, Methylmethacrylat, Ethylmethacrylat, Propylmethacrylat, Vinylacetat, Vinylpropionat, Vinylburyrat, Vinylvalerat, Styrol, Chloropren, Vinylchlorid, Vinylidenchlorid, Acrylnitril, 1-Buten, Butadien, Methacrylnitril, Vinyltoluol, Vinylethylether, Perfluorhexylethylthiocarbonylaminoethylmethacrylat, Isobornylmethacrylat, Trifluorethylmethacrylat, Hexafluorisopropylmethacrylat, Hexafluorbutylmethacrylat, Tris-trimethylsilyloxy-silylpropylmethacrylat, 3-Methacryloxypropylpentamethyldisiloxan und Bis(methacryloxypropyl)tetramethyldisiloxan.

Geeignete hydrophile vinylische Comonomere umfassen, ohne dass diese Aufzählung abschliessend wäre, durch Hydroxy substituierte Niederalkylacrylate und -methacrylate, Acrylamid, Methacrylamid, Niederalkylacrylamide und -methacrylamide, ethoxylierte Acrylate und Methacrylate, durch Hydroxy substituierte Niederalkylacrylamide und Methacrylamide, durch Hydroxy substituierte Niederalkylvinylether, Natriumethylensulfonat, Natriumstyrolsulfonat, 2-Acrylamido-2-methylpropansulfonsäure, N-Vinylpyrrol, N-Vinylsuccinimid, N-Vinylpyrrolidon, 2- oder 4-Vinylpyridin, Acrylsäure, Methacrylsäure, Amino- (wobei der Begriff "Amino" auch quaternäres Ammonium umfasst), Mononiederalkylamino-oder Diniederalkylamino-niederalkylacrylate und -methacrylate, Allylalkohol und dergleichen. Bevorzugt sind z.B. durch Hydroxy substituierte C₂-C₄-Alkyl(meth)acrylate, fünf- bis siebengliedrige N-Vinyllactame, N,N-Di-C₁-C₄-alkyl(meth)acrylamide und vinylisch ungesättigte Carbonsäuren mit insgesamt 3 bis 5 Kohlenstoffatomen.

Beispiele geeigneter hydrophiler vinylischer Comonomere umfassen Hydroxyethylmethacrylat, Hydroxyethylacrylat, Acrylamid, Methacrylamid, Dimethylacrylamid, Allylalkohol, Vinylpyridin, Vinylpyrrolidon, Glycerinmethacrylat, N-(1,1-Dimethyl-3-oxobutyl)acrylamid, und dergleichen.

Bevorzugte hydrophobe vinylische Comonomere sind Methylmethacrylat und Vinylacetat.

Bevorzugte hydrophile vinylische Comonomere sind 2-Hydroxyethylmethacrylat, N-Vinylpyrrolidon und Acrylamid.

Die erfindungsgemässen Polymere können auf an sich bekannte Weise zu Formkörpern verarbeitet werden, insbesondere zu Kontaktlinsen, beispielsweise indem die Photovernetzung der erfindungsgemässen Präpolymere in einer geeigneten Kontaktlinsenform erfolgt. Ein weiterer Gegenstand der Erfindung ist daher auf Formkörper gerichtet, die im wesentlichen aus einem erfindungsgemässen Polymer bestehen. Weitere Beispiele für erfindungsgemässe Formkörper, neben Kontaktlinsen, sind biomedizinische oder speziell ophthalmische Formkörper, z.B. Intraokularlinsen, Augenverbände, Formkörper, die in der Chirurgie Verwendung finden können, wie Herzklappen, künstliche Arterien oder dergleichen, ferner Filme oder Membranen, z.B. Membranen für Diffusionskontrolle, photostrukturierbare Folien für Informationsspeicherung, oder Photoresistmaterialien, z.B. Membranen oder Formkörper für Aetzresist oder Siebdruckresist.

Eine spezielle Ausführungsform der Erfindung ist auf Kontaktlinsen gerichtet, die ein erfindungsgemässes Polymer umfassen oder im wesentlichen oder vollständig aus einem erfindungsgemässen Polymer bestehen. Derartige Kontaktlinsen weisen eine Palette ungewöhnlicher und äusserst vorteilhafter Eigenschaften auf. Unter diesen Eigenschaften sind beispielsweise ihre ausgezeichnete Verträglichkeit mit der menschlichen Cornea zu nennen, die auf einem ausgewogenen Verhältnis von Wassergehalt, Sauerstoffdurchlässigkeit und mechanischen Eigenschaften beruhen. Im übrigen sind die erfindungsgemässen Kontaktlinsen von hoher Formbeständigkeit. Auch nach Autoklavierung bei z.B. etwa 120 °C können keine Formveränderungen nachgewiesen werden.

Ferner kann hervorgehoben werden, dass die erfindungsgemässen Kontaktlinsen auf gegenüber dem Stand der Technik sehr einfache und effiziente Weise hergestellt werden können. Dies beruht auf mehreren Faktoren. Einerseits sind die Ausgangsmaterialien kostengünstig zu beschaffen oder herzustellen. Zum zweiten bietet sich der Vorteil, dass die Präpolymere überraschenderweise stabil sind, so dass sie einer hochgradigen Reinigung unterzogen werden können. Zur Vernetzung kann daher ein Material eingesetzt werden, das praktisch keiner nachträglichen Reinigung mehr bedarf, wie insbesondere einer aufwendigen Extraktion von unpolymerisierten Bestandteilen. Ferner kann die Polymerisation in wässriger Lösung erfolgen, so dass ein nachträglicher Hydratationsschritt nicht erforderlich ist. Letztlich erfolgt die Photopolymerisation innerhalb kurzer Zeit, so dass der Herstellungsprozess der erfindungsgemässen Kontaktlinsen auch unter diesem Gesichtspunkt ausserordentlich wirtschaftlich gestaltet werden kann.

Alle die vorstehend genannten Vorteile gelten naturgemäss nicht nur für Kontaktlinsen, sondern auch für andere erfindungsgemässe Formkörper. Die Summe der verschiedenen vorteilhaften Aspekte bei der Herstellung der erfindungsgemässen Formkörper führt dazu, dass die erfindungsgemässen Formkörper besonders als Massenartikel geeignet sind, wie beispielsweise als Kontaktlinsen, die während einer kurzen Zeitspanne getragen werden und dann durch neue Linsen ersetzt werden.

In den nachfolgenden Beispielen sind Mengenangeben, falls nicht ausdrücklich anders angegeben, Gewichtsangaben, Temperaturen werden in Grad Celsius angegeben. Die Beispiele sind nicht geeignet, die Erfindung in irgendeiner Weise, beispielsweise auf den Umfang der Beispiele, zu beschränken.

Beispiel 1a): Zu 105,14 Teilen Aminoacetaldehyd-dimethylacetal und 101,2 Teilen Triethylamin in 200 Teilen Dichlormethan werden unter Eiskühlung 104,5 Teile Methacryloylchlorid, gelöst in 105 Teilen Dichlormethan, bei maximal 15°C während 4 Stunden zugetropft. Nach beendeter Reaktion wird die Dichlormethanphase mit 200 Teilen Wasser, dann mit 200 Teilen 1N HCl-Lösung, dann zweimal mit 200 Teilen Wasser gewaschen. Nach Trocknen mit wasserfreiem Magnesiumsulfat wird die Dichlormethanphase eingedampft und mit 0,1 %, bezogen auf das Reaktionsprodukt, 2,6-Di-tert.-butyl-p-kresol stabilisiert. Nach Destillation bei 90°C/10⁻³ mbar erhält man 112 g Methacrylamidoacetaldehyd-dimethylacetal als farblose Flüssigkeit, Siedepunkt 92°C/10⁻³ mbar (65 % Ausbeute).

Beispiel 1b): 52,6 g Aminoacetaldehyd-dimethylacetal werden in 150 ml deionisiertem Wasser gelöst und unter Eiskühlung auf 5°C abgekühlt. Anschliessend werden gleichzeitig 50 ml Methacrylsäurechlorid und 50 ml 30 %-ige Natronlauge während 40 Minuten so zugegeben, dass der pH-Wert bei 10 bleibt und die Temperatur nicht über 20°C steigt. Nach beendeter Zugabe wird mittels Gaschromatographie der verbliebene Gehalt an Aminoacetaldehyd-dimethylacetal zu 0,18 % bestimmt. Durch weitere Zugabe von 2,2 ml Methacrylsäurechlorid und 2,0 ml 30 %-ige Natronlauge wird das Amin vollständig umgesetzt. Anschliessend wird die Lösung mit 1N Salzsäure neutralisiert (pH = 7). Die wässrige Phase wird mit 50 ml Petrolether extrahiert und mit Wasser gewaschen. Die Petroletherphase enthält 3,4 g Nebenprodukt. Die Wasserphasen werden vereinigt und ergeben 402,8 g einer 20,6 %-igen Lösung von Methacrylamidoacetaldehyd-dimethylacetal. Das Produkt ist gemäss Gaschromatogramm 98,2 %-ig.

Beispiel 2: 10 Teile Polyvinylalkohol mit einem Molekulargewicht von 22'000 und einem Verseifungsgrad von 97,5 - 99,5 % werden in 90 Teilen Wasser gelöst, mit 2,5 Teilen Methacrylamidoacetaldehyd-dimethylacetal versetzt und mit 10 Teilen konzentrierter Salzsäure angesäuert. Die Lösung wird mit 0,02 Teilen 2,6-Di-tert.-butyl-p-kresol stabilisiert. Nach 20-stündigem Rühren bei Raumtemperatur wird die Lösung mit 10 %-iger Natronlauge auf pH 7 eingestellt und dann siebenmal über eine 3kD-Membran ultrafiltriert (Verhältnis 1:3). Nach Einengen erhält man eine 18.8 %-ige wässrige Lösung von Methacrylamidoacetaldehydo-1,3-acetal von Polyvinylalkohol mit einer Viskosität von 2240 cP bei 25°C.

Beispiel 3: 10 Teile der gemäss Beispiel 2 erhaltenen Lösung des Methacrylamidoacetaldehydo-1,3-acetals von Polyvinylalkohol werden photochemisch vernetzt, indem sie mit 0,034 Teilen Darocure 1173 (CIBA-GEIGY) versetzt werden. Dieses Gemisch wird als 100 Mikron dicke Schicht zwischen zwei Glasplatten mit 200 Impulsen eines 5000 Watt Belichtungsgerätes der Firma Staub belichtet. Es resultiert eine feste transparente Folie mit einem Feststoffgehalt von 31 %.

Beispiel 4: 110 g Polyvinylalkohol (Moviol 4-88, Hoechst) werden in 440 g deionisiertem Wasser bei 90°C gelöst und auf 22°C abgekühlt. 100,15 g einer 20,6 %-igen wässrigen Lösung von Methacrylamidoacetaldehyd-dimethylacetal, 38,5 g konz. Salzsäure (37 % p.a., Merck) und 44,7 g deionisiertes Wasser werden dazugegeben. Die Mischung wird bei Raumtemperatur während 22 Stunden gerührt und dann mit einer 5 %-igen NaOH-Lösung auf pH = 7,0 eingestellt. Die Lösung wird mit deionisiertem Wasser auf 3 Liter verdünnt, filtriert und durch eine 1-KD-Omega-Membran der Firma Filtron ultrafiltriert. Nachdem das dreifache Probenvolumen permeiert hat, wird die Lösung aufkonzentriert. Man erhält 660 g einer 17,9 %-igen Lösung des Methacrylamidoacetaldehydo-1,3-acetals von Polyvinylalkohol mit einer Viskosität von 210 cp. Die inhärente Viskosität des Polymeren beträgt 0,319. Der Stickstoffgehalt beträgt 0,96 %. Gemäss NMR-Untersuchung sind 11 Mol-% der OH-Gruppen acetalisiert und 5 Mol-% der OH-Gruppen acetyliert. Durch Aufkonzentrieren der wässrigen Polymerlösung unter reduziertem Druck und Luftzug erhält man eine 30,8 %-ige Lösung mit einer Viskosität von 3699 cp.

Beispiel 5: 133,3 g einer 15 %-igen Polyvinylalkohollösung (Moviol 4-88, Hoechst) werden mit 66,6 g deionisiertem Wasser, 3,3 g monomerem 4-Methacrylamidobutyraldehyddiethylacetal und 20,0 g konz. Salzsäure (37 % p.a., Merck) versetzt und bei Raumtemperatur 8 Stunden gerührt. Die Lösung wird anschliessend mit 5 %-iger Natronlauge auf pH = 7 eingestellt. Nach Ultrafiltration dieser Lösung über eine 3 KD-Omega-Membran der Firma Filtron, wobei der Natriumchloridgehalt der Polymerlösung von 2,07 % auf 0,04 % reduziert wird, resultiert eine 20 %-ige Polymerlösung des Methacrylamidobutyraldehydo-1,3-acetals von Polyvinylalkohol mit einer Viskosität von 400 cp. Die inhärente Viskosität des Polymeren beträgt 0,332. Der Stickstoffgehalt beträgt 0,41 %. Gemäss NMR-Untersuchung sind 7,5 Mol-% der OH-Gruppen mit Acetalgruppen beladen, und 7,3 Mol-% der OH-Gruppen sind mit Acetatgruppen beladen.

Beispiel 6: 200 g einer 10 %-igen Polyvinylalkohollösung (Moviol 4-88, Hoechst) werden mit 2,4 g (14,8 mmol) Aminobutyraldehyd-diethylacetal (Fluka) und 20 g konz. Salzsäure (37 % p.a., Merck) versetzt. Die Lösung wird während 48 Stunden bei Raumtemperatur gerührt und anschliessend mit 10 %-iger Natronlauge neutralisiert. Die Lösung wird auf 400 ml verdünnt. 200 ml dieser Lösung werden gemäss Beispiel 7 weiter verarbeitet. Die übrigen 200 ml dieser Lösung werden mit 0,85 g (8,1 mmol) Methacrylsäurechlorid (Fluka) versetzt, und der pH-Wert wird mit 2N Natronlauge auf pH = 10 gehalten. Nach 30 Minuten bei Raumtemperatur wird der pH auf 7,0 eingestellt und die Lösung über eine 3-KD-Omega-Membran der Firma Filtron analog Beispiel 5 gereinigt. Nach Aufkonzentrieren resultiert eine 27,6 %-ige Polymerlösung des Methacrylamidobutyraldehydo-1,3-acetals von Polyvinylalkohol mit einer Viskosität von 2920 cp. Die inhärente Viskosität des Polymeren beträgt 0,435. Der Stickstoffgehalt beträgt 0,59 %.

Beispiel 7: 200 ml der Polymerlösung von Beispiel 6 werden mit 1,3 g (8,5 mmol) 2-Isocyanatoethylmethacrylat versetzt, und mit 2N Natronlauge wird der pH-Wert auf 10 gehalten. Nach 15 Minuten bei Raumtemperatur wird die Lösung mit 2N Salzsäure neutralisiert und analog wie in Beispiel 6 ultrafiltriert. Nach Konzentrieren resultiert eine 27,1 %-ige Polymerlösung des 4-(2-Methacryloylethyl-ureido)butyraldehydo-1,3-acetals von Polyvinylalkohol mit einer Viskosität von 2320 cp. Die inhärente Viskosität des Polymeren beträgt 0,390. Der Stickstoffgehalt beträgt 1,9 %.

Beispiel 8: Die 30,8 %-ige Polymerlösung gemäss Beispiel 4 mit einer Viskosität von etwa 3600 cp wird mit 0,7 % Darocur 1173 (bezogen auf den Gehalt an Polymer) versetzt. Die Lösung wird in eine transparente Kontaktlinsenform aus Polypropylen gefüllt, die Form wird geschlossen. Mittels einer 200 Watt Oriel UV-Lampe wird die Lösung während 6 Sekunden aus einem Abstand von 18 cm belichtet. Die Form wird geöffnet, und die fertige Kontaktlinse kann entfernt werden. Die Kontaktlinse ist transparent und weist einen Wassergehalt von 61 % auf. Der Modulus beträgt 0,9 mPa, die Bruchdehnung 50 %. Die Kontaktlinse wird bei 121 °C während 40 Minuten autoklaviert. An einer so behandelten Kontaktlinsen können keine Formveränderungen nachgewiesen werden.

Beispiel 9: 10,00 g einer 27,1 %-igen Polymerlösung gemäss Beispiel 7 werden mit 0,0268 g Darocur 1173 (0,7 % bezogen auf den Polymergehalt) und 0,922 g Methylmethacrylat versetzt. Nach Zugabe von 2,3 g Methanol erhält man eine klare Lösung. Diese Lösung wird analog wie in Beispiel 8 mit einer 200 Watt Oriellampe für eine Dauer von 14 Sekunden belichtet. Man erhält eine transparente Kontaktlinse mit einem Wassergehalt von 70,4 %.

Beispiel 10: 12,82 g einer 24,16 %-igen Lösung des Präpolymeren von Beispiel 4 werden mit 1,04 g Acrylamid und 0,03 g Darocur 1173 versetzt. Die klare Lösung wird anschliessend analog zu Beispiel 8 mit einer 200 Watt Oriellampe während 14 Sekungen belichtet. Man erhält eine Kontaktlinse mit einem Wassergehalt von 64,4 %.

## Patentansprüche

1. Verfahren zur Herstellung von Kontaktlinsen aus einem durch Beaufschlagung mit geeigneter Energie vernetzbaren Material in einer zumindest teilweise für die die Vernetzung bewirkende Energie durchlässigen Form (1) mit einer Formkavität (15), welche die Gestalt der herzustellenden Kontaktlinse (CL) festlegt, wobei das Material in wenigstens teilweise noch unvernetztem Zustand in die Form eingebracht und in dieser durch Beaufschlagung mit der die Vernetzung bewirkenden Energie in einem für die Entformbarkeit der Kontaktlinse ausreichenden Ausmass vernetzt wird, wobei die Beaufschlagung des Materials mit der die Vernetzung bewirkenden Energie (3) räumlich auf den Bereich der Formkavität (15) begrenzt wird, **dadurch gekennzeichnet**, dass die die Vernetzung bewirkende Energie (3) räumlich auf die gesamte Formkavität (15) einschliesslich deren Rand durch eine für die die Vernetzung bewirkende Energie wenigstens teilweise undurchlässige Maskierung der Form (1) und/oder einer Führung des Strahlengangs der Energie begrenzt wird, wobei durch diese räumliche Begrenzung der Energie die endgültige Gestalt der Kontaktlinse einschliesslich des Kontaktlinsenrandes festgelegt wird und keine Nacharbeitung der so erzeugten Kontaktlinse (CL) erforderlich ist.

2. Verfahren nach Anspruch 1, dadurch gekennzeichnet, dass als die Vernetzung bewirkende Energie Strahlungsenergie, insbesondere UV-Strahlung, Gamma-Strahlung, Elektronen-Strahlung oder thermische Strahlung verwendet wird.

3. Verfahren nach Anspruch 2, dadurch gekennzeichnet, dass Strahlungsenergie in Form eines im wesentlichen parallelen Strahlungsbündels (3) verwendet wird.

4. Verfahren nach einem oder mehreren der vorangehenden Ansprüche, dadurch gekennzeichnet, dass eine Form (1) verwendet wird, die wenigstens einseitig für die die Vernetzung bewirkende Energie gut durchlässig ist, und dass die räumliche Begrenzung der Energiebeaufschlagung durch für die die Vernetzung bewirkende Energie schlecht oder nicht durchlässig ausgebildete Teile der Form erfolgt.

5. Verfahren nach einem oder mehreren der Ansprüche 1 bis 4, dadurch gekennzeichnet, dass eine Form (1) verwendet wird, die wenigstens in einer Richtung für die die Vernetzung bewirkende Energie gut durchlässig ist, und dass die räumliche Begrenzung der Energiebeaufschlagung durch eine ausserhalb der Formkavität (15) an oder in der Form vorgesehene, für die die Vernetzung bewirkende Energie schlecht oder nicht durchlässige Maske (21) erfolgt.

6. Verfahren nach Anspruch 5, dadurch gekennzeichnet, dass die Maske (21) im Bereich von Trennebenen bzw. Trennflächen verschiedener Formteile, insbesondere in mit dem vernetzbaren Material in Berührung stehenden Bereichen (17,18) derselben angeordnet wird.

7. Verfahren nach einem oder mehreren der Ansprüche 1-6, dadurch gekennzeichnet, dass die Form (1) nach dem Einbringen des Materials in die Formkavität (15) nicht vollständig geschlossen wird, so dass wenigstens ein mit der Formkavität (15) in Verbindung stehender, diese vorzugsweise umschliessender, unvernetztes Material enthaltender Spalt (16) offen bleibt, und dass die die Vernetzung bewirkende Energie von dem in diesem Spalt (16) befindlichen Material ferngehalten wird.

8. Verfahren nach Anspruch 7, dadurch gekennzeichnet, dass die Form (1) während der fortschreitenden Vernetzung des Materials dem Vernetzungsschwund folgend weiter geschlossen wird.

9. Verfahren nach Anspruch 7, dadurch gekennzeichnet, dass ein vor der Vernetzung wenigstens zäh fliessfähiges Material verwendet wird und dass ein von der die Vernetzung bewirkenden Energie nicht beaufschlagtes Reservoir vorgesehen wird, aus dem zur Schwundkompensation Material durch den Spalt (16) in die Formkavität (15) nachfliessen kann.

10. Verfahren nach einem oder mehreren der vorangehenden Ansprüche 1-9, dadurch gekennzeichnet, dass nach der Entformung der Kontaktlinse (CL) dieser anhaftendes unvernetztes oder nur teilweise vernetztes Material durch Spülung mit einem geeigneten Lösungsmittel entfernt wird.

11. Verfahren nach einem oder mehreren der vorangehenden Ansprüche 1-10, dadurch gekennzeichnet, dass die Form (1) kraftlos geschlossen wird, so dass die beiden Formhälften (11,12) ohne äussere Belastung aneinander liegen.

12. Verfahren nach einem oder mehreren der vorangehenden Ansprüche 1-11, dadurch gekennzeichnet, dass das Befüllen der Formkavität (15) in dem in zumindest teilweise noch unvernetztem Zustand befindlichen Ausgangsmaterial (M) erfolgt.

13. Verfahren nach Anspruch 12, dadurch gekennzeichnet, dass zum Befüllen der Formkavität (15) diese mit einem sie umgebenden Reservoir (R) in Verbindung gebracht wird, in welchem das Ausgangsmaterial bereitgestellt wird und aus welchem die Formkavität (15) geflutet wird.

14. Verfahren nach Anspruch 12 oder 13, dadurch gekennzeichnet, dass die Form (1) in dem Ausgangsmaterial geschlossen wird.

15. Verfahren nach einem oder mehreren der Ansprüche 12 bis 14, dadurch gekennzeichnet, dass eine Form verwendet wird, die einen Behälter (10a,10b) und ein in diesem Behälter verschiebbares Formteil (11a,11b) umfasst, welches zum Öffnen und Schliessen der Form von der ihm gegenüberliegenden Behälterwand (100a,100b) weg und auf diese Behälterwand zu bewegbar ist, wobei während des Öffnens der Form Ausgangsmaterial zwischen Behälterwand (100a,100b) und Formteil (11a,11b) zugeführt und während des Schliessens der Form Ausgangsmaterial wieder abgeführt wird.

16. Verfahren nach Anspruch 15, dadurch gekennzeichnet, dass eine Form (1) mit zwei Formhälften verwendet wird, wobei die eine Formhälfte an der Behälterwand (100a,100b) und die andere Formhälfte an dem verschiebbaren Formteil (11a,11b) vorgesehen ist.

17. Verfahren nach Anspruch 16, dadurch gekennzeichnet, dass eine Form mit einer Vaterformhälfte und einer Mutterformhälfte verwendet wird, bei der an der Behälterwand (100a,100b) die Vaterformhälfte und an dem verschiebbaren Formteil (11a,11b) die Mutterformhälfte vorgesehen ist.

18. Verfahren nach einem oder mehreren der Ansprüche 15 bis 17, dadurch gekennzeichnet, dass zum Zu- und Abführen des Ausgangsmaterials Pumpen (P1,P2) verwendet werden.

19. Verfahren nach einem oder mehreren der Ansprüche 15 bis 17, dadurch gekennzeichnet, dass zum Zu- und Abführen des Ausgangsmaterials das verschiebbare Formteil (11a,11b) angetrieben wird.

20. Verfahren nach einem oder mehreren der Ansprüche 12 bis 19, dadurch gekennzeichnet, dass der vernetzte Formkörper (CL) durch Ausspülen der Form mit Ausgangsmaterial entformt wird.

21. Verfahren nach einem oder mehreren der Ansprüche 15 bis 19 und nach Anspruch 20, dadurch gekennzeichnet, dass der Formkörper (CL) durch die Strömung des Ausgangsmaterials beim Öffnen der Form von der Form abgelöst und beim Schliessen der Form aus der Form herausgespült wird.

22. Verfahren nach Anspruch 20, dadurch gekennzeichnet, dass in einem ersten Zyklus die Form geöffnet und wieder geschlossen wird, anschliessend zumindest die für die Entformbarkeit des Formkörpers (CL) erforderliche Vernetzung durch Beaufschlagung mit Energie (3) erfolgt, und dass in einem zweiten Zyklus die Form erneut geöffnet wird, wobei der Formkörper von der Form abgelöst wird und wobei anschliessend das Formteil (11a) zum Schliessen der Form wieder auf die gegenüberliegende Behälterwand (100a) zu bewegt wird, wobei der vernetzte Formkörper aus der Form herausgespült wird.

23. Verfahren nach einem oder mehreren der Ansprüche 12 bis 19, dadurch gekennzeichnet, dass der vernetzte Formkörper mittels einer Greifeinrichtung (4) aus der Form entnommen wird.

24. Verfahren nach einem der Ansprüche 15 bis 19 und nach Anspruch 23, dadurch gekennzeichnet, dass der mittels der Greifeinrichtung (4,4b) aus der Form entnommene Formkörper (CL) ausserhalb des Raums zwischen dem verschiebbaren Formteil (11b) und der gegenüberliegenden Behälterwand (100b) auf dem verschiebbaren Formteil (11b) abgelegt wird.

25. Verfahren nach Anspruch 24, dadurch gekennzeichnet, dass der auf dem verschiebbaren Formteil abgelegte Formkörper durch Unterdruck (NP) an diesem festgehalten und dann durch Überdruck (HP) von diesem abgelöst wird.

26. Verfahren nach einem oder mehreren der Ansprüche 12 bis 25, dadurch gekennzeichnet, dass die Form nach dem Einbringen des Ausgangsmaterials in die Formkavität nicht vollständig geschlossen wird, so dass ein die Formkavität umschliessender, mit dieser in Verbindung stehender, unvernetztes Ausgangsmaterial enthaltender Ringspalt (16) offen bleibt.

27. Verfahren nach Anspruch 26, dadurch gekennzeichnet, dass die Form während der fortschreitenden Vernetzung des Materials dem Vernetzungsschwund folgend weiter geschlossen wird.

28. Verfahren nach Anspruch 27, dadurch gekennzeichnet, dass ein vor der Vernetzung wenigstens zäh fliessfähiges Ausgangsmaterial verwendet wird, und dass zur Schwundkompensation Ausgangsmaterial durch den Ringspalt (16) in die Formkavität (15) nachfliessen kann.

29. Verfahren nach einem oder mehreren der vorangehenden Ansprüche, dadurch gekennzeichnet dass das Ausgangsmaterial ein Präpolymer ist, bei dem es sich um ein Derivat eines Polyvinylalkohols mit einem Molekulargewicht von mindestens etwa 2000 handelt, das von etwa 0,5 bis etwa 80 %, bezogen auf die Anzahl Hydroxylgruppen des Polyvinylalkohols, Einheiten der Formel I enthält, 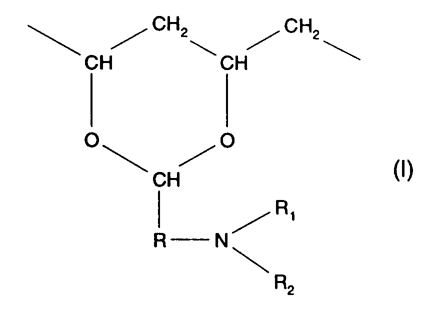 worin R für Niederalkylen mit bis zu 8 Kohlenstoffatomen steht, R¹ für Wasserstoff oder Niederalkyl steht und R² einen olefinisch ungesättigten, elektronenziehenden, copolymerisierbaren Rest mit vorzugsweise bis zu 25 Kohlenstoffatomen bedeutet.

30. Verfahren nach Anspruch 29, dadurch gekennzeichnet, dass das Ausgangsmaterial ein Präpolymer ist, worin R² für einen olefinisch ungesättigten Alkyrest der Formel R³-CO- steht, worin R³ einen olefinisch ungesättigten copolymerisierbaren Rest mit 2 bis 24 Kohlenstoffatomen, bevorzugt mit 2 bis 8 Kohlenstoffatomen, besonders bevorzugt mit 2 bis 4 Kohlenstoffatomen, bedeutet.

31. Verfahren nach Anspruch 30, dass das Ausgangsmaterial ein Präpolymer ist, worin R³ für Alkenyl mit 2 bis 8 Kohlenstoffatomen steht.

32. Verfahren nach Anspruch 29, dadurch gekennzeichnet, dass das Ausgangsmaterial ein Präpolymer ist, worin der Rest R² für einen Rest der Formel II steht,
-CO-NH-(R⁴-NH-CO-O)_{q}-R⁵-O-CO-R³ (II)
worin q für Null oder eins steht und R⁴ und R⁵ unabhängig voneinander Niederalkylen mit 2 bis 8 Kohlenstoffatomen, Arylen mit 6 bis 12 Kohlenstoffatomen, eine gesättigte bivalente cycloaliphatische Gruppe mit 6 bis 10 Kohlenstoffatomen, Arylenalkylen oder Alkylenarylen mit 7 bis 14 Kohlenstoffatomen oder Arylenalkylenarylen mit 13 bis 16 Kohlenstoffatomen bedeuten und worin R³ einen olefinisch ungesättigten copolymerisierbaren Rest mit 2 bis 24 Kohlenstoffatomen, bevorzugt mit 2 bis 8 Kohlenstoffatomen, besonders bevorzugt mit 2 bis 4 Kohlenstoffatomen, bedeutet.

33. Verfahren nach Anspruch 29, dadurch gekennzeichnet, dass es sich bei dem Präpolymer um ein Derivat eines Polyvinylalkohols mit einem Molekulargewicht von mindestens etwa 2000 handelt, das von etwa 0,5 bis etwa 80 %, bezogen auf die Anzahl Hydroxylgruppen des Polyvinylalkohols, Einheiten der Formel III enthält, 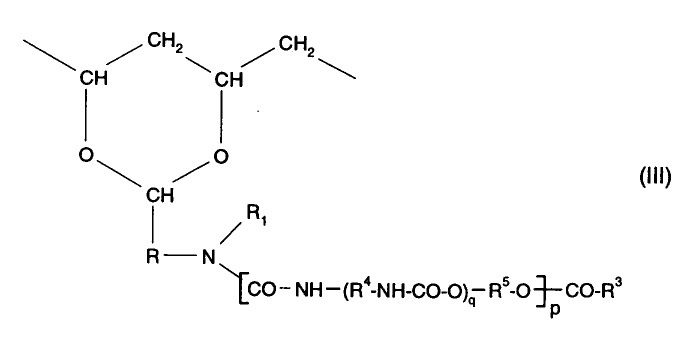 worin R für Niederalkylen steht, R¹ für Wasserstoff oder Niederalkyl steht, p den Wert Null oder eins aufweist, q den Wert Null oder eins aufweist, R³ einen olefinisch ungesättigten copolymerisierbaren Rest mit 2 bis 8 Kohlenstoffatomen bedeutet und R⁴ und R⁵ unabhängig voneinander Niederalkylen mit 2 bis 8 Kohlenstoffatomen, Arylen mit 6 bis 12 Kohlenstoffatomen, eine gesättigte bivalente cycloaliphatische Gruppe mit 6 bis 10 Kohlenstoffatomen, Arylenalkylen oder Alkylenarylen mit 7 bis 14 Kohlenstoffatomen oder Arylenalkylenarylen mit 13 bis 16 Kohlenstoffatomen bedeuten.

34. Verfahren nach Anspruch 33, dadurch gekennzeichnet, dass das Ausgangsmaterial ein Präpolymer ist, worin R für Niederalkylen mit bis zu 6 Kohlenstoffatomen steht, p Null bedeutet und R³ Alkenyl mit 2 bis 8 Kohlenstoffatomen bedeutet.

35. Verfahren nach Anspruch 33, dadurch gekennzeichnet, dass das Ausgangsmaterial ein Präpolymer ist, worin R für Niederalkylen mit bis zu 6 Kohlenstoffatomen steht, p eins bedeutet, q Null bedeutet, R⁵ für Niederalkylen mit 2 bis 6 Kohlenstoffatomen steht und R³ Alkenyl mit 2 bis 8 Kohlenstoffatomen bedeutet.

36. Verfahren nach Anspruch 33, dadurch gekennzeichnet, dass das Ausgangsmaterial ein Präpolymer ist, worin R für Niederalkylen mit bis zu 6 Kohlenstoffatomen steht, p eins bedeutet, q eins bedeutet, R⁴ für Niederalkylen mit 2 bis 6 Kohlenstoffatomen, Phenylen, unsubstituiert oder durch Niederalkyl substituiert, Cyclohexylen oder Cyclohexylen-niederalkylen, unsubstituiert oder durch Niederalkyl substituiert, Phenylen-niederalkylen, Niederalkylen-phenylen oder Phenylen-niederalkylen-phenylen steht, R⁵ für Niederalkylen mit 2 bis 6 Kohlenstoffatomen steht und R³ Alkenyl mit 2 bis 8 Kohlenstoffatomen bedeutet.

37. Verfahren nach Anspruch 29, dadurch gekennzeichnet, dass das Ausgangsmaterial ein Präpolymer ist, bei dem es sich um ein Derivat eines Polyvinylalkohols mit einem Molekulargewicht von mindestens etwa 2000 handelt, das von etwa 1 bis etwa 15 %, bezogen auf die Anzahl Hydroxylgruppen des Polyvinylalkohols, Einheiten der Formel I enthält.

38. Verfahren nach einem oder mehreren der Ansprüche 1 bis 37, dadurch gekennzeichnet, dass eine Formhälfte (11,12) der Form (1) als Verpackung für die Kontaktlinse (CL) verwendet wird.

39. Verfahren nach Anspruch 38, dadurch gekennzeichnet, dass die Mutterformhälfte (12) als Verpackung für die Kontaktlinse verwendet wird.

40. Verfahren nach Anspruch 38 oder 39, dadurch gekennzeichnet, dass eine der Formhälften (11,12) als Mehrfachformhälfte ausgebildet und die andere Formhälfte (12,11) als Einmalformhälfte ausgebildet ist, wobei die Einmalformhälfte als Verpackung für die Kontaktlinse verwendet wird.

41. Verfahren nach Anspruch 40, dadurch gekennzeichnet, dass die Vaterformhälfte (11) als Mehrfachformhälfte und die Mutterformhälfte (12) als Einfachformhälfte ausgebildet ist, wobei die Mutterformhälfte (12) als Verpackung für die Kontaktlinse verwendet wird.

42. Vorrichtung zur Herstellung von Kontaktlinsen, mit einer schliess- und öffenbaren Form (1), die eine die Gestalt der herzustellenden Kontaktlinse (CL) festlegende Formkavität (15) aufweist, welche Form zur Aufnahme eines vernetzbaren Materials bestimmt und wenigstens teilweise durchlässig ausgebildet ist für eine von aussen zugeführte, die Vernetzung des Materials bewirkende Energie, und mit einer Quelle (2a) für die die Vernetzung bewirkende Energie sowie mit Mitteln (2b) zur Beaufschlagung der Form (1) mit der die Vernetzung bewirkenden Energie, und mit Mitteln, um die Beaufschlagung der Form (1) mit der dieVernetzung bewirkenden Energie räumlich auf den Bereich der Formkavität (15) zu begrenzen, **dadurch gekennzeichnet**, dass die Mittel zur räumlichen Begrenzung der Beaufschlagung der Form mit Energie als eine für die die Vernetzung bewirkende Energie nicht oder schlecht durchlässige Maskierung der Form (1) und/oder als Elemente zur Führung des Strahlengangs ausgebildet sind, die derart angeordnet ist/sind, dass die gesamte Formkavität (15) einschliesslich des Randes mit Energie beaufschlagt und die endgültige Gestalt der Kontaktlinse (CL) einschliesslich des Kontaktlinsenrandes festgelegt ist und keine Nachbearbeitung der so erzeugten Kontaktlinse (CL) erforderlich ist.

43. Vorrichtung nach Anspruch 42, dadurch gekennzeichnet, dass die Maskierung der Form (1) als Maske (21) ausgebildet ist, welche mit Ausnahme der Formkavität (15) alle unvernetztes Material enthalten könnenden Formhohlkörper (16) bzw. mit dem Material in Kontakt kommen könnenden Formhälften (17,18) gegenüber der die Vernetzung bewirkenden Energie abschirmt.

44. Vorrichtung nach Anspruch 42 oder 43, dadurch gekennzeichnet, dass die Form (1) zwei Formhälften (11,12) umfasst, die längs einer Trennfläche (17,18) getrennt sind, und dass die Maske (21) an einer der beiden Formhälften (11,12) und/oder an beiden Formhälften im Bereich der Trennfläche (17,18) ausserhalb der Formkavität (15) angeordnet ist.

45. Vorrichtung nach Anspruch 44, dadurch gekennzeichnet, dass die Quelle (2a) UV-Strahlung erzeugt und dass wenigstens eine der Formhälften (11,12) der Form (1) aus UV-durchlässigem Material, insbesondere Quarz besteht.

46. Vorrichtung nach Anspruch 45, dadurch gekennzeichnet, dass die Maske (21) aus einer Schicht aus für UV-Strahlung nicht durchlässigem Material, insbesondere einer Metall- oder Metalloxidschicht, speziell einer Chrom-Schicht besteht.

47. Vorrichtung nach einem oder mehreren der Ansprüche 42-46, dadurch gekennzeichnet, dass die Form (1) mit Distanzmitteln (19a,19b) versehen ist, welche die beiden Formhälften (11,12) bei geschlossener Form in geringem Abstand (Δy) zu einander halten, so dass wenigstens ein vorzugsweise die Formkavität (15) umschliessender, mit dieser in Verbindung stehender Spalt (16) gebildet wird, und dass die Maske (21) im Bereich dieses Spalts angeordnet ist.

48. Vorrichtung nach Anspruch 47, dadurch gekennzeichnet, dass die Form (1) mit elastischen Mitteln oder Verstellmitteln (19b) versehen ist, welche eine dem Vernetzungsschwund folgende Annäherung der beiden Formhälften (11,12) erlauben.

49. Vorrichtung nach einem der Ansprüche 42-46, dadurch gekennzeichnet, dass beim Befüllen der Formkavität (15) diese in zumindest teilweise noch in unvernetztem Zustand befindlichem Ausgangsmaterial (M) angeordnet ist.

50. Vorrichtung nach Anspruch 49, dadurch gekennzeichnet, dass sie ein Reservoir (R) zur Bereitstellung des Ausgangsmaterials umfasst, welches die Formkavität (15) umgibt und mit der Formkavität (15) verbindbar ist, und dass beim Befüllen der Formkavität das Reservoir (R) mit der Formkavität (15) verbunden ist und diese flutet.

51. Vorrichtung nach einem der Ansprüche 49 oder 50, dadurch gekennzeichnet, dass sie Mittel zum Schliessen (1a) der im Ausgangsmaterial angeordneten Form (1) umfasst.

52. Vorrichtung nach einem der Ansprüche 49 bis 51, dadurch gekennzeichnet, dass die Form einen Behälter (10a,10b) und ein in diesem Behälter verschiebbares Formteil (11a,11b) umfasst, welches zum Öffnen und Schliessen der Form von der ihm gegenüberliegenden Behälterwand (100a,100b) weg und auf diese Behälterwand (100a,100b) zu bewegbar ist, und dass in dem Behälter ein Einlass (101a,101b) vorgesehen ist, durch den während des Öffnens der Form Ausgangsmaterial zwischen Behälterwand (100a,100b) und Formteil (11a,11b) hineinströmt, und dass in dem Behälter ein Auslass (102a,102b) vorgesehen ist, durch den während des Schliessens der Form Ausgangsmaterial wieder herausströmt.

53. Vorrichtung nach Anspruch 52, dadurch gekennzeichnet, dass die Form zwei Formhälften aufweist, wobei eine Formhälfte an der Behälterwand (100a,100b) und die andere an dem verschiebbaren Formteil (11a,11b) vorgesehen ist.

54. Vorrichtung nach Anspruch 53, dadurch gekennzeichnet, dass die Form eine Vaterformhälfte und eine Mutterformhälfte aufweist, und dass die Vaterformhälfte an der Behälterwand (100a,100b) und die Mutterformhälfte an dem verschiebbaren Formteil (11a,11b) vorgesehen ist.

55. Vorrichtung nach einem der Ansprüche 52 bis 54, dadurch gekennzeichnet, dass Pumpen (P1,P2) vorgesehen sind, die beim Öffnen der Form durch den Einlass (101a,101b) Ausgangsmaterial zwischen Behälterwand (100a,100b) und Formteil (11a,11b) zuführen und beim Schliessen der Form durch den Auslass (102a,102b) wieder abführen.

56. Vorrichtung nach einem der Ansprüche 52 bis 55, dadurch gekennzeichnet, dass Mittel zum Antreiben des verschiebbaren Formteils (11a,11b) vorgesehen sind.

57. Vorrichtung nach einem der Ansprüche 49 bis 56, dadurch gekennzeichnet, dass Mittel zum Erzeugen einer Strömung vorgesehen sind, die den Formkörper beim Öffnen der Form von der Form ablöst und beim Schliessen der Form aus der Form herausspült.

58. Vorrichtung nach einem der Ansprüche 49 bis 56, dadurch gekennzeichnet, dass eine Greifeinrichtung (4) vorgesehen ist, welche den vernetzten Formkörper (CL) aus der Form entnimmt.

59. Vorrichtung nach einem der Ansprüche 52 bis 56 und nach Anspruch 58, dadurch gekennzeichnet, dass der Behälter (10b) auf einer von der formgebenden Fläche (100b) verschiedenen Behälterwand (103b) eine Ausbuchtung oder Nische (104b) aufweist, die sich im wesenlichen in Richtung der Bewegung des verschiebbaren Formteils (11b) erstreckt, wobei in dieser Ausbuchtung oder Nische (104b) die Greifeinrichtung (4b) angeordnet ist, und dass das verschiebbate Formteil (11b) auf einer Aussenwand (113b), die nicht der formgebenden Behälterwand (100b) gegenüberliegt, eine Einbuchtung (114b) aufweist, in welche hinein die Greifeinrichtung (4b) den entnommenen Formkörper (CL) ablegt.

60. Vorrichtung nach Anspruch 59, dadurch gekennzeichnet, dass das verschiebbare Formteil einen zu der Einbuchtung (114b) führenden Kanal (115b) aufweist, der an eine Unter- bzw. Überdruckquelle (P3) anschliessbar ist, welcher Kanal (115b) dann, wenn die Greifeinrichtung (4b) den entnommenen Formkörper (CL) in die Einbuchtung (114b) des Formteils (11b) hinein ablegt, an die Unterdruckquelle angeschlossen und anschliessend zum Ablösen der Linse an die Überdruckquelle angeschlossen ist.

61. Vorrichtung nach einem der Ansprüche 53 bis 60, dadurch gekennzeichnet, dass die Form mit Distanzmitteln (19) versehen ist, welche die beiden Formhälften bei geschlossener Form in geringem Abstand zueinander halten, so dass ein die Formkavität (15) umschliessender und mit dieser in Verbindung stehender Ringspalt (16) gebildet wird.

62. Vorrichtung nach Anspruch 61, dadurch gekennzeichnet, dass die Form mit elastischen Mitteln oder Verstellmitteln versehen ist, welche eine dem Vernetzungsschwund folgende Annäherung der beiden Formhälften erlauben.

## Claims

1. A process for the manufacture of contact lenses from a material that is crosslinkable by the impingement of suitable energy in a mould (1) that is at least partially permeable to the energy causing the crosslinking and that has a mould cavity (15) that determines the shape of the contact lens (CL) to be produced, the material being introduced into the mould in a state that is at least partially still uncrosslinked, and being crosslinked in that mould, to a degree sufficient for it to be possible for the contact lens to be released from the mould, by impingement of the energy causing the crosslinking, impingement upon the material of the energy (3) causing the crosslinking being spatially restricted to the region of the mould cavity (15), wherein the energy (3) causing the crosslinking is spatially restricted to the whole of the mould cavity (15), including the rim thereof, by masking for the mould (1), which masking is at least partially impermeable to the energy causing the crosslinking, and/or by guidance of the beam path, the final shape of the contact lens, including the contact lens rim, being determined by that spatial restriction of energy and subsequent machining of the contact lens (CL) so produced being unnecessary.

2. A process according to claim 1, wherein the energy employed to cause the crosslinking is radiation energy, especially UV radiation, gamma radiation, electron radiation or thermal radiation.

3. A process according to claim 2, wherein the radiation energy is used in the form of a substantially parallel beam (3).

4. A process according to one or more of the preceding claims, wherein the mould (1) used is one that is highly permeable at least at one side to the energy causing the crosslinking, and wherein the spatial restriction of the energy impingement is effected by parts of the mould that are impermeable or of poor permeability to the energy causing the crosslinking.

5. A process according to one or more of claims 1 to 4, wherein the mould (1) used is one that is highly permeable, at least in one direction, to the energy causing the crosslinking, and the spatial restriction of the energy impingement is effected by a mask (21) that is impermeable or of poor permeability to the energy causing the crosslinking and that is provided outside the mould cavity (15) on or in the mould.

6. A process according to claim 5, wherein the mask (21) is arranged in the region of separating planes or separating faces of different mould members, especially in regions (17, 18) thereof that are in contact with the crosslinkable material.

7. A process according to one or more of claims 1 to 6, wherein the mould (1) is not fully closed after the introduction of the material into the mould cavity (15), so that at least a gap (16) containing uncrosslinked material remains open, which gap is in communication with the mould cavity (15) and preferably surrounds it, and wherein the energy causing the crosslinking is kept away from the material disposed in that gap (16).

8. A process according to claim 7, wherein the mould (1) is closed further following crosslinking shrinkage as crosslinking of the material progresses.

9. A process according to claim 7, wherein a material that is of at least viscous flowability prior to crosslinking is used, and a reservoir that is not impinged upon by the energy causing the crosslinking is provided from which material can flow back through the gap (16) into the mould cavity (15) to compensate for shrinkage.

10. A process according to one or more of the preceding claims 1 to 9, wherein, after the contact lens (CL) has been released from the mould, any uncrosslinked or only partially crosslinked material adhering to the contact lens is removed by washing with a suitable solvent.

11. A process according to one or more of the preceding claims 1 to 10, wherein the mould (1) is closed without force, so that the two mould halves (11, 12) lie against one another without external pressure.

12. A process according to one or more of the preceding claims 1 to 11, wherein the filling of the mould cavity (15) is carried out in the starting material (M) that is at least partially still in the uncrosslinked state.

13. A process according to claim 12, wherein, for filling the mould cavity (15), the cavity is connected to a reservoir (R) which surrounds it, in which reservoir the starting material is stored and from which the mould cavity (15) is flooded.

14. A process according to either claim 12 or claim 13, wherein the mould (1) is closed in the starting material.

15. A process according to one or more of claims 12 to 14, wherein a mould is used that comprises a container (10a, 10b) and a mould member (11a, 11b) that is displaceable in that container and can be moved away from and towards the container wall (100a, 100b) lying opposite it for the purpose of opening and closing the mould, starting material being fed in between the container wall (100a, 100b) and the mould member (11a, 11b) as the mould is opened and conveyed away again as the mould is closed.

16. A process according to claim 15, wherein a mould (1) having two mould halves is used in which one mould half is provided on the container wall (100a, 100b) and the other mould half is provided on the displaceable mould member (11a, 11b).

17. A process according to claim 16, wherein a mould having a male mould half and a female mould half is used, the male mould half being provided on the container wall (100a, 100b) and the female mould half being provided on the displaceable mould member (11a, 11b).

18. A process according to one or more of claims 15 to 17, wherein pumps (P1, P2) are used to feed in and convey away the starting material.

19. A process according to one or more of claims 15 to 17, wherein the displaceable mould member (11a, 11b) is driven in order to feed in and convey away the starting material.

20. A process according to one or more of claims 12 to 19, wherein the crosslinked moulding (CL) is released from the mould by flushing out the mould with starting material.

21. A process according to one or more of claims 15 to 19 and according to claim 20, wherein the moulding (CL) is separated from the mould by the flow of starting material as the mould is opened and is flushed out of the mould by the flow of starting material as the mould is closed.

22. A process according to claim 20, wherein in a first cycle the mould is opened and closed again, then at least the crosslinking necessary for it to be possible for the moulding (CL) to be released from the mould is effected by the impingement of energy (3) and, in a second cycle, the mould is opened again, the moulding being separated from the mould and the mould member (11a) then being moved back towards the opposite-lying container wall (100a) again in order to close the mould, in the course of which the crosslinked moulding is flushed out of the mould.

23. A process according to one or more of claims 12 to 19, wherein the crosslinked moulding is removed from the mould by means of a gripping device (4).

24. A process according to one or more of claims 15 to 19 and according to claim 23, wherein the moulding (CL) removed from the mould by the gripping device (4, 4b) is deposited on the displaceable mould member (11b) outside the space between the displaceable mould member (11b) and the opposite-lying container wall (100b).

25. A process according to claim 24, wherein the moulding deposited on the displaceable mould member is held fast thereto by negative pressure (NP) and then released from it by positive pressure (HP).

26. A process according to one or more of claims 12 to 25, wherein the mould is not fully closed after the introduction of the starting material into the mould cavity, so that an annular gap (16) containing uncrosslinked starting material remains open, which gap surrounds the mould cavity and is in communication with that mould cavity.

27. A process according to claim 26, wherein the mould is closed further following crosslinking shrinkage as crosslinking of the material progresses.

28. A process according to claim 27, wherein a starting material that is of at least viscous flowability prior to the crosslinking is used, and wherein starting material can flow back through the annular gap (16) into the mould cavity (15) to compensate for shrinkage.

29. A process according to one or more of the preceding claims, wherein the starting material is a prepolymer that is a derivative of a polyvinyl alcohol having a molecular weight of at least about 2000 that, based on the number of hydroxy groups of the polyvinyl alcohol, comprises from approximately 0.5 to approximately 80 % of units of formula I 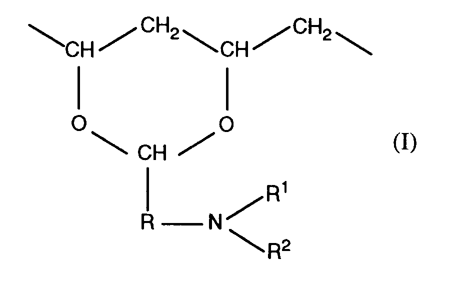 wherein
R is lower alkylene having up to 8 carbon atoms,
R¹ is hydrogen or lower alkyl and
R² is an olefinically unsaturated, electron-withdrawing, copolymerisable radical preferably having up to 25 carbon atoms.

30. A process according to claim 29, wherein the starting material is a prepolymer wherein R² is an olefinically unsaturated alkyl radical of formula R³-CO-, in which R³ is an olefinically unsaturated copolymerisable radical having from 2 to 24 carbon atoms, preferably from 2 to 8 carbon atoms, especially preferably from 2 to 4 carbon atoms.

31. A process according to claim 30, wherein the starting material is a prepolymer wherein R³ is alkenyl having from 2 to 8 carbon atoms.

32. A process according to claim 29, wherein the starting material is a prepolymer wherein the radical R² is a radical of formula II
-CO-NH-(R⁴-NH-CO-O)_{q}-R⁵-O-CO-R³ (II)
wherein
q is zero or one and
R⁴ and R⁵ are each independently lower alkylene having from 2 to 8 carbon atoms, arylene having from 6 to 12 carbon atoms, a saturated divalent cycloaliphatic group having from 6 to 10 carbon atoms, arylenealkylene or alkylenearylene having from 7 to 14 carbon atoms or arylenealkylenearylene having from 13 to 16 carbon atoms, and
R³ is an olefinically unsaturated copolymerisable radical having from 2 to 24 carbon atoms, preferably from 2 to 8 carbon atoms, especially preferably from 2 to 4 carbon atoms.

33. A process according to claim 29, wherein the prepolymer is a derivative of a polyvinyl alcohol having a molecular weight of at least about 2000 that, based on the number of hydroxy groups of the polyvinyl alcohol, comprises from approximately 0.5 to approximately 80 % of units of formula III 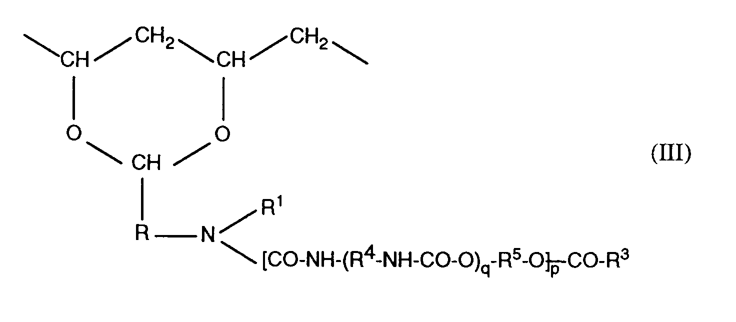 wherein
R is lower alkylene,
R¹ is hydrogen or lower alkyl,
p is zero or one,
q is zero or one,
R³ is an olefinically unsaturated copolymerisable radical having from 2 to 8 carbon atoms and
R⁴ and R⁵ are each independently lower alkylene having from 2 to 8 carbon atoms, arylene having from 6 to 12 carbon atoms, a saturated divalent cycloaliphatic group having from 6 to 10 carbon atoms, arylenealkylene or alkylenearylene having from 7 to 14 carbon atoms or arylenealkylenearylene having from 13 to 16 carbon atoms.

34. A process according to claim 33, wherein the starting material is a prepolymer wherein
R is lower alkylene having up to 6 carbon atoms,
p is zero and
R³ is alkenyl having from 2 to 8 carbon atoms.

35. A process according to claim 33, wherein the starting material is a prepolymer wherein
R is lower alkylene having up to 6 carbon atoms,
p is one,
q is zero,
R⁵ is lower alkylene having from 2 to 6 carbon atoms and
R³ is alkenyl having from 2 to 8 carbon atoms.

36. A process according to claim 33, wherein the starting material is a prepolymer wherein
R is lower alkylene having up to 6 carbon atoms,
p is one,
q is one,
R⁴ is lower alkylene having from 2 to 6 carbon atoms, phenylene, unsubstituted or substituted by lower alkyl, cyclohexylene or cyclohexylene-lower alkylene, unsubstituted or substituted by lower alkyl, phenylene-lower alkylene, lower alkylene-phenylene or phenylene-lower alkylene-phenylene,
R⁵ is lower alkylene having from 2 to 6 carbon atoms and
R³ is alkenyl having from 2 to 8 carbon atoms.

37. A process according to claim 29, wherein the starting material is a prepolymer that is a derivative of a polyvinyl alcohol having a molecular weight of at least about 2000 that, based on the number of hydroxy groups of the polyvinyl alcohol, comprises from approximately 1 to approximately 15 % of units of formula I.

38. A process according to one or more of claims 1 to 37, wherein one half (11, 12) of the mould (1) is used as packaging for the contact lens (CL).

39. A process according to claim 38, wherein the female mould half (12) is used as packaging for the contact lens.

40. A process according to either claim 38 or claim 39, wherein one of the mould halves (11, 12) is in the form of a reusable mould half and the other mould half (12, 11) is in the form of a disposable mould half, the disposable mould half being used as packaging for the contact lens.

41. A process according to claim 40, wherein the male mould half (11) forms the reusable mould half and the female mould half (12) forms the disposable mould half, the female mould half (12) being used as packaging for the contact lens.

42. A device for the manufacture of contact lenses, having a closable and openable mould (1) that has a mould cavity (15) determining the shape of the contact lens (CL) to be produced, which mould is intended to receive a crosslinkable material and is at least partially permeable to an energy that causes the crosslinking of the material and is supplied from the outside, and having a source (2a) for the energy causing the crosslinking and also means (2b) for the impingement upon the mould (1) of the energy causing the crosslinking, and having means for spatially restricting to the region of the mould cavity (15) the impingement upon the mould (1) of the energy causing the crosslinking, wherein the means for spatially restricting the impingement of energy upon the mould is in the form of masking for the mould (1) that is impermeable or of poor permeability to the energy causing the crosslinking and/or in the form of elements for guiding the beam path, which is/are so arranged that the entire mould cavity (15), including the rim, is impinged upon by energy and the final shape of the contact lens (CL), including the contact lens rim, is determined and no subsequent machining of the contact lens (CL) so produced is necessary.

43. A device according to claim 42, wherein the masking for the mould (1) is in the form of a mask (21) that screens from the energy causing the crosslinking all mould cavities (16), with the exception of the mould cavity (15), that may contain uncrosslinked material, and all mould halves (17, 18) that may come into contact with the material.

44. A device according to either claim 42 or claim 43, wherein the mould (1) comprises two mould halves (11, 12) which are separated along a separating face (17, 18), and wherein the mask (21) is arranged outside the mould cavity (15) on one of the two mould halves (11, 12) and/or on both mould halves in the region of the separating face (17, 18).

45. A device according to claim 44, wherein the source (2a) generates UV radiation and wherein at least one of the halves (11, 12) of the mould (1) consists of UV-permeable material, especially quartz.

46. A device according to claim 45, wherein the mask (21) consists of a layer of material that is impermeable to UV radiation, especially a metal or metal oxide layer, specifically a chrome layer.

47. A device according to one or more of claims 42 to 46, wherein the mould (1) is provided with spacers (19a, 19b) which hold the two mould halves (11, 12) a small distance (Δy) apart from one another when the mould is in the closed position, so that at least a gap (16) is formed that preferably surrounds the mould cavity (15) and is in communication with that cavity, and wherein the mask (21) is arranged in the region of the gap.

48. A device according to claim 47, wherein the mould (1) is provided with resilient means or displacement means (19b) that allow the two mould halves (11, 12) to move closer together following crosslinking shrinkage.

49. A device according to any one of claims 42 to 46, wherein during filling of the mould cavity (15) the cavity is arranged in starting material (M) that is at least partially still in the uncrosslinked state.

50. A device according to claim 49 which comprises a reservoir (R) for supplying the starting material, which reservoir surrounds the mould cavity (15) and can be connected to the mould cavity (15), and wherein during filling of the mould cavity the reservoir (R) is connected to the mould cavity (15) and floods that cavity.

51. A device according to either claim 49 or claim 50, which comprises means (1a) for closing the mould (1) arranged in the starting material.

52. A device according to any one of claims 49 to 51, wherein the mould comprises a container (10a, 10b) and a mould member (11a, 11b) displaceable in that container, which mould member can be moved away from and towards the container wall (100a, 100b) lying opposite it for the purpose of opening and closing the mould, and wherein there is provided in the container an inlet (101a, 101b) through which starting material flows in between the container wall (100a, 100b) and the mould member (11a, 11b) as the mould is opened, and wherein there is provided in the container an outlet (102a, 102b) through which starting material flows out again as the mould is closed.

53. A device according to claim 52, wherein the mould comprises two mould halves, one mould half being provided on the container wall (100a, 100b) and the other on the displaceable mould member (11a, 11b).

54. A device according to claim 53, wherein the mould comprises a male mould half and a female mould half, and wherein the male mould half is provided on the container wall (100a, 100b) and the female mould half is provided on the displaceable mould member (11a, 11b).

55. A device according to any one of claims 52 to 54, wherein pumps (P1, P2) are provided which, as the mould is opened, feed in starting material through the inlet (101a, 101b) and between the container wall (100a, 100b) and the mould member (11a, 11b) and, as the mould is closed, convey it away again through the outlet (102a, 102b).

56. A device according to any one of claims 52 to 55, wherein means are provided for driving the displaceable mould member (11a, 11b).

57. A device according to any one of claims 49 to 56, wherein means are provided for producing a flow that separates the moulding from the mould as the mould is opened and flushes the moulding out of the mould as the mould is closed.

58. A device according to any one of claims 49 to 56, wherein a gripping device (4) is provided which removes the crosslinked moulding (CL) from the mould.

59. A device according to any one of claims 52 to 56 and according to claim 58, wherein the container (10b) comprises on a container wall (103b) other than the shape-giving face (100b) a hollow or recess (104b) that extends substantially in the direction of movement of the displaceable mould member (11b), the gripping device (4b) being arranged in that hollow or recess (104b), and wherein the displaceable mould member (11b) comprises, on an outer wall (113b) that does not lie opposite the shape-giving container wall (100b), an indentation (114b) in which the gripping device (4b) deposits the removed moulding (CL).

60. A device according to claim 59, wherein the displaceable mould member comprises a channel (115b) that leads to the indentation (114b) and can be connected to a negative pressure or positive pressure source (P3), which channel (115b) is connected to the negative pressure source when the gripping device (4b) deposits the removed moulding (CL) in the indentation (114b) of the mould member (11b) and then is connected to the positive pressure source in order to release the lens.

61. A device according to any one of claims 53 to 60, wherein the mould is provided with spacers (19) that hold the two mould halves a small distance apart from one another when the mould is in the closed position, so that an annular gap (16) is formed that surrounds the mould cavity (15) and is in communication with that cavity.

62. A device according to claim 61, wherein the mould is provided with resilient means or displacement means that allow the two mould halves to move closer together following crosslinking shrinkage.

## Revendications

1. Procédé de fabrication de lentilles de contact à partir d'un matériau réticulable par apport d'une énergie appropriée dans une forme au moins partiellement perméable à l'énergie provoquant la réticulation (1) avec une cavité de moule (15) qui définit la forme de la lentille de contact (LC) à fabriquer, le matériau étant introduit dans le moule dans un état au moins en partie encore non réticulé et y étant réticulé par apport d'une énergie provoquant la réticulation dans une mesure suffisante pour l'aptitude à la déformation de la lentille de contact, l'apport en énergie (3) provoquant la réticulation du matériau étant spatialement limité à la zone de la cavité du moule (15), caractérisé en ce que l'énergie (3) provoquant la réticulation est limitée spatialement à l'ensemble de la cavité du moule (15) y compris à son bord, par un masquage du moule (1) au moins partiellement imperméable à l'énergie provoquant la réticulation et/ou limitée par un guidage du trajet des rayons énergétiques, cette limitation spatiale de l'énergie établissant la forme finale de la lentille de contact, y compris du bord de la lentille de contact, aucun traitement ultérieur de la lentille de contact (LC) ainsi produite n'étant nécessaire.

2. Procédé selon la revendication 1, caractérisé en ce qu'on utilise comme énergie provoquant la réticulation l'énergie d'un rayonnement, en particulier d'un rayonnement UV, d'un rayonnement gamma, d'un rayonnement électronique ou d'un rayonnement thermique.

3. Procédé selon la revendication 2, caractérisé en ce qu'on utilise l'énergie d'un rayonnement sous la forme d'un faisceau de rayonnement (3) essentiellement parallèle.

4. Procédé selon une ou plusieurs des revendications précédentes, caractérisé en ce qu'on utilise un moule (1) qui au moins d'un côté est bien perméable à l'énergie provoquant la réticulation, et en ce que la limitation spatiale d'un apport en énergie s'effectue à travers les parties du moule peu ou pas perméables à l'énergie provoquant la réticulation.

5. Procédé selon une ou plusieurs des revendications 1 à 4, caractérisé en ce qu'on utilise un moule (1) qui est bien perméable à l'énergie provoquant la réticulation au moins dans une direction, et en ce que la limitation spatiale de l'apport d'énergie s'effectue grâce à un masque (21) prévu à l'extérieur de la cavité du moule (15) sur ou dans le moule, peu ou pas perméable à l'énergie provoquant la réticulation.

6. Procédé selon la revendication 5, caractérisé en ce que le masque (21) est disposé dans une zone de plans ou selon les cas de surfaces de séparation de diverses pièces moulées, en particulier dans les zones (17, 18) des articles à mouler qui sont en contact avec le matériau réticulable.

7. Procédé selon une ou plusieurs des revendications 1 à 6, caractérisé en ce que le moule (1) n'est pas entièrement fermé après l'introduction du matériau dans la cavité du moule (15), si bien qu'au moins une fente (16) contenant du matériau non réticulé, restant en liaison avec la cavité du moule (15), l'entourant de préférence, reste ouverte, et en ce que l'énergie provoquant la réticulation est maintenue à distance du matériau qui se trouve dans cette fente (16).

8. Procédé selon la revendication 7, caractérisé en ce que le moule (1) est davantage refermé au cours de la réticulation progressive du matériau suivant le retrait de réticulation.

9. Procédé selon la revendication 7, caractérisé en ce qu'on utilise un matériau au moins fluide et visqueux avant la réticulation et en ce qu'on prévoit un réservoir non alimenté par l'énergie provoquant la réticulation, à partir duquel peut s'écouler le matériau de compensation du retrait à travers la fente (16) dans la cavité du moule (15).

10. Procédé selon une ou plusieurs des revendications 1 à 9 précédentes, caractérisé en ce qu'après la déformation de la lentille de contact (CL) on retire le matériau non réticulé ou seulement partiellement réticulé qui y adhère en le rinçant avec un solvant approprié.

11. Procédé selon une ou plusieurs des revendications 1 à 10 précédentes, caractérisé en ce qu'on ferme le moule (1) sans force, si bien que les deux moitiés du moule (11, 12) sont disposées l'une sur l'autre sans contrainte extérieure.

12. Procédé selon une ou plusieurs des revendications 1 à 11 précédentes, caractérisé en ce qu'on procède au remplissage de la cavité du moule (15) en matériau de départ (M) se trouvant au moins en partie à l'état non encore réticulé.

13. Procédé selon la revendication 12, caractérisé en ce que pour remplir la cavité du moule (15), on la met en liaison avec un réservoir (R) qui l'entoure, dans lequel le matériau de départ est préparé et à partir duquel on inonde la cavité du moule (15).

14. Procédé selon la revendication 12 ou 13, caractérisé en ce que le moule (1) est fermé dans le matériau de départ.

15. Procédé selon une ou plusieurs des revendications 12 à 14, caractérisé en ce qu'on utilise un moule qui comprend un récipient (10a, 10b) et une pièce profilée (11a, 11b) déplaçable dans ce récipient, et qui pour l'ouverture et la fermeture du moule peut être repoussée par rapport à la paroi du récipient qui lui fait face (100a, 100b) et ramenée vers cette paroi du récipient, où, au cours de l'ouverture du moule, on ajoute du matériau de départ entre la paroi du récipient (100a, 100b) et la pièce profilée (11a, 11b), et où, au cours de la fermeture du moule, on retire à nouveau du matériau de départ.

16. Procédé selon la revendication 15, caractérisé en ce qu'on utilise un moule (1) comportant deux demi-moules, une moitié de moule étant prévue sur la paroi du récipient (100a, 100b) et l'autre demi-moule sur la pièce profilée déplaçable (11a, 11b).

17. Procédé selon la revendication 16, caractérisé en ce qu'on utilise un moule comportant un demi-moule mâle et un demi-moule femelle, dans lequel est prévu à la paroi du récipient (100a, 100b) le demi-moule mâle et à la pièce profilée déplaçable (11a, 11b) le demi-moule femelle.

18. Procédé selon une ou plusieurs des revendications 15 à 17, caractérisé en ce qu'on utilise des pompes (P1, P2) pour introduire et retirer le matériau de départ.

19. Procédé selon une ou plusieurs des revendications 15 à 17, caractérisé en ce qu'on actionne la pièce profilée déplaçable (11a, 11b) pour introduire et retirer le matériau de départ.

20. Procédé selon une ou plusieurs des revendications 12 à 19, caractérisé en ce qu'on démoule l'article moulé (LC) réticulé en l'expulsant du moule avec du matériau de départ.

21. Procédé selon une ou plusieurs des revendications 15 et 19 et selon la revendication 20, caractérisé en ce qu'on sépare du moule l'article moulé (LC) par l'écoulement du matériau de départ lors de l'ouverture du moule et en ce qu'on l'expulse du moule lors de la fermeture du moule.

22. Procédé selon la revendication 20, caractérisé en ce que dans un premier cycle, on ouvre le moule et on le referme, puis en ce qu'on procède au moins à la réticulation nécessaire à la déformabilité du corps moulé (LC) par un apport d'énergie (3) et en ce que, dans un second cycle, on ouvre à nouveau le moule, l'article moulé se détachant du moule, et ensuite en ce que la pièce profilée (11a) est à nouveau déplacée, pour la fermeture du moule, vers la paroi du récipient qui lui fait face (100a), l'article moulé réticulé étant expulsé hors du moule.

23. Procédé selon une ou plusieurs des revendications 12 à 19, caractérisé en ce qu'on retire du moule l'article moulé réticulé avec un dispositif de saisie (4).

24. Procédé selon l'une des revendications 15 à 19 et selon la revendication 23, caractérisé en ce qu'on dépose sur la pièce profilée déplaçable (11b) l'article moulé (LC) enlevé du moule au moyen du dispositif de saisie (4, 4b) hors l'espace situé entre la pièce profilée déplaçable (11b) et la paroi du récipient qui lui fait face (100b).

25. Procédé selon la revendication 24, caractérisé en ce qu'on maintient l'article moulé déposé sur la pièce profilée déplaçable au moyen d'une basse pression (BP) et en ce qu'on l'en sépare par une surpression (SP).

26. Procédé selon une ou plusieurs des revendications 12 à 25, caractérisé en ce que le moule n'est pas entièrement fermé après l'introduction du matériau de départ dans la cavité du moule, si bien qu'une fente annulaire (16) contenant du matériau de départ non réticulé, entourant la cavité du moule, en liaison avec elle, reste ouverte.

27. Procédé selon la revendication 26, caractérisé en ce que le moule est davantage refermé au cours de la réticulation progressive du matériau après le retrait de réticulation.

28. Procédé selon la revendication 27, caractérisé en ce qu'on utilise un matériau de départ au moins fluide et visqueux avant la réticulation, et en ce que le matériau de départ peut s'écouler à travers la fente annulaire (16) dans la cavité du moule (15) pour compenser le retrait.

29. Procédé selon une ou plusieurs des revendications précédentes, caractérisé en ce que le matériau de départ est un prépolymère, pour lequel il s'agit d'un dérivé d'un alcool polyvinylique ayant un poids moléculaire d'au moins environ 2 000, qui contient environ 0,5 à environ 80 %, par rapport au nombre de groupes hydroxyle de l'alcool polyvinylique, d'unités de formule I 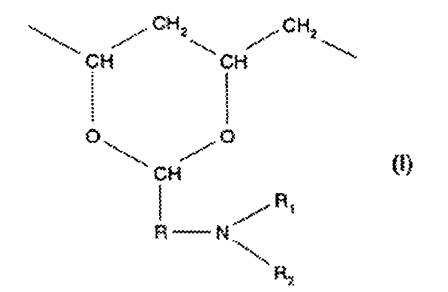 dans laquelle R représente un alkylène inférieur ayant jusqu'à 8 atomes de carbone, R¹ représente un hydrogène ou un alkyle inférieur et R² représente un reste copolymérisable attirant les électrons, oléfiniquement insaturé, avec de préférence jusqu'à 25 atomes de carbone.

30. Procédé selon la revendication 29, caractérisé en ce que le produit de départ est un prépolymère dans lequel R² est un reste alkyle oléfiniquement insaturé de formule R³-CO-, dans laquelle R³ représente un reste copolymérisable oléfiniquement insaturé ayant 2 à 24 atomes de carbone, de préférence ayant 2 à 8 atomes de carbone, de façon particulièrement préférée ayant 2 à 4 atomes de carbone.

31. Procédé selon la revendication 30, caractérisé en ce que le matériau de départ est un prépolymère dans lequel R³ représente un alcényle ayant 2 à 8 atomes de carbone.

32. Procédé selon la revendication 29, caractérisé en ce que le matériau de départ est un prépolymère dans lequel le reste R² représente un reste de formule II,
-CO-NH-(R⁴-NH-CO-O)_{q}-R⁵-O-CO-R³ (II)
dans laquelle q vaut 0 ou 1 et R⁴ et R⁵ représentent indépendamment l'un de l'autre un alkylène inférieur ayant 2 à 8 atomes de carbone, un arylène ayant 6 à 12 atomes de carbone, un groupe cycloaliphatique bivalent saturé ayant 6 à 10 atomes de carbone, un arylène alkylène ou un alkylène arylène ayant 7 à 14 atomes de carbone ou un arylène alkylène arylène ayant 13 à 16 atomes de carbone, et où R³ représente un reste copolymérisable oléfiniquement insaturé ayant 2 à 24 atomes de carbone, de préférence ayant 2 à 8 atomes de carbone, de façon particulièrement préférée ayant 2 à 4 atomes de carbone.

33. Procédé selon la revendication 29, caractérisé en ce qu'il s'agit, pour le prépolymère, d'un dérivé d'un alcool polyvinylique ayant un poids moléculaire d'au moins environ 2 000, qui contient environ 0,5 à environ 80 %, par rapport au nombre de groupes hydroxyle de l'alcool polyvinylique, d'unités de formule III, 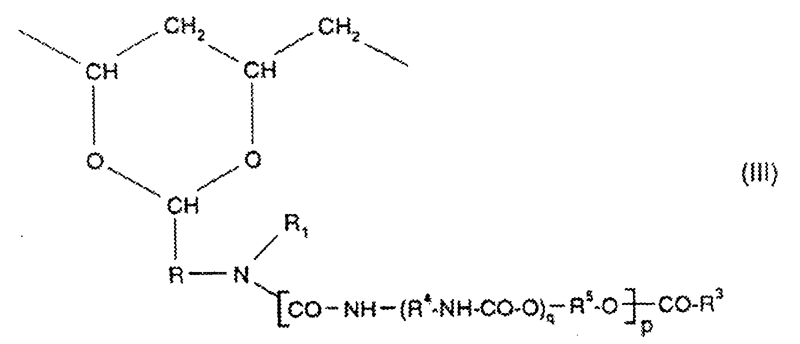 dans laquelle R représente un alkylène inférieur, R¹ représente un hydrogène ou un alkyle inférieur, p possède la valeur 0 ou 1, q possède la valeur 0 ou 1, R³ représente un reste copolymérisable oléfiniquement insaturé ayant 2 à 8 atomes de carbone et R⁴ et R⁵ représentent indépendamment l'un de l'autre un alkylène inférieur ayant 2 à 8 atomes de carbone, un arylène ayant 6 à 12 atomes de carbone, un groupe cycloaliphatique bivalent saturé ayant 6 à 10 atomes de carbone, un arylène alkylène ou un alkylène arylène ayant 7 à 14 atomes de carbone ou un arylène alkylène arylène ayant 13 à 16 atomes de carbone.

34. Procédé selon la revendication 33, caractérisé en ce que le matériau de départ est un prépolymère dans lequel R est un alkylène inférieur ayant jusqu'à 6 atomes de carbone compris, p vaut 0 et R³ représente un alcényle ayant 2 à 8 atomes de carbone.

35. Procédé selon la revendication 33, caractérisé en ce que le matériau de départ est un prépolymère dans lequel R représente un alkylène inférieur ayant jusqu'à 6 atomes de carbone compris, p vaut 1, q vaut 0, R⁵ représente un alkylène inférieur ayant 2 à 6 atomes de carbone et R³ représente un alcényle ayant 2 à 8 atomes de carbone.

36. Procédé selon la revendication 33, caractérisé en ce que le matériau de départ est un prépolymère dans lequel R représente un alkylène inférieur ayant jusqu'à 6 atomes de carbone compris, p vaut 1, q vaut 1, R⁴ représente un alkylène inférieur ayant 2 à 6 atomes de carbone, un phénylène, non substitué ou substitué par un alkyle inférieur, un cyclohexylène ou un cyclohexylène-alkylène inférieur, non substitué ou substitué par un alkyle inférieur, un phénylène-alkylène inférieur, un alkylène inférieur-phénylène ou un phénylène-alkyle inférieur-phénylène, R⁵ représente un alkylène inférieur ayant 2 à 6 atomes de carbone et R³ représente un alcényle ayant 2 à 8 atomes de carbone.

37. Procédé selon la revendication 29, caractérisé en ce que le matériau de départ est un prépolymère, pour lequel il s'agit d'un dérivé d'alcool polyvinylique ayant un poids moléculaire d'au moins environ 2 000, qui contient environ 1 à environ 15 %, par rapport au nombre de groupes hydroxyle de l'alcool polyvinylique, d'unités de formule I.

38. Procédé selon une ou plusieurs des revendications 1 à 37, caractérisé en ce qu'on utilise un demi-moule (11, 12) du moule (1) comme emballage pour la lentille de contact (LC).

39. Procédé selon la revendication 38, caractérisé en ce qu'on utilise le demi-moule femelle (12) comme emballage pour la lentille de contact.

40. Procédé selon la revendication 38 ou 39, caractérisé en ce que l'un des demi-moules (11, 12) est formé en demi-moule fait de plusieurs pièces et en ce que l'autre demi-moule (12,11) est formé en demi-moule d'une pièce, le demi-moule d'une pièce étant utilisé comme emballage pour la lentille de contact.

41. Procédé selon la revendication 40, caractérisé en ce que le demi-moule mâle (11) est formé en demi-moule de plusieurs pièces et en ce que le demi-moule femelle (12) est formé en demi-moule d'une pièce, le demi-moule femelle (12) étant utilisé comme emballage pour la lentille de contact.

42. Dispositif de fabrication de lentilles de contact, avec un moule pouvant se fermer et s'ouvrir (1), qui présente une cavité de moule (15) définissant la forme de la lentille de contact (LC) à fabriquer, ce moule étant déterminé pour l'introduction d'un matériau réticulable et formé au moins en partie de manière perméable à une énergie, introduite par l'extérieur, déclenchant la réticulation du matériau, et avec une source (2a) pour l'énergie provoquant la réticulation ainsi qu'avec des moyens (2b) pour l'alimentation du moule (1) avec l'énergie provoquant la réticulation, et avec des moyens pour limiter spécialement l'alimentation du moule (1) avec l'énergie provoquant spatialement la réticulation dans la zone de la cavité du moule (15), caractérisé en ce que les moyens prévus pour limiter spatialement l'alimentation du moule en énergie sont formés par masquage du moule (1) non ou peu perméable à l'énergie provoquant la réticulation et/ou sous forme d'éléments pour le guidage du trajet des rayons, qui est ou sont disposés de manière que l'ensemble de la cavité du moule (15) y compris le bord, soit alimentée en énergie et en ce que la forme finale de la lentille de contact (LC), y compris le bord de la lentille de contact, soit déterminée et qu'il n'y ait pas besoin de traitement ultérieur de la lentille de contact (LC) ainsi produite.

43. Dispositif selon la revendication 42, caractérisé en ce que le masquage du moule (1) conçu sous forme d'un masque (21) qui, à l'exception de la cavité du moule (15), protège tous les creux du moule (16) pouvant contenir un matériau non réticulé ou, selon les cas, les demi-moules (17, 18) pouvant entrer en contact avec le matériau, contre l'énergie provoquant la réticulation.

44. Dispositif selon la revendication 42 ou 43, caractérisé en ce que le moule (1) comprend deux demi-moules (11, 12) qui sont séparés le long d'une surface de séparation (17, 18), et en ce que le masque (21) est disposé sur l'un des deux demi-moules (11, 12) et/ou sur les deux demi-moules dans la zone de la surface de séparation (17, 18) en dehors de la cavité du moule (15).

45. Dispositif selon la revendication 44, caractérisé en ce que la source (2a) produit un rayonnement UV et en ce qu'au moins un des demi-moules (11, 12) du moule (1) se compose d'un matériau perméable aux UV, en particulier de quartz.

46. Dispositif selon la revendication 45, caractérisé en ce que le masque (21) se compose d'une couche de matériau non perméable au rayonnement UV, en particulier d'une couche de métal ou d'oxyde métallique, en particulier une couche de chrome.

47. Dispositif selon une ou plusieurs des revendications 42 à 46, caractérisé en ce que le moule (1) est muni d'entretoises (19a, 19b) qui maintiennent les deux demi-moules (11, 12), lorsque le moule est fermé, à faible distance (Λ,y) l'un par rapport à l'autre, si bien qu'il se forme au moins une fente (16) entourant de préférence la cavité du moule (15), en liaison avec elle, et en ce que le masque (21) est disposé dans la zone de cette fente.

48. Dispositif selon la revendication 47, caractérisé en ce que le moule (1) est muni de moyens élastiques ou de moyens de réglage (19b) qui permettent aux deux demi-moules (11, 12) de se rapprocher après le retrait de réticulation.

49. Dispositif selon l'une des revendications 42 à 46, caractérisé en ce que lorsqu'on remplit la cavité du moule (15), on place dans cette cavité du matériau de départ (M) se trouvant au moins en partie encore à l'état non réticulé.

50. Dispositif selon la revendication 49, caractérisé en ce qu'il comprend un réservoir (R) pour préparer le matériau de départ, qui entoure la cavité du moule (15) et qui peut être relié à la cavité du moule (15), et en ce que lorsqu'on remplit la cavité du moule, le réservoir (R) est relié à la cavité du moule (15) et l'inonde.

51. Dispositif selon l'une des revendications 49 ou 50, caractérisé en ce qu'il comprend des moyens (1a) pour fermer le moule (1) disposé dans le matériau de départ.

52. Dispositif selon l'une des revendications 49 à 51, caractérisé en ce que le moule comprend un récipient (10a, 10b) et une pièce profilée (11a, 11b) déplaçable dans ce récipient, qui peut être déplacée de manière à s'écarter et à se rapprocher de la paroi du récipient (100a, 100b) pour l'ouverture et la fermeture du moule, par rapport à la paroi du récipient qui lui fait face (100a, 100b) et en ce que dans le récipient est prévue une ouverture (101a, 101b) à travers laquelle, au cours de l'ouverture du moule, le matériau de départ pénètre entre la paroi du récipient (100a, 100b) et la pièce profilée (11a, 11b), et en ce que, dans le récipient est prévue une sortie (102a, 102b) à travers laquelle le matériau de départ s'échappe à nouveau au cours de la fermeture du moule.

53. Dispositif selon la revendication 52, caractérisé en ce que le moule présente deux demi-moules, l'un des demi-moules étant prévu sur la paroi du récipient (100a, 100b) et l'autre sur la pièce profilée déplaçable (11a, 11b).

54. Dispositif selon la revendication 53, caractérisé en ce que le moule présente un demi-moule mâle et un demi-moule femelle, et en ce que le demi-moule mâle est prévu sur la paroi du récipient (100a, 100b) et en ce que le demi-moule femelle est prévu sur la pièce profilée déplaçable (11a, 11b).

55. Dispositif selon l'une des revendications 52 à 54, caractérisé en ce que sont prévues des pompes (P1, P2), qui lors de l'ouverture du moule par l'entrée (101a, 101b) introduisent le matériau de départ entre la paroi du récipient (100a, 100b) et la pièce profilée (11a, 11b) et l'expulsent à nouveau lors de la fermeture du moule par la sortie (102a, 102b).

56. Dispositif selon l'une des revendications 52 à 55, caractérisé en ce que des moyens sont prévus pour actionner la pièce profilée déplaçable (11a, 11b).

57. Dispositif selon l'une des revendications 49 à 56, caractérisé en ce que sont prévus des moyens pour produire un flux, qui détache du moule l'article moulé lors de l'ouverture du moule et qui l'expulse hors du moule lors de la fermeture du moule.

58. Dispositif selon l'une des revendications 49 à 56, caractérisé en ce qu'il est prévu un dispositif de saisie (4) qui retire du moule l'article moulé réticulé (LC).

59. Dispositif selon l'une des revendications 52 à 56 et selon la revendication 58, caractérisé en ce que le récipient (10b) présente sur une paroi de récipient (103b) différente de la surface moulante (100b) une courbure ou une niche (104b) qui s'étend essentiellement en direction du mouvement de la pièce profilée déplaçable (11b), un dispositif de saisie (4b) étant disposé dans cette courbure ou niche (104b), et en ce que la pièce profilée déplaçable (11b) présente sur une paroi extérieure (113b) qui ne fait pas face à la paroi moulante du récipient (100b), un creux (114b) dans lequel le dispositif de saisie (4b) dépose l'article moulé retiré (LC).

60. Dispositif selon la revendication 59, caractérisé en ce que la pièce profilée déplaçable présente un canal (115b) conduisant au creux (114b), à qui peut être raccordé à une source de dépression ou de surpression (P3), ce canal (115b), lorsque le dispositif de saisie (4b) dépose l'article moulé (LC) prélevé dans le creux (114b) de la pièce profilée (11b), étant relié à la source de sous-pression puis, pour détacher la lentille, à la source de sur-pression.

61. Dispositif selon l'une des revendications 53 à 60, caractérisé en ce que le moule est muni d'entretoises (19) qui maintiennent les deux demi-moules, lorsque le moule est fermé, à faible distance l'un de l'autre, si bien que se forme une fente annulaire (16) entourant la cavité du moule (15) et qui est en liaison avec elle.

62. Dispositif selon la revendication 61, caractérisé en ce que le moule est muni de moyens élastiques ou de moyens ajustables qui permettent de rapprocher les deux demi-moules après le retrait de réticulation.
